(19) Europäisches Patentamt
European Patent Office
Office européen des brevets

(11) EP 1 743 710 A1

(12) **EUROPEAN PATENT APPLICATION**
published in accordance with Art. 158(3) EPC

(43) Date of publication:
**17.01.2007 Bulletin 2007/03**

(21) Application number: **05720374.7**

(22) Date of filing: **09.03.2005**

(51) Int Cl.:
***B05D 7/24*** *(2006.01)* ***B32B 27/30*** *(2006.01)*
***C08F 8/00*** *(2006.01)* ***C08F 14/22*** *(2006.01)*

(86) International application number:
**PCT/JP2005/004102**

(87) International publication number:
**WO 2005/089962 (29.09.2005 Gazette 2005/39)**

(84) Designated Contracting States:
**AT BE BG CH CY CZ DE DK EE ES FI FR GB GR HU IE IS IT LI LT LU MC NL PL PT RO SE SI SK TR**

(30) Priority: **22.03.2004 JP 2004083289**
**06.08.2004 JP 2004231250**

(71) Applicant: **DAIKIN INDUSTRIES, LTD.**
**Kita-ku, Osaka 530-8323 (JP)**

(72) Inventors:
- **ARAKI,T.**
**Yodogawa-seisakusho,DAIKIN INDUSTRIES, LTD**
**Osaka, 5668585 (JP)**
- **KODANI,T.**
**Yodogawa-seisakusho, DAIKINInd., Ltd.**
**Osaka 5668585 (JP)**

(74) Representative: **HOFFMANN EITLE**
**Patent- und Rechtsanwälte**
**Arabellastrasse 4**
**81925 München (DE)**

# (54) PROCESS FOR FORMING VINYLIDENE FLUORIDE HOMOPOLYMER THIN FILMS

(57) There is provided the method of forming a thin film of vinylidene fluoride homopolymer of I-form crystal structure having functional group at its end which can be applied to various substrates, by relatively easy method (applying conditions, manner, etc.). The method is a method of forming a thin film of vinylidene fluoride homopolymer by applying, on a substrate, a vinylidene fluoride homopolymer which contains, at one end or both ends thereof, a moiety represented by the formula (1):

$$-(R^1)_n-Y \qquad (1)$$

wherein $R^1$ is a divalent organic group but does not contain a structural unit of the vinylidene fluoride homopolymer; n is 0 or 1; Y is a functional group, and has from 3 to 100 repeat units of vinylidene fluoride, to form a thin film of vinylidene fluoride homopolymer comprising I-form crystal structure alone or as main component.

FIG. 1

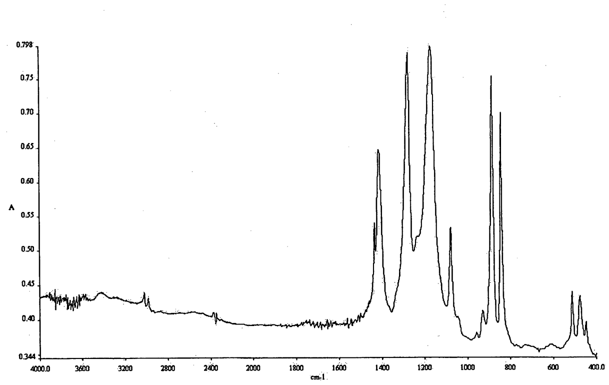

EP 1 743 710 A1

## Description

### TECHNICAL FIELD

The present invention relates to a method of forming a thin film of vinylidene fluoride homopolymer having I-form crystal structure alone or as main component. Also the present invention relates to a laminated article comprising a substrate and a thin film of vinylidene fluoride homopolymer which has I-form crystal structure alone or as main component and has functions such as adhesion to the substrate, self-organizing property and property of bonding polymers, and relates to a ferroelectric device produced using the laminated article and further to a novel vinylidene fluoride homopolymer.

### BACKGROUND ART

Polymer type ferroelectric materials have advantages such as flexibility, light weight, good processability and low price as compared with inorganic ferroelectric materials such as ceramics. There are known, as represented examples thereof, vinylidene fluoride polymers such as polyvinylidene fluoride (PVdF) and vinylidene fluoride/trifluoroethylene (VdF/TrFE) copolymer.

With respect to PVdF, there are three kinds of crystal structures such as I-form (also said to be β-form), II-form (α-form) and III-form (γ-form). Among them, it is only I-form crystal that can exhibit ferroelectricity high enough.

PVdF having a high molecular weight which is prepared by radical polymerization method forms II-form crystal structure and does not exhibit ferroelectricity as it is. In order to convert the II-form crystal structure of PVdF to I-form crystal structure, complicated post-steps such as stretching and heat-treating of a film or rapid cooling under high pressure at casting are required.

Matsushige, et al. have made a study as to formation of a thin film of vinylidene fluoride oligomer having I-form crystal structure by using vinylidene fluoride oligomer: $CF_3(CH_2CF_2)_nI$ (number average degree of polymerization n=17) having II-form crystal structure (M & BE Vol. 11, No. 2, 145 (2000)).

However it is only vinylidene fluoride oligomer having iodine atom at its end that was studied by Matsushige, et al.

Okui, et al. have made an analysis of crystal structure with respect to vinylidene fluoride oligomer: $CCl_3(CH_2CF_2)_nCl$ (number average degree of polymerization n=9) prepared by radical polymerization by using $CCl_4$ as a chain transfer agent (telogen) and dinormalperoxy dicarbonate as a catalyst, and have reported that this oligomer was a mixture of crystal structures of I-form (β-form) and III-form (γ-form) and had a crystalline melting point Tm at two points (74˚C and 110˚C) (Polymer Journal, Vol. 30, No. 8, pp. 659 to 663 (1998), and POLYMER Vol. 38, No. 7, pp. 1677 to 1683 (1997)). However it is only vinylidene fluoride oligomer having chlorine atom at its end that was studied by Okui, et al.

Also there is a method of introducing hydroxyl to an end of a polymer by polymerization using methanol as a chain transfer agent (telogen) (Macromol. Chem. Phys., 199, pp. 1271 to 1289 (1998)). However only polymerization method is studied and there are disclosed no processes for efficiently preparing, at high purity, homopolymers having I-form (β-form) crystal structure which can exhibit ferroelectric characteristics. It is a matter of course that formation of a thin film is not studied at all.

The first object of the present invention is to provide a method of forming a thin film of vinylidene fluoride homopolymer having I-form crystal structure which is applicable to various substrates and has a variety of functions.

The second object of the present invention is to provide a laminated article having, on a substrate, a self-organized film of vinylidene fluoride homopolymer having 1-form crystal structure and being capable of giving various functions or a thin film formed by bonding vinylidene fluoride homopolymers.

The third object of the present invention is to provide a novel vinylidene fluoride homopolymer.

### DISCLOSURE OF INVENTION

The present inventors have made intensive studies and as a result, directed attention to the use of vinylidene fluoride homopolymer having I-form crystal structure which has a functional group at its end and have found that adhesion to the substrate, self-organizing property and strength and heat resistance of the obtained thin film can be enhanced.

Namely, the present invention relates to a method of forming a thin film of vinylidene fluoride homopolymer comprising I-form crystal structure alone or as main component, and the method comprises applying, on a substrate, a vinylidene fluoride homopolymer which contains, at one end or both ends thereof, a moiety represented by the formula (1):

$$-(R^1)_n-Y \qquad (1)$$

wherein $R^1$ is a divalent organic group but does not contain a structural unit of vinylidene fluoride homopolymer; n is 0 or 1; Y is a functional group, and has a number average degree of polymerization of vinylidene fluoride homopolymer

unit of 3 to 100, namely a number average degree of polymerization of vinylidene fluoride unit of 3 to 100 in the structural unit of vinylidene fluoride homopolymer, to form a thin film of the vinylidene fluoride homopolymer comprising I-form crystal structure alone or as main component.

It is preferable that in the vinylidene fluoride homopolymers comprising I-form crystal structure alone or as main component, when attention is given to proportions of the respective vinylidene fluoride homopolymers having I-, II- or III-form crystal structure in the thin film of vinylidene fluoride homopolymer which are calculated by IR analysis, the proportion of vinylidene fluoride homopolymers having I-form crystal structure satisfies both of (Equation 1):

$$100 \geq \text{I-form}/(\text{I-form} + \text{II-form}) > 50\ \%\ \text{by weight} \qquad \text{(Equation 1)}$$

and (Equation 2):

$$100 \geq \text{I-form}/(\text{I-form} + \text{III-form}) > 50\ \%\ \text{by weight} \qquad \text{(Equation 2).}$$

Preferred examples of Y in the formula (1) are a functional group which can impart, to the vinylidene fluoride homopolymer, adhesion to a surface of the substrate of organic material and/or inorganic material, a functional group which can make self-organization of vinylidene fluoride homopolymer possible on a surface of the substrate of organic material and/or inorganic material, and a functional group which can bond vinylidene fluoride homopolymers each other.

For example, with respect to Y in the formula (1), there can be preferably exemplified, as the functional group being capable of carrying out self-organization, -SH and/or $-SiX_{3-n}R^6{}_n$ (n is 0 or an integer of 1 or 2; $R^6$ is $CH_3$ or $C_2H_5$; X is $-OR^7$, -COOH, $-COOR^7$, $-NH_{3-m}R^7$m, -OCN or halogen atom ($R^7$ is $CH_3$, $C_2H_5$ or $C_3H_7$, m is 0 or an integer of 1 to 3)), and there can be preferably exemplified, as the functional group being capable of bonding vinylidene fluoride homopolymers, $-CH=CH_2$, $-OCOCH=CH_2$, $-OCOCF=CH_2$, $-OCOC(CH_3)=CH_2$ and $-OCOCCl=CH_2$.

The present invention also relates to a laminated article characterized by having, on a substrate, a self-organized thin film formed by using vinylidene fluoride homopolymers comprising I-form crystal structure alone or as main component and having a number average degree of polymerization of vinylidene fluoride homopolymer unit of 3 to 100.

The present invention further relates to a laminated article characterized by having, on a substrate, a thin film formed by bonding of the vinylidene fluoride homopolymers comprising I-form crystal structure alone or as main component and having a number average degree of polymerization of vinylidene fluoride homopolymer unit of 3 to 100.

In those laminated articles, it is preferable that the vinylidene fluoride homopolymers having I-form crystal structure alone or as main component in the thin film satisfy both of the above-mentioned Equation 1 and Equation 2.

In the laminated article which has, on a substrate, a self-organized thin film formed by using vinylidene fluoride homopolymers comprising I-form crystal structure alone or as main component, it is preferable that the self-organized film is formed by using vinylidene fluoride homopolymers having a number average degree of polymerization of vinylidene fluoride homopolymer unit of 3 to 100 and containing, at one end or both ends thereof, a moiety represented by the formula (1-1):

$$-(R^1)_n-Y^1 \qquad (1\text{-}1)$$

wherein $R^1$ is a divalent organic group but does not contain a structural unit of vinylidene fluoride homopolymer; n is 0 or 1; $Y^1$ is -SH and/or $-SiX_{3-n}R^6$n (n is 0 or an integer of 1 or 2; $R^6$ is $CH_3$ or $C_2H_5$; X is $-OR^7$, -COOH, $-COOR^7$, $-NH_{3-m}R^7{}_m$, -OCN or halogen atom ($R^7$ is $CH_3$, $C_2H_5$ or $C_3H_7$, m is 0 or an integer of 1 to 3)).

Also in the laminated article which has, on a substrate, a thin film formed by bonding of vinylidene fluoride homopolymers comprising I-form crystal structure alone or as main component, it is preferable that the thin film is formed by using vinylidene fluoride homopolymers having a number average degree of polymerization of vinylidene fluoride homopolymer unit of 3 to 100 and containing, at one end or both ends thereof, a moiety represented by the formula (1-2):

$$-(R^1)_n-Y^2 \qquad (1\text{-}2)$$

wherein $R^1$ is a divalent organic group but does not contain a structural unit of vinylidene fluoride homopolymer; n is 0 or 1; $Y^2$ is $-CH=CH_2$, $-OCOCH=CH_2$, $-OCOCF=CH_2$, $-OCOC(CH_3)=CH_2$ or $-OCOCCl=CH_2$.

The present invention also relates to a ferroelectric device produced using the above-mentioned laminated articles.

Both of vinylidene fluoride homopolymers of the following formulae (IA-2) and (IB-3) are novel compounds

which are not disclosed in any of patent publications and bulletins. Formula (IA-2):

$$Z^1\text{-}(R^{10})n1\text{-}A^1\text{-}(R^{11})_{n2}\text{-}S\text{-}M^1 \qquad \text{(IA-2)}$$

wherein $A^1$ is a structural unit of vinylidene fluoride homopolymer having a number average degree of polymerization of 3 to 100; $Z^1$ is a polyfluoroalkyl group or an alkyl group; $R^{10}$ and $R^{11}$ are the same or different and each is a divalent organic group but does not contain a vinylidene fluoride homopolymer unit comprising I-form crystal structure alone or as main component; n1 and n2 are the same or different and each is 0 or 1; $M^1$ is hydrogen atom or alkali metal atom. Formula (IB-3):

$$M^2\text{-}S\text{-}(R^{12})_{n3}\text{-}A^2\text{-}R^2\text{-}A^3\text{-}(R^{13})_{n4}\text{-}S\text{-}M^3 \qquad \text{(IB-3)}$$

wherein $A^2$ and $A^3$ are the same or different and each is a structural unit of vinylidene fluoride homopolymer and a total number average degree of polymerization of $A^2$ and $A^3$ is from 3 to 100; $R^2$ is a divalent organic group but does not contain a structural unit of vinylidene fluoride homopolymer; $R^{12}$ and $R^{13}$ are the same or different and each is a divalent organic group but does not contain a structural unit of vinylidene fluoride homopolymer; n3 and n4 are the same or different and each is 0 or 1; $M^2$ and $M^3$ are the same or different and each is hydrogen atom or alkali metal atom.

Also the present invention can provide a laminated article having, on a substrate, a self-organized film of vinylidene fluoride homopolymer having I-form crystal structure and being capable of giving various functions or a thin film formed by bonding vinylidene fluoride homopolymers.

Also the present invention can provide a novel vinylidene fluoride homopolymer which is useful for the above-mentioned inventions.

BRIEF DESCRIPTION OF DRAWINGS

Fig. 1 is an IR chart of vinylidene fluoride homopolymer of all-I-form crystal structure.

Fig. 2 is an IR chart of vinylidene fluoride homopolymer of all-II-form crystal structure.

Fig. 3 is an IR chart of vinylidene fluoride homopolymer comprising a mixture of I-form and II-form crystal structures for explaining a method of reading peak heights of characteristic absorption of I-form and II-form crystal structures.

Fig. 4 is an IR chart of vinylidene fluoride homopolymer comprising a mixture of II-form and III-form crystal structures for explaining a method of reading peak heights of characteristic absorption of II-form and III-form crystal structures.

Fig. 5 is an IR chart of vinylidene fluoride homopolymer comprising a mixture of I-form, II-form and III-form crystal structures, in which a content F(I) of I-form crystal structure is known, for explaining a method of reading peak heights of characteristic absorption of I-form and III-form crystal structures.

Fig. 6 is an IR chart of vinylidene fluoride homopolymer of all-I-form crystal structure which is obtained in (1-1) of Preparation Example 1.

Fig. 7 is an IR chart of vinylidene fluoride homopolymer comprising a mixture of I-form and III-form crystal structures which is obtained in (1-8) of Preparation Example 1.

Fig. 8 is an IR chart of vinylidene fluoride homopolymer comprising a mixture of II-form and III-form crystal structures which is obtained in (2-1) of Preparation Example 2.

Fig. 9 is an IR chart of vinylidene fluoride homopolymer comprising a mixture of I-form and II-form crystal structures which is obtained in (3-1) of Preparation Example 3.

Fig. 10 is an IR chart of vinylidene fluoride homopolymer of all-I-form crystal structure having hydroxyl at its end which is obtained in Preparation Example 4.

Fig. 11 is an IR chart of vinylidene fluoride homopolymer of all-I-form crystal structure having mercapto group at its end which is obtained in Preparation Example 5.

Fig. 12 is an IR chart of vinylidene fluoride homopolymer of all-I-form crystal structure having acryloyl group ($-OCOCH=CH_2$) at its end which is obtained in Preparation Example 8.

Fig. 13 is an IR chart of the polymer obtained by addition reaction of vinylidene fluoride oligomers of all-I-form crystal structure having acryl at an end thereof which is obtained in Preparation Example 12.

BEST MODE FOR CARRYING OUT THE INVENTION

Next, the present invention is explained concretely.

Firstly, the method of forming a thin film of the present invention is, as mentioned above, the method of forming, on a substrate, a thin film of vinylidene fluoride homopolymer comprising I-form crystal structure alone or as main

component by using the vinylidene fluoride homopolymer which contains a functional group at one end or both ends thereof and has a number average degree of polymerization of vinylidene fluoride homopolymer unit of 3 to 100.

The method of the present invention is preferred since the thin film can be applied to not only specific substrates such as KBr and KCl but also various substrates and also since various functions can be imparted to the thin film by selecting the functional group at an end of the polymer. Also the method of the present invention is preferred since applying methods under usual conditions can be adopted as the applying method and conditions. This does not mean that coating under specific coating conditions, e.g. at very low temperatures is not excluded.

As a result, the thin film obtained by the method of the present invention contains the vinylidene fluoride homopolymer comprising I-form crystal structure alone or as main component, and ability of exhibiting ferroelectric property by polarization treatment can be imparted to the thin film, and adhesion to a substrate, self-organizing property, strength and heat resistance can be imparted to the thin film.

The vinylidene fluoride homopolymer which is used for forming the thin film of the present invention comprises I-form crystal structure alone or as main component or can comprise I-form crystal structure alone or as main component by post treatment. When attention is given particularly to the respective vinylidene fluoride homopolymers having I-, II- or III-form crystal structure, it is preferable that the vinylidene fluoride homopolymers having I-form crystal structure are present in a ratio higher than those of the vinylidene fluoride homopolymers having II-form crystal structure and vinylidene fluoride homopolymers having III-form crystal structure.

The I-form crystal structure of vinylidene fluoride homopolymer is characterized in that a fluorine atom bonded to one carbon atom of the trunk chain in the polymer molecule and a hydrogen atom bonded to the neighboring carbon atom take a trans form conformation (TT conformation), namely, the fluorine atom and hydrogen atom bonded to the neighboring carbon atoms are positioned oppositely at an angle of 180° when viewing from the carbon-carbon bond.

In the present invention, the vinylidene fluoride homopolymer having I-form crystal structure may take the TT conformation in the whole of one polymer molecule or in a part of the polymer molecule, and has the molecular chain of the TT conformation in at least four continuous vinylidene fluoride monomer units. In any cases, the carbon-carbon bond, in which the TT conformation constitutes the TT trunk chain, has a planar zigzag structure, and the dipole moments of $C\text{-}F_2$ and $C\text{-}H_2$ bonds have moieties in the vertical direction to the molecular chain. When the vinylidene fluoride homopolymer having I-form crystal structure is subjected to IR analysis, there are characteristic peaks (characteristic absorptions) around 1,274 $cm^{-1}$, 1,163 $cm^{-1}$ and 840 $cm^{-1}$. In powder X-ray diffraction analysis, there is a characteristic peak around $2\theta=21°$.

In the IR analysis, when characteristic absorptions of I-form crystal structure are recognized but characteristic absorptions of II-form and III-form crystal structures are not recognized substantially, the crystal structure is called "all-I-form crystal structure".

The II-form crystal structure of vinylidene fluoride homopolymer is characterized in that to a fluorine atom (or hydrogen atom) bonded to one carbon atom of trunk chain in the polymer molecule, a hydrogen atom (or fluorine atom) bonded to one neighboring carbon atom takes a trans form, and a hydrogen atom (or fluorine atom) bonded to another (opposite) neighboring carbon atom takes a gauche form (positioned at an angle of 60°), and there are two or more continuous chains of this conformation ($TGT\overline{G}$ conformation). The molecular chain is of $TGT\overline{G}$ type and the dipole moments of $C\text{-}F_2$ and $C\text{-}H_2$ bonds have respective moieties in both of the vertical and horizontal directions to the molecular chain. When the vinylidene fluoride homopolymer having II-form crystal structure is subjected to IR analysis, there are characteristic peaks (characteristic absorptions) around 1,212 $cm^{-1}$, 1,183 $cm^{-1}$ and 762 $cm^{-1}$. In powder X-ray diffraction analysis, there are characteristic peaks around $2\theta=17.7°$, 18.3° and 19.9°.

In the IR analysis, when characteristic absorptions of II-form crystal structure are recognized but characteristic absorptions of I-form and III-form crystal structures are not recognized substantially, the crystal structure is called "all-II-form crystal structure".

The III-form crystal structure of vinylidene fluoride homopolymer is characterized by having a conformation ($TGT\overline{G}$ conformation) comprising TT conformation and TG conformation alternately continuously. The molecular chain is of $T_3GT_3\overline{G}$ type and the dipole moments of $C\text{-}F_2$ and $C\text{-}H_2$ bonds have respective moieties in both of vertical and horizontal directions to the molecular chain. When the vinylidene fluoride homopolymer having III-form crystal structure is subjected to IR analysis, there are characteristic peaks (characteristic absorptions) around 1,235 $cm^{-1}$ and 811 $cm^{-1}$. In powder X-ray diffraction analysis, there is a characteristic peak around $2\theta=18°$.

Usually the presence of III-form crystal structure is recognized in the form of a mixture with the I-form crystal structure and/or the II-form crystal structure.

In the present invention, "comprising I-form crystal structure as main component" means preferably that the proportion of vinylidene fluoride homopolymers having I-form crystal structure satisfy both of the following (Equation 1) and (Equation 2).

$$100 \geq \text{I-form}/(\text{I-form} + \text{II-form}) > 50\ \%\ \text{by weight} \qquad \text{(Equation 1)}$$

$$100 \geq \text{I-form}/(\text{I-form} + \text{III-form}) > 50\ \%\ \text{by weight} \qquad \text{(Equation 2)}$$

The presence and proportions of vinylidene fluoride homopolymers having I-form, II-form or III-form crystal structure can be analyzed by various methods such as X-ray diffraction method and IR analysis method. In the present invention, the content F(I) of I-form crystal structures in the vinylidene fluoride homopolymer is calculated from a peak height (absorbance A) of characteristic absorption of each crystal structure in an IR analysis chart by the following methods.

(1) Calculation of content (% by weight, F(I) $\times$ 100) of I-form in a mixture of I-form and II-form

(1-1) Equation

$$\text{Law of Beer: } A = \varepsilon b C$$

wherein A represents an absorbance, ε represents a molar extinction coefficient, b represents an optical path length, and C represents a concentration. When an absorbance of characteristic absorption of I-form crystal structure is assumed to be $A^I$, an absorbance of characteristic absorption of II-form crystal structure is assumed to be $A^{II}$, a molar extinction coefficient of I-form crystal is assumed to be $\varepsilon^I$, a molar extinction coefficient of II-form crystal is assumed to be $\varepsilon^{II}$, a concentration of I-form crystal is assumed to be $C^I$ and a concentration of II-form crystal is assumed to be $C^{II}$, the following equation is obtained.

$$A^I/A^{II} = (\varepsilon^I/\varepsilon^{II}) \times (C^I/C^{II}) \qquad (1\text{-a})$$

When a correction factor ($\varepsilon^I/\varepsilon^{II}$) of the molar extinction coefficient is assumed to be $E^{I/II}$, the content F(I) (=$C^I/(C^I + C^{II})$) of I-form crystal structure is represented by the following equation.

$$F(I) = \frac{\dfrac{1}{E^{I/II}} \times \dfrac{A^{II}}{A^I}}{1 + \dfrac{1}{E^{I/II}} \times \dfrac{A^{II}}{A^I}}$$

$$= \frac{A^I}{E^{I/II}A^{II} + A^I} \qquad (2\text{-a})$$

Therefore when the correction factor $E^{I/II}$ is decided, the content F(I) of I-form crystal structure can be calculated from a measured absorbance $A^I$ of characteristic absorption of I-form crystal structure and a measured absorbance $A^{II}$ of characteristic absorption of II-form crystal structure.

(1-2) Method of deciding correction factor $E^{I/II}$

A sample in which the content F(I) of I-form crystal structure is known is prepared by mixing a sample of all-I-form crystal structure (Fig. 1) and a sample of all-II-form crystal structure (Fig. 2), and is subjected to IR analysis. Then absorbances (peak height) $A^I$ and $A^{II}$ of each characteristic absorption are read from the obtained chart (Fig. 3).

Then the absorbances are substituted in Equation (3-a) obtained from Equation (2-a):

$$E^{I/II} = \frac{A^{I} \times (1 - F(I))}{A^{II} \times F(I)} \qquad (3\text{-a})$$

and the correction factor $E^{I/II}$ is obtained. By changing the mixing ratio of the samples repeatedly, each correction factor $E^{I/II}$ is obtained, and an average value of 1.681 is obtained.

As a characteristic absorption of I-form crystal structure, 840 $cm^{-1}$ is used (Reference bulletin: Bachmann et al., Journal of Applied Physics, Vol. 50, No. 10 (1979)), and 763 $cm^{-1}$ referred to in the mentioned bulletin is used as a characteristic absorption of II-form crystal structure.

(2) Content F(I) of I-form in a mixture of I-form and III-form

Since a substance consisting of III-form crystal structure is difficult to obtain, a mixture of II-form and III-form is used as a standard substance.

(2-1) Firstly, in the mentioned equation (2-a), $A^I$ and $A^{II}$ are assumed to be $A^{II}$ and $A^{III}$, respectively and the correction factor $E^{II/III}$ of the mixture of II-form and III-form is assumed to be 0.81 from the bulletin (S. Osaki et al., Journal of Polymer Science: Polymer Physics Edition, Vol. 13, pp. 1071 to 1083 (1975). The content of III-form crystal structure in the standard mixture of II-form and III-form is calculated by substituting $A^{II}$ and $A^{III}$, which are read from the IR chart (Fig. 4) of the standard mixture of II-form and III-form, in the equation (F(III)=0.573). As a characteristic absorption of III-form crystal structure, 811 $cm^{-1}$ is used (Reference bulletin: Bachmann et al., Journal of Applied Physics, Vol. 50, No. 10 (1979)).

(2-2) Next, the standard mixture of II-form and III-form in which the content of III-form is known is mixed with a substance of all-I-form crystal structure in a specific ratio to prepare a mixture of I-form, II-form and III-form, in which the content of I-form is known. This mixture is subjected to IR analysis and $A^I$ and $A^{III}$ are read from the chart (Fig. 5) and the correction factor $E^{I/III}$ ($\varepsilon^{I}/\varepsilon^{III}$) is calculated from the mentioned equation (3-a) ($A^{II}$ is changed to $A^{III}$). By changing the mixing ratio of the standard mixture of II-form and III-form and the substance of I-form repeatedly, each correction factor $E^{I/III}$ is obtained, and an average value of 6.758 is obtained.

(2-3) By using this correction factor $E^{I/III}$=6.758, the content F(I) of I-form in the mixture of I-form and III-form is obtained from the mentioned equation (2-a) ($A^{II}$ is changed to $A^{III}$).

Preferred vinylidene fluoride homopolymers used in the method of forming a thin film of the present invention are those satisfying both of the following equations:

$$100 \geq \text{I-form}/(\text{I-form} + \text{II-form}) > 60\ \%\ \text{by weight}$$

and

$$100 \geq \text{I-form}/(\text{I-form} + \text{III-form}) > 60\ \%\ \text{by weight}$$

and more preferably those satisfying both of the following (Equation 3) and (Equation 4).

$$100 \geq \text{I-form}/(\text{I-form} + \text{II-form}) > 70\ \%\ \text{by weight} \qquad (\text{Equation 3})$$

$$100 \geq \text{I-form}/(\text{I-form} + \text{III-form}) > 70\ \%\ \text{by weight} \qquad \text{(Equation 4).}$$

Further preferred are those satisfying both of the following equations:

$$100 \geq \text{I-form}/(\text{I-form} + \text{II-form}) > 80\ \%\ \text{by weight}$$

and

$$100 \geq \text{I-form}/(\text{I-form} + \text{III-form}) > 80\ \%\ \text{by weight.}$$

Those homopolymers are preferred since a high ferroelectric characteristic can be exhibited by polarization treatment.

Further the proportion of I-form crystals satisfies preferably the equation:

$$100 \geq \text{I-form}/(\text{I-form} + \text{II-form} + \text{III-form}) > 50\ \%\ \text{by weight,}$$

more preferably the equation:

$$100 \geq \text{I-form}/(\text{I-form} + \text{II-form} + \text{III-form}) > 70\ \%\ \text{by weight,}$$

particularly preferably the equation:

$$100 \geq \text{I-form}/(\text{I-form} + \text{II-form} + \text{III-form}) > 80\ \%\ \text{by weight.}$$

Next, in the present invention, the moiety which is contained at one end of the vinylidene fluoride homopolymer and is represented by the formula (1):

$$-(R^1)_n-Y \qquad (1)$$

wherein $R^1$ is a divalent organic group but does not contain a unit of the vinylidene fluoride homopolymer; n is 0 or 1; Y is a functional group, is explained below.

$R^1$ is a divalent organic group (but does not contain a unit of the vinylidene fluoride homopolymer). Examples of the divalent organic group $R^1$ are alkylene groups such as ethylene group, propylene group, butylene group and pentylene group; alkyleneoxyalkylene groups such as methyleneoxyethylene group, methyleneoxypropylene group and ethyleneoxypropylene group; arylenealkylene groups such as phenylene ethylene group, phenylene propylene group and phenylene butylene group; aryleneoxyalkylene groups such as phenyleneoxyethylene group and phenyleneoxypropylene group; and the like. Preferred are ethylene group and propylene group. Also a part of hydrogen atoms of those groups may be replaced by fluorine atoms.

The functional group represented by Y is a functional group having a function of imparting interaction including chemical bonding to the vinylidene fluoride homopolymer. When this functional group is present at one end or both ends of the vinylidene fluoride homopolymer, it is possible to make the vinylidene fluoride homopolymer have interaction including chemical bonding to a substrate for forming a thin film (ability of adhering to a substrate) and have a function of self-organization (ability of self-organization) or a function of bonding vinylidene fluoride homopolymers (ability of bonding polymers).

The interaction including chemical bonding means interaction causing covalent bond, ionic bond, coordination bond or hydrogen bond. As a result of the interaction, ability of adhering to a substrate, ability of self-organization or ability of bonding polymers is exhibited. Preferred examples of such a functional group are functional groups being comprised of atomic groups containing hetero atom.

Examples of the functional group having covalent bonding property are at least one of groups such as acetylene

group, acryloyl group, aldehyde group, amino acid group, aromatic ether group, carbonate group, cyclic acid anhydride group, cyclic amine group, cyclic carbonate group, cyclic ether group, cyclic imide group, cyclic imino ether group, cyclic olefin group, cyclic sulfide group, diamine group, dicarboxylic acid group, diene group, diisocyanate group, diol group, lactam group, lactone group, N-carboxylic anhydride group, olefin group, phenol group, vinyl group, styrene group, silanol group and phosphonate group. Among them, acryloyl group is preferred, and particularly preferred is $-OCOCX^5=CH_2$, wherein $X^5$ is hydrogen atom, $CH_3$, fluorine atom or chlorine atom.

The ionic bonding functional group is a functional group forming ionic bond in the presence of a counter ion, and either of anionic and cationic groups may be used.

Examples thereof are carboxyl group, thiocarboxyl group, dithiocarboxyl group, sulfonic acid group, sulfinic acid group, sulfenic acid group, phosphoric acid group, phosphorous acid group, hypophosphorous acid group, seleninic acid group, selenonic acid group and the like. By using one or plurality of those groups and one or plurality of counter ions, a salt of organic ionic compound is formed.

Examples of the counter ions which can be used are metallic ions such as Li, Na, K, Rb, Cs, Mg, Ca, Sr, Ba, Zn, Cd, Ag and Cu.

Coordination-bonding functional group means a functional group having a lone pair and an ability of coordination bond. Examples thereof are mercapto group, amine group, phosphine group, chalcogen having oxygen atom, sulfur, selenium or tellurium and the like. Coordination bond is formed with one or plurality of those groups.

The hydrogen-bonding functional group means a functional group being capable of forming hydrogen bond. Examples thereof are carboxyl group, amino group, substituted amino group, amide group, substituted amide group, ether group, sulfonic acid group, sulfonyl group and groups in which with one or plurality of nitrogen atoms constituting a ring such as a pyridine ring and bipyridine ring form hydrogen bond.

Examples of the functional group having ability of adhering to a substrate are the above-mentioned covalent-bonding functional groups, ionic bonding functional groups, coordination-bonding functional groups and hydrogen-bonding functional groups. The functional group is selected depending on kind of a substrate so that any of those interactions can be exhibited.

For example, when metal is used as a substrate, ionic bonding functional groups and coordination-bonding functional groups are preferred, and when an organic material is used as a substrate, covalent-bonding functional groups and hydrogen-bonding functional groups are preferred.

The self-organizing functional group is a functional group which can form a self-organized film by interaction between the molecule having the functional group and the specific substrate surface to form a thin film of vinylidene fluoride homopolymer comprising a monomolecular film. The thin film obtained by self-organization is different from a mere surface decoration (such as coating film) and is characterized by having a high density and a highly ordered structure. Therefore this thin film is useful particularly for imparting, to a substrate surface, functions such as catalytic action and biodynamic function and is suitable for applications such as sensors and electronic devices. Also since the thin film formed on the substrate is a monomolecular film bonded to the substrate, when it is used for a ferroelectric device in the present invention, effects of not only enhancing adhesion to the substrate but also reducing an applying voltage are exhibited. Further positioning of individual atoms can be controlled at molecular level, and a precise structure can be easily obtained in a dimensional region (of 1 nm to 1,000 $\mu$m) where such controlling is difficult in other methods such as lithography method. Therefore it is possible to produce a minute ferroelectric device in such a dimensional region.

Examples of the self-organizing functional group are $-CH=CH_2$, mercapto group (-SH), disulfide group, sulfide group, organic silane compound, vinyl group, carboxyl group, hydroxamic acid (R-CO-NH-OH), cyanides (-CN) and the like. Since the above-mentioned effects can be given more, $-CH=CH_2$, mercapto group, disulfide group and organic silane compound are more preferred, and $-CH=CH_2$, mercapto group and organic silane compound are especially preferred.

Examples of the organic silane compounds are $-SiX_{3-n}R^6n$, wherein n is 0 or an integer of 1 or 2; $R^6$ is $CH_3$ or $C_2H_5$; X is $-OR^7$, -COOH, $-COOR^7$, $-NH_{3-m}R^7{}_m$, -OCN or halogen atom ($R^7$ is $CH_3$, $C_2H_5$ or $C_3H_7$; m is 0 or an integer of 1 to 3), and $-SiCl_3$, $SiOR^7{}_3$ and the like are especially preferred.

Preferred examples of a suitable substrate which is used when forming a thin film having a self-organization function are metallic substrates such as gold, platinum, silver, copper and silicon; transparent oxide substrates such as tin oxide, indium tin oxide, zinc oxide and glass; metal oxide substrates having a natural oxidation film such as tin, indium, aluminum, copper, chromium, titanium, iron and nickel. The substrate may be optionally selected depending on kind of a functional group having a self-organization function.

For example, when the functional group is mercapto, disulfide or sulfide, a gold, platinum, silver or copper substrate is preferably selected. When the functional group is organic silane compound residue, acid anhydride residue or vinyl, a silicon substrate is preferably selected. When the functional group is carboxyl, a metal oxide substrate is preferably selected, and when the functional group is -NC, a platinum substrate is preferably selected.

For confirming the formation of self-organized film, there can be used, for example, measurement of wetting degree, ellipsometry, low-energy helium diffraction, surface Raman scattering, infrared spectroscopy, X-ray photoelectron spectroscopy, scanning tunnel microscope, electron beam diffraction method or quartz crystal microbalance method. Or other known means may be used.

The functional groups which are capable of bonding vinylidene fluoride homopolymers form a covalent bond, ionic bond, coordination bond or hydrogen bond by means of the functional groups contained in the vinylidene fluoride homopolymers. Preferred are functional groups forming a covalent bond or ionic bond, and particularly preferred are functional groups forming a covalent bond. Examples of such functional groups forming a covalent bond are those forming a covalent bond by addition reaction, condensation reaction, polyaddition reaction or ring-opening reaction. Among them, preferred are functional groups forming a covalent bond by addition reaction, condensation reaction or ring-opening reaction. The functional group may be optionally selected from those explained and exemplified in the above-mentioned functional groups having a function of adhering to a substrate. Particularly preferred are $-CH=CH_2$, $-OCOCH=CH_2$, $-OCOCF=CH_2$, $-OCOC(CH_3)=CH_2$ and $-OCOCCl=CH_2$.

The vinylidene fluoride homopolymer having the mentioned functional group may have one or plurality kinds of functional groups, and further the thin film may be formed by using at least one of vinylidene fluoride homopolymers having the mentioned functional group.

The vinylidene fluoride homopolymer having the mentioned functional group may be subjected to chemical reaction in order to exhibit an interaction including chemical bonding after application to a substrate. For the chemical reaction, any of known photoreaction and thermal reaction may be used, and an additive such as a reaction initiator may be used.

By forming, on a substrate, a thin film of vinylidene fluoride homopolymer having the mentioned functional group at its end, it is possible to enhance characteristics of the thin film of the vinylidene fluoride homopolymer having I-form crystal structure alone or as main component, such as adhesion to the substrate, denseness, strength and heat resistance.

When attention is directed to repeat units of only vinylidene fluoride of the vinylidene fluoride homopolymer in the thin film, a lower limit of number average degree of polymerization thereof is preferably 3, more preferably 4, particularly preferably 5. An upper limit thereof is 100, further 30, especially 15. In the case of application to ferroelectric materials, a lower limit of number average degree of polymerization is 4, particularly 5, and an upper limit is preferably 20, more preferably 15, further preferably 12, particularly preferably 10. If the number average degree of polymerization is too high, there is a case where a proportion of I-form crystal structures in the thin film is decreased.

As long as the vinylidene fluoride homopolymer of the present invention to be used as a starting material for forming a thin film has functional portion of the formula (1) at one end or both ends thereof, the crystal structure may be I-form alone, II-form alone, a mixture thereof or a structure containing III-form.

The vinylidene fluoride homopolymer as a starting material having functional group at its end can be prepared, for example, by preparing a vinylidene fluoride homopolymer having iodine atom or bromine atom at its end and then modifying the end thereof to the portion represented by the above-mentioned formula (1).

At this time, the modification of the end may be carried out by a single stage reaction or may be carried out by modifying the end to other end group and then to the intended functional end group. The method of modification is explained infra in detail.

As mentioned above, it is not always necessary that the vinylidene fluoride homopolymer as a starting material having the end functional group contains I-form crystal structure alone or as main component. The vinylidene fluoride homopolymer may be treated at a step for applying to a substrate or after applying to the substrate so as to contain I-form crystal structure alone or as main component.

However from the viewpoint of easy application (formation) method and wide range of application conditions, it is preferable to use, as a starting material (green powder product), the vinylidene fluoride homopolymer having the end functional group which contains I-form crystal structure alone or as main component.

Such a vinylidene fluoride homopolymer having the end functional group which contains I-form crystal structure alone or as main component can be prepared by modifying iodine atom or bromine atom of a vinylidene fluoride homopolymer which has iodine atom or bromine atom at its end and contains I-form crystal structure alone or as main component to the end functional group.

The process for preparing the vinylidene fluoride homopolymer which has iodine atom or bromine atom at its end and contains I-form crystal structure alone or as main component was developed by the present inventors.

Namely, the vinylidene fluoride homopolymer which has iodine atom or bromine atom at its end and contains I-form crystal structure alone or as main component can be prepared by subjecting vinylidene fluoride to radical polymerization in the presence of, as a chain transfer agent (telogen), an iodine compound or bromine compound represented by the formula (1A):

$$R^9\text{-}X^{10} \qquad (1A)$$

wherein $R^9$ is a monovalent organic group but does not contain a vinylidene fluoride homopolymer unit having I-form

crystal structure alone or as main component; $X^{10}$ is iodine atom or bromine atom, or an iodine compound or bromine compound represented by the formula (1B):

$$X^{10}\text{-}R^2\text{-}X^{10} \qquad (1B)$$

wherein $R^2$ is a divalent organic group but does not contain a vinylidene fluoride homopolymer unit having I-form crystal structure alone or as main component; $X^{10}$ is iodine atom or bromine atom.

In the formula (1A), $R^9$ is a monovalent organic group (but does not contain a vinylidene fluoride homopolymer unit having I-form crystal structure alone or as main component). There are alkyl groups and fluoroalkyl groups having preferably 1 to 50 carbon atoms, further preferably 1 to 20 carbon atoms. Among them, from the viewpoint of excellent productivity, polyfluoroalkyl groups are preferred, and further perfluoroalkyl groups are preferred. Particularly preferred are $CF_3$, $C_2F_5$ and $CF(CF_3)_2$.

In the formula (1B), $R^2$ is a divalent organic group (but does not contain a vinylidene fluoride homopolymer unit having I-form crystal structure alone or as main component). There are fluoroalkylene groups, particularly polyfluoroalkylene groups having preferably 1 to 50 carbon atoms, further preferably 2 to 20 carbon atoms. Among them, from the viewpoint of enhancement of ferroelectric characteristics, perfluoroalkylene groups such as $CF_2$, $C_2F_4$, $C_3F_6$, $C_4F_8$, CsFio and $C_6F_{12}$, and particularly preferred are $CF_2$, $C_2F_4$, $C_3F_6$ and $C_4F_8$.

In another aspect, it is preferable that the chain transfer agent (1A) or (1B) is an iodine compound or bromine compound having 1 to 20 carbon atoms which contains at least one moiety represented by the formula (1a):

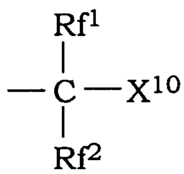

(1a)

wherein $X^{10}$ is iodine atom or bromine atom; $Rf^1$ and $Rf^2$ are the same or different and each is selected from fluorine atom or perfluoroalkyl groups having 1 to 5 carbon atoms because a polymer having a narrow molecular weight distribution and a polymer chain having a low ratio of branches can be synthesized and a vinylidene fluoride homopolymer having a large content of I-form crystal structure can be obtained.

Examples of $Rf^1$ and $Rf^2$ are, for instance, fluorine atom, $CF_3$, $C_2F_5$, $C_3F_7$ and the like. Among them, in the moiety of the formula (1a), preferred is fluorine atom because a vinylidene fluoride homopolymer having a large content of I-form crystal structure can be obtained.

Examples of the moiety represented by the formula (1a) are:

$-CF_2Br$, $-CF_2I$,

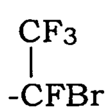 , 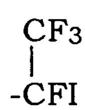 , 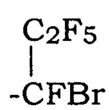 , 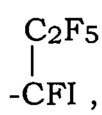 ,

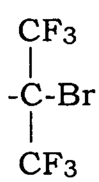 , 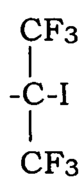

and the like. Particularly preferred are iodine compounds since a molecular weight distribution can be made narrower, and as a result, a vinylidene fluoride homopolymer having a large content of 1-form crystal structure can be obtained.

Among the bromine compounds or iodine compounds having the moiety represented by the formula (1a), preferred are polyfluoro compounds having the moiety of the formula (1a), more preferably perfluoro compounds having

the moiety of the formula (1a) since polymerization reaction advances at higher yield and a polymer having a narrow molecular weight distribution and fewer branched chains can be obtained.

Particularly preferred is at least one of perfluoro iodides or perfluoro bromides represented by the formula (2A):

$$F\text{-}(CF_2)_n\text{-}X^{10} \qquad (2A)$$

wherein $X^{10}$ is a fluorine atom or an iodine atom; n is an integer of 1 to 20, or at least one of perfluoro diiodides or perfluoro dibromides represented by the formula (2B):

$$X^{10}\text{-}(CF_2)_n\text{-}X^{10} \qquad (2B)$$

wherein $X^{10}$ is a fluorine atom or an iodine atom; n is an integer of 1 to 20.

Examples of the perfluoro compounds are, for instance, perfluoro monoiodide compounds such as monoiodide perfluoromethane, monoiodide perfluoroethane, monoiodide perfluoropropane, monoiodide perfluorobutane (for example, 2-iodide perfluorobutane, 1-iodide perfluoro(1,1-dimethylethane)), monoiodide perfluoropentane (for example, 1-iodide perfluoro(4-methylbutane)), 1-iodide perfluoro-n-nonane, monoiodide perfluorocyclobutane, 2-iodide perfluoro(1-cyclobutyl) ethane and monoiodide perfluorocyclohexane, and bromine compounds obtained by replacing the iodine atoms of those iodine compounds by bromine atoms; iodine compounds such as perfluoro diiodide compounds, e.g. diiodide perfluoromethane, 1,2-diiodide perfluoroethane, 1,3-diiodide perfluoro-n-propane, 1,4-diiodide perfluoro-n-butane, 1,7-diiodide perfluoro-n-octane, 1,2-di(iodidedifluoromethyl) perfluorocyclobutane and 2-iodide1,1,1-trifluoroethane, and bromine compounds obtained by replacing the iodine atoms of those iodine compounds by bromine atoms.

The vinylidene fluoride homopolymer containing I-form crystal structure at higher purity can be obtained under relatively easy conditions when the perfluoro compound represented by the formula (2A) or (2B) is selected as a chain transfer agent (telogen) and is present at polymerization and further when adjusting to a specific number average degree of polymerization. When the number average degree of polymerization of the vinylidene fluoride units in the polymer is adjusted to from 4 to 20, preferably from 4 to 15, the polymer containing I-form crystal structure at high purity can be surely obtained highly efficiently.

Among the perfluoro compounds of the formula (2A) and (2B), preferred are iodine compounds, and it is more preferable that n is 1 or 4m (m is from 1 to 5).

Examples of the iodine compounds of the formula (2A) are $CF_3I$, $F(CF_2)_4I$, $F(CF_2)_8I$ and the like, and especially preferred is $CF_3I$.

Examples of the iodine compounds of the formula (2B) are perfluoro diiodides represented by the formula: $I(CF_2CF_2)_{n1}I$ (n1 is an integer of from 1 to 5), for instance, $I(CF_2CF_2)I$, $I(CF_2CF_2)_2I$, $I(CF_2CF_2)_3I$, $I(CF_2CF_2)_4I$ and the like. Especially preferred is $I(CF_2CF_2)_2I$.

When attention is directed to repeat units of only vinylidene fluoride in the vinylidene fluoride homopolymer, a lower limit of the number average degree of polymerization thereof is preferably 3, further preferably 4, particularly preferably 5. An upper limit thereof is 100, further 30, especially 15. With respect to the number average degree of polymerization in the case of application to ferroelectric materials, a lower limit thereof is 4, especially 5, and an upper limit thereof is preferably 20, more preferably 15, further preferably 12, especially preferably 10. If the number average degree of polymerization is too large, there is a case where the ratio of I-form crystal structures is reduced.

Homopolymerization of vinylidene fluoride is carried out by subjecting vinylidene fluoride to radical reaction in the presence of the above-mentioned chain transfer agent, and is initiated usually by bringing the vinylidene fluoride into contact with a radical generating source.

Examples of usable radical generating source are radical polymerization initiator, light, heat and the like. It is preferable that the preparation is carried out in the presence of a radical polymerization initiator because the degree of polymerization can be regulated, the reaction can be advanced smoothly and the polymer can be obtained at high yield.

There can be used peroxides, azo initiators and the like as the radical polymerization initiator.

Examples of peroxides are, for instance, peroxydicarbonates such as n-propylperoxy dicarbonate, i-propylperoxy dicarbonate, n-butylperoxy dicarbonate, t-butylperoxy dicarbonate and bis(4-t-butylcyclohexyl)peroxy dicarbonate; oxyperesters such as $\alpha,\alpha'$-bis(neodecanoylperoxy)diisopropylbenzene, cumylperoxyneodecanoate, 1,1,3,3-tetramethylbutyl peroxyneodecanoate, 1-cyclohexyl-1-methylethyl peroxyneodecanoate, t-hexyl peroxyneodecanoate, t-butyl peroxyneodecanoate, t-hexyl peroxypivalate, t-butyl peroxypivalate, 1,1,3,3-tetramethylbutylperoxy-2-ethylhexanoate, 2,5-dimethyl-2,5-bis(2-ethylhexanoylperoxy)hexane, t-hexylperoxy-2-ethylhexanoate, t-butylperoxy-2-ethylhexanoate, t-butylperoxy isobutyrate, t-hexylperoxy isopropyl monocarbonate, t-butylperoxy maleic acid, t-butylperoxy-3,5,5-trimethylhexanoate, t-butylperoxy laurate, 2,5-dimethyl-2,5-bis(m-toluoylperoxy)hexane, t-butylperoxy isopropyl monocarbonate, t-butylperoxy-2-ethylhexyl monocarbonate, t-hexylperoxy benzoate, 2,5-dimethyl-2,5-bis(benzoyl)hexane, t-butyl peroxyacetate, a mixture of t-butylperoxy-m-tolurate and peroxy benzoate, t-butylperoxy benzoate and di-t-butylperoxy isophthalate; diacyl peroxides such as isobutyl peroxide, 3,5,5-trimethylhexanoyl peroxide, octanoyl peroxide,

lauroyl peroxide, stearoyl peroxide, succinic acid peroxide, m-toluoyl peroxide and benzoyl peroxide; peroxy ketals such as 1,1-bis(t-hexylperoxy)-3,3,5-trimethylcyclohexane, 1,1-bis(t-hexylperoxy)cyclohexane, 1,1-bis(t-butylperoxy)-3,3,5-trimethylcyclohexane, 1,1-bis(t-butylperoxy)-2-methylcyclohexane, 1,1- bis(t-butylperoxy)cyclohexane, 2,2-bis(t-butylperoxy)butane, n-butyl-4,4-bis(t-butylperoxy)valerate and 2,2-bis(4,4-di-t-butylperoxycyclohexyl)propane; dialkyl peroxides such as $\alpha,\alpha'$-bis(t-butylperoxy)diisopropylbenzene, dicumyl peroxide, 2,5-dimethyl-2,5bis(t-butylperoxy)hexane, t-butylcumyl peroxide, di-t-butyl peroxide and 2,5-dimethyl-2,5bis(t-butylperoxy)hexyne-3; hydroperoxides such as p-menthane hydroperoxide, diisopropylbenzene hydroperoxide, 1,1,3,3-tetramethylbutyl hydroperoxide, cumene hydroperoxide and t-butyl hydroperoxide; persulfates such as ammonium persulfate, potassium persulfate and sodium persulfate; perchloric acids, hydrogen peroxides and the like.

Also there can be used peroxides having fluorine atom. Preferred examples thereof are one or two or more of fluorine-containing diacyl peroxides, fluorine-containing peroxy dicarbonates, fluorine-containing peroxy diesters and fluorine-containing dialkyl peroxides. Among them, preferred are difluoroacyl peroxides such as pentafluoropropionoyl peroxide $(CF_3CF_2COO)_2$, heptafluorobutyryl peroxide $(CF_3CF_2CF_2COO)_2$, 7H-dodecafluoroheptanoyl peroxide $(CHF_2CF_2CF_2CF_2CF_2CF_2COO)_2$ and the like.

Examples of azo type radical polymerization initiator are, for instance, 2,2'-azobisisobutyronitrile, 2,2'-azobis (2,4-dimethylvaleronitrile), 2,2'-azobis(2-methylvaleronitrile), 2,2'-azobis(2-cyclopropylpropionitrile), dimethyl 2,2'-azobis(isobutyrate), 2,2'-azobis[2-(hydroxymethyl)propionitrile] and 4,4'-azobis(4-cyanopentenic acid).

Among the radical polymerization initiators, particularly preferred are peroxy dicarbonates, difluoroacyl peroxides, oxyperesters, persulfates and the like.

In the polymerization method, a lower limit of the amount of iodine compound to 1 mole of the vinylidene fluoride monomer to be used is 0.01 mole, preferably 0.02 mole, more preferably 0.03 mole, particularly preferably 0.08 mole, and an upper limit thereof to 1 mole of the vinylidene fluoride monomer is 10 mole, preferably 6 mole, more preferably 2 mole, particularly preferably 1 mole.

A too small amount of chain transfer agent is not preferred because the degree of polymerization is increased excessively, thereby decreasing the content of I-form crystal structures. A too large amount of chain transfer agent is not preferred because polymerization reaction is difficult to be advanced, thereby decreasing yield and reducing the degree of polymerization.

Also a lower limit of the amount of radical polymerization initiator to 1 mole of the chain transfer agent to be used is 0.0001 mole, preferably 0.01 mole, more preferably 0.03 mole, particularly preferably 0.04 mole, and an upper limit thereof to 1 mole of the chain transfer agent is 0.9 mole, preferably 0.5 mole, more preferably 0.1 mole, particularly preferably 0.08 mole.

A too small amount of radical polymerization initiator is not preferred because polymerization reaction is difficult to be advanced, and a too large amount thereof is not preferred because the content of I-form crystal structures is decreased.

In the process for preparing a vinylidene fluoride homopolymer, there can be used a method of bulk polymerization without using a polymerization solvent, a method of solution polymerization using a solvent for dissolving monomers in a polymerization system, a method of suspension polymerization using a solvent for dissolving and dispersing monomers in a polymerization system and as case demands, a dispersion medium such as water, a method of emulsion polymerization in an aqueous solvent containing an emulsifying agent and the like.

Among them, solution polymerization and suspension polymerization are preferred since the degree of polymerization is easily controlled.

Examples of the polymerization solvents which can be used for preparation by solution polymerization and suspension polymerization are ketone solvents such as acetone, methyl ethyl ketone and methyl isobutyl ketone; ester solvents such as ethyl acetate, cellosolve acetate, n-butyl acetate, isobutyl acetate, methyl cellosolve acetate and carbitol acetate; alcohol solvents such as methyl alcohol, ethyl alcohol, isopropyl alcohol, n-butyl alcohol, isobutyl alcohol, tert-butyl alcohol, sec-butyl alcohol, tert-amyl alcohol, 3-pentanol, octyl alcohol and 3-methyl-3-methoxybutanol; aromatic solvents such as benzene, toluene and xylene; and the like. Also there can be used fluorine-containing solvents such as $CHF_2CF_2OCHF_2$, $(CF_3)_2CFOCH_3$, $CF_3CF_2CF_2OCH_3$, $CHF_2CF_2OCH_3$, $CF_3CF_2CH_2OCHF_2$, $CF_3CFHCF_2OCH_3$, $CHF_2CF_2OCH_2CF_3$, $CF_3CF_2CF_2CF_2OCH_3$, $CF_3CF_2CH_2OCF_2CHF_2$, $(CF_3)_2CHCF_2OCH_3$, $CF_3CFHCF_2OCH_2CF_3$, $CF_3CF_2CF_2CF_2OCH_2CH_3$, $CF_3CHFCF_2OCH_2CF_2CF_3$, $CF_3CHFCF_2CH_2OCHF_2$, $CHF_2CF_2CH_2OCF_2CHF_2$, $CF_3CFHCF_2OCH_2CF_2CF_2H$, $CHF_2CF_2CF_2CF_2CH_2OCH_3$, $C_6F_{12}$, $C_9F_{18}$, $C_6F_{14}$, $CF_3CH_2CF_2CH_3$, $CHF_2CF_2CF_2CHF_2$, $(CF_3)_2CFCHFCHFCF_3$, $CF_3CHFCHFCF_2CF_3$, $(CF_3)_2CHCF_2CF_2CF_3$, $C_4H_2F_6$, $CF_3CF_2CHF_2$, $CF_2ClCF_2CF_2CHF_2$, $CF_3CFClCFClCF_3$, $CF_2ClCF_2CF_2CF_2Cl$, $CF_2ClCF_2CF_2CF_2CF_2CF_2CHF_2$, $CF_2ClCFClCFClCF_2Cl$, HCFC-225, HCFC-141b, $CF_2ClCFClCFClCF_2Cl$, $CF_2ClCF_2Cl$, $CF_2ClCFCl_2$, $H(CF_2)_nH$ (n is an integer of 1 to 20), $CF_3O(C_2F_4O)_nCF_2CF_3$ (n is 0 or an integer of 1 to 10) and $N(C_4F_9)_3$.

Particularly preferred are fluorine-containing solvents because a degree of polymerization is easily controlled. Among them, particularly preferred are fluorine-containing solvents such as HCFC-225, HCFC-141b, $CF_2ClCFClCFClCF_2Cl$, $CF_2ClCF_2Cl$, $CF_2ClCFCl_2$, $H(CF_2)_nH$ (n is an integer of 1 to 20) and $CF_3O(C_2F_4O)_nCF_2CF_3$ (n

is 0 or an integer of 1 to 10) and $N(C_4F_9)_3$.

A polymerization temperature can be optionally selected depending on kind of a radical polymerization initiator to be used, and is usually from -10˚C to 200˚C. A lower limit thereof is preferably 5˚C, more preferably 10˚C and an upper limit thereof is preferably 150˚C, more preferably 100˚C.

The so-obtained polymer is a vinylidene fluoride homopolymer which has iodine atom or bromine atom in at least one end thereof and contains I-form crystal structure alone or as main component. For example, when the compound (1A) is used as a chain transfer agent, the vinylidene fluoride homopolymer represented by the formula (IA-1) :

$$R^9 - A^1 - X^{10} \qquad (IA-1)$$

wherein $A^1$ is a structural unit of vinylidene fluoride homopolymer having a number average degree of polymerization of from 5 to 12; $R^9$ is a monovalent organic group but does not contain a structural unit of vinylidene fluoride homopolymer; $X^{10}$ is iodine atom or bromine atom, can be obtained, and

when the compound (1B) is used as a chain transfer agent, the vinylidene fluoride homopolymer represented by the formula (IB-1):

$$X^{11} - A^2 - R^2 - A^3 - X^{12} \qquad (IB-1)$$

wherein $A^2$ and $A^3$ are the same or different and each is a structural unit of vinylidene fluoride homopolymer, and the total number average degree of polymerization of the structural units $A^2$ and $A^3$ is from 2 to 20; $X^{11}$ and $X^{12}$ are iodine atom or bromine atom; $R^2$ is a divalent organic group but does not contain a structural unit of vinylidene fluoride homopolymer, can be obtained.

In the vinylidene fluoride homopolymer of the formula (IA-1), iodine atom or bromine atom is contained in one end of one polymer molecule.

When the compound of the formula (2A) in which n is 1 is used as a chain transfer agent (telogen), $CF_3$ is introduced to another end as shown in the following formula (IA-3):

$$CF_3 - A^1 - X^{10} \qquad (IA-3)$$

wherein $A^1$ and $X^{10}$ are as defined above.

It is preferable that the structure of one end is $CF_3$ because a purity of I-form crystal structures is increased (for example, a ratio of II-form crystal structure is decreased) as compared with the case of, for example, an end being a long chain perfluoroalkyl group or a branched perfluoroalkyl group.

The polymer of the formula (IA-1) can be synthesized by various methods, but it is particularly preferable to utilize the above-mentioned preparation process using $CF_3I$ as a chain transfer agent because a polymer having a narrow molecular weight distribution can be synthesized, thereby being capable of increasing a purity of I-form crystal structures.

The molecular weight distribution of the polymer of the formula (IA-1) varies depending on the number average degree of polymerization thereof. For example, Mw/Mn obtained by GPC analysis is not less than 1 and not more than 3, preferably not more than 2, more preferably not more than 1.5. When the molecular weight distribution is wide, a purity of I-form crystal structures tends to be decreased.

Next, in the vinylidene fluoride homopolymer (IB-1), iodine atoms or bromine atoms are contained in both ends of one polymer molecule, and the polymer can be prepared by using the chain transfer agent of the formula (1B).

Also when out of the compounds of the formula (2B), the compound of the formula (2B-1):

$$X^{10} - (CF_2CF_2)_m - X^{10} \qquad (2B-1)$$

wherein m is an integer of from 1 to 5, is used as a chain transfer agent (telogen), a vinylidene fluoride homopolymer represented by the formula (IB-2):

$$X^{10} - A^2 - (CF_2CF_2)_m - A^3 - X^{10} \qquad (IB-2)$$

wherein m is an integer of from 1 to 5; $X^{10}$, $A^2$ and $A^3$ are as defined above, can be obtained. This polymer is high in purity of I-form crystal structures.

The total number average degree of polymerization of the structural units $A^2$ and $A^3$ is selected within a range of from 5 to 20. An upper limit of the number average degree of polymerization is preferably 15, especially preferably 12.

If the number average degree of polymerization is too low, it becomes difficult to form crystals at room temperature, and also if the number average degree of polymerization is too high, a purity of I-form crystal structures is

decreased (for example, a ratio of II-form crystal structure is increased).

In the polymer of the formula (IB-2), it is preferable that $X^{10}$ is iodine atom because a polymer having a narrow molecular weight distribution can be obtained, thereby being capable of increasing a purity of I-form crystal structures.

Also m can be selected from an integer of 1 to 5, and is preferably 2. When m is 2, a purity of I-form crystal structures is especially high.

In the polymer of the formula (IB-1), the molecular weight distribution of the structural units $A^2$ and $A^3$ varies depending on the total number average degree of polymerization of the structural units $A^2$ and $A^3$. For example, Mw/Mn obtained by GPC analysis is not less than 1 and not more than 3, preferably not more than 2, more preferably not more than 1.5. When the molecular weight distribution is wide, a purity of I-form crystal structures tends to be decreased.

The polymers of the formula (IA-1) and (IB-1) may consist vinylidene fluoride units of the formula (Ia):

$$-(CH_2CF_2)_n- \qquad \text{(Ia)}$$

in which the vinylidene fluoride units in the vinylidene fluoride chains $A^1$, $A^2$ and $A^3$ face toward the same direction in one polymer molecule, or may contain polymer molecules having the structure of the formula (Ib):

$$-(CH_2CF_2)_{n1}(CF_2CH_2)_{n2}- \qquad \text{(Ib)}$$

in which a part of the vinylidene fluoride units are bonded toward the opposite directions in one polymer molecule, wherein n1 + n2 = n = 1 to 20.

Particularly preferred is the polymer consisting of polymer molecules of the formula (Ia), in which the vinylidene fluoride units face toward the same direction.

Even in the case of a mixture of polymer molecules of the formulae (Ia) and (Ib), the lower the n2 ratio (called abnormal bonding ratio), the more preferable. For example, preferred is a mixture having an abnormal bonding ratio: $(n2/(n + n\,1 + n2)) \times 100$ of not more than 20 %, further not more than 10 %, particularly not more than 5 %, which can be calculated from the data of NMR analysis or the like.

Preferred as the vinylidene fluoride homopolymers of the formulae (IA-1) and (IB-1) are those containing I-form crystal structures satisfying the (Equation 1) and (Equation 2) explained supra (those containing I-form crystal structures alone or as main component). Further preferred are those satisfying the (Equation 3) and (Equation 4) because the homopolymers containing, at high purity, I-form crystal structures can effectively impart ferroelectric characteristics to the thin film.

The vinylidene fluoride homopolymer as a starting material which has iodine atom or bromine atom at its end and contains I-form crystal structure alone or as main component is explained supra in detail. As explained supra and infra, when the specific method of forming a thin film is utilized, as long as the vinylidene fluoride homopolymer contains the functional moiety of the formula (1) at one end or both ends thereof, the homopolymer may be one containing II-form crystal structure alone, one containing a mixture of I-form and II-form crystal structures containing II-form crystal structure as main component or one containing III-form crystal structure.

Those vinylidene fluoride homopolymers containing II-form crystal structure alone or as main component can be prepared by modifying the iodine atom or bromine atom at an end of a known vinylidene fluoride homopolymer containing II-form crystal structure alone or as main component (for example, Matsushige et al., Jpn. J. Appl. Phys., 39, 6358 (2000)) to a functional end group.

The vinylidene fluoride homopolymer which has the functional end group and contains I-form crystal structure can be prepared by modifying the iodine atom or bromine atom at an end of the mentioned vinylidene fluoride homopolymer containing I-form crystal structure alone or as main component to the functional moiety of the formula (1).

In this case, it is not necessary to progress the modification of the end by a single stage reaction. The reaction may be carried out by once modifying to other end group and then to the intended functional end.

The modification ratio of the end of vinylidene fluoride homopolymer to be applied to a substrate is preferably not less than 60 %, more preferably not less than 70 %, further preferably not less than 80 %, particularly preferably not less than 85 %. The modification ratio of the end may be analyzed, for example, by $^1$H-NMR. In order to obtain a high modification ratio, it is a matter of course that the reaction for modification of end may be carried out at high yield, and separation treatment may be carried out by separation of end-modified polymer by a re-precipitation method, distillation method, chromatography method, vapor deposition method or the like method explained infra.

For example, the vinylidene fluoride homopolymers (IA) and (IB) which contains the functional moiety of the formula (1) at an end thereof and are used in the present invention can be prepared by modifying the polymers (IA-1) and (IB-1).

For modifying the end portion of the vinylidene fluoride homopolymer having iodine atom or bromine atom at its end to the moiety of the formula (1), various methods can be adopted depending on kind of the functional group Y contained in the formula (1), the repeat unit of vinylidene fluoride of the vinylidene fluoride homopolymer and the like.

Nonlimiting examples of the methods of modification are explained below.

Modification method 1 (hydroxyl group end)

To one equivalent of vinylidene fluoride homopolymer having iodine atom or bromine atom at its end are added 1 to 9 equivalents of allyl alcohol and a sufficient amount of ethyl acetate for dissolving the vinylidene fluoride homopolymer having iodine atom or bromine atom at its end, and then pure water is added in an amount of 0 to 90 % by volume based on ethyl acetate. Then the inside of the reaction system is replaced by nitrogen, and AIBN which is a radical reaction initiator is added in a proper amount, followed by heating or cooling to 0˚ to 100˚C. The reaction is continued until no change in the modification ratio is recognized, and the vinylidene fluoride homopolymer having added allyl alcohol at its end can be obtained (Reaction formula 1) .

$CF_3\ (VdF)_n\ I + CH_2 = CHOH$

$$\xrightarrow[H_2O,\ AcOEt]{AIBN\ \ 65℃} CF_3\ (VdF)\ _nCH_2CHIOH$$

Then to one equivalent of the vinylidene fluoride homopolymer having added allyl alcohol at its end are added 0.01 to 1 equivalent of platinum oxide, 0.1 to 3.6 equivalents of triethylamine and acetic acid in an amount for sufficiently dissolving the vinylidene fluoride homopolymer having added allyl alcohol at its end. When the homopolymer is not sufficiently dissolved only with acetic acid, ethyl acetate, DMF or the like may be optionally added. Then not less than one equivalent of hydrogen gas is added and the reaction is continued at a reaction temperature of 0˚ to 100˚C until no change in the hydrogen gas pressure is recognized. As a result, the vinylidene fluoride homopolymer having added alcohol (hydroxyl) at its end can be obtained (Reaction formula 2).

$CF_3(VdF)_nCH_2CHIOH$

$$\xrightarrow[AcOEt\ (room\ temperature)]{PtO_2、Et_3N,\ AcOH,\ H_2\ (gas)} CF_3\ (VdF)\ _nCH_2CH_2OH$$

Modification method 2 (mercapto group end)

To one equivalent of vinylidene fluoride homopolymer having iodine atom or bromine atom at its end are added a proper amount of AIBN as a radical reaction initiator and a sufficient amount of ethyl acetate for dissolving the vinylidene fluoride homopolymer having iodine atom or bromine atom at its end. Then the inside of the reaction system is replaced by nitrogen, and ethylene gas is added in an amount of not less than one equivalent. The reaction is continued at a reaction temperature of 0˚ to 100˚C until no change in the ethylene gas pressure is recognized, and the ethylene-added vinylidene fluoride homopolymer having iodine atom or bromine atom at its end can be obtained (Reaction formula 3).

$CF_3\ (VdF)_n\ I + CH_2{=}CH_2$

$$\xrightarrow[AcOEt]{AIBN\ \ 65℃} CF_3\ (VdF)\ _nCH_2CH_2\ I$$

Then to one equivalent of the obtained ethylene-added vinylidene fluoride homopolymer having iodine atom

or bromine atom at its end is added 1 to 10 equivalents of dimethylthioformamide. In this case, when the ethylene-added vinylidene fluoride homopolymer having iodine atom or bromine atom at its end is not sufficiently dissolved, DMF or the like may be optionally added. The reaction is continued at a reaction temperature of 0° to 100°C until no change in the modification ratio is recognized, and the vinylidene fluoride homopolymer having mercapto group at its end can be obtained (Reaction formula 4).

$$CF_3\,(VdF)_nCH_2CH_2\,I + HSCN\,(CH_3)_2$$

$$\xrightarrow[70^\circ C]{DMF} CF_3\,(VdF)_nCH_2CH_2SH$$

Modification method 3 (vinyl end)

To one equivalent of the vinylidene fluoride homopolymer having added allyl alcohol at its end and obtained according to the Reaction formula 1 are added 1 to 10 equivalents of Zn powder and a sufficient amount of acetic acid for dissolving the vinylidene fluoride homopolymer having added allyl alcohol at its end. Heating and refluxing are continued until no change in the modification ratio is recognized, and the vinylidene fluoride homopolymer having vinyl group at its end can be obtained (Reaction formula 5).

$$CF_3\,(VdF)_n\,CH_2CHIOH$$

$$\xrightarrow[\text{Acetic acid}]{Zn} CF_3\,(VdF)_nCH_2CH{=}CH_2$$

Modification method 4 (organic silane end)

To one equivalent of the vinylidene fluoride homopolymer having vinyl group at its end and obtained according to the Reaction formula 5 are added a catalytic amount of 40 % by weight isopropanol solution of chloroplatinic acid and a sufficient amount of ethanol for dissolving the vinylidene fluoride homopolymer having vinyl group at its end. Then 1.2 to 1.0 equivalent of triethoxysilane is added and heating and refluxing are continued for several hours or more, and the vinylidene fluoride homopolymer having an organic silane compound at its end can be obtained (Reaction formula 6).

$$CF_3\,(VdF)_n\,CH_2CH{=}CH_2 + HSi\,(OC_2H_5)_3$$

$$\xrightarrow[\text{Ethanol}]{\text{Chloroplatinic acid}} CF_3\,(VdF)_nCH_2CH_2CH_2Si\,(OC_2H_5)_3$$

Modification method 5 (acryloyl group end)

To one equivalent of the vinylidene fluoride homopolymer having alcohol (hydroxyl) at its end and obtained according to the Reaction formula 2 are added 1 to 10 equivalents of acrylic acid chloride, 2-chloroacrylic acid chloride, methacrylic acid chloride, or 2-fluoroacrylic acid fluoride, 1 to 10 equivalents of organic amine and a sufficient amount of dry THF for dissolving the vinylidene fluoride homopolymer having alcohol at its end. Then the reaction is continued at a reaction temperature of 0° to 100°C until no change in the modification ratio is recognized, and the vinylidene fluoride homopolymer having acryloyl group at its end can be obtained (Reaction formula 7).

$CF_3\ (VdF)_nCH_2\ CH_2OH + ClOC\text{-}CH{=}CH_2$

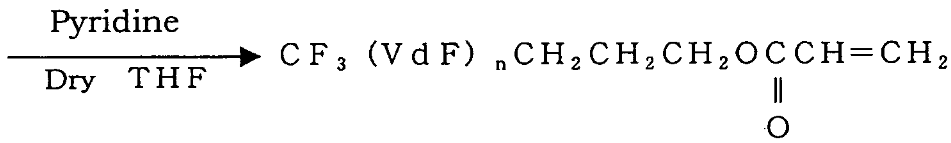


When the both ends are modified, it is preferable that the amounts of the respective reagents are double the above-mentioned amounts to one equivalent of the vinylidene fluoride homopolymer.

In the end modification step, the structures other than the end portion do not change substantially, and if the number average molecular weight and molecular weight distribution of the vinylidene fluoride portion are maintained, the crystal structures and proportions thereof are also maintained.

Thus there can be obtained the vinylidene fluoride homopolymer having I-form crystal structure and containing the portion of the formula (1) in at least one end thereof, for example, the vinylidene fluoride homopolymer which has I-form crystal structure alone or as main component and is represented by the formula (IA):

$$X^1 - A^1 - X^2 \qquad \text{(IA)}$$

wherein $A^1$ is a structural unit of vinylidene fluoride homopolymer having a number average degree of polymerization of from 5 to 12; $X^1$ and $X^2$ are the same or different and each is the portion of the formula (1), polyfluoroalkyl group or alkyl group, and at least one of $X^1$ and $X^2$ is the portion of the formula (1), or the vinylidene fluoride homopolymer which has I-form crystal structure alone or as main component and is represented by the formula (IB):

$$X^3 - A^2 - R^2 - A^3 - X^4 \qquad \text{(IB)}$$

wherein $A^2$ and $A^3$ are the same or different and each is a structural unit of vinylidene fluoride homopolymer, and a number average degree of polymerization is from 2 to 20; $X^3$ and $X^4$ are the same or different and each is the portion of the formula (1), polyfluoroalkyl group or alkyl group, and at least one of $X^3$ and $X^4$ is the portion of the formula (1); $R^2$ is a divalent organic group but does not contain a vinylidene fluoride homopolymer unit.

In $X^1$, $X^2$, $X^3$ and $X^4$, examples of a group other than the portion of the formula (1) are, for instance, H, F, $-CH_3$, $-CH_2CH_3$, $-CH_2CH_2CH_3$, $-CF_3$, $-CH_2CF_3$, $-CF_2CH_3$, $-CF_2CF_3$, $-C(CF_3)_3$,- $CF_2CF_2CF_2CF_3$, $-CF_2CF_2CH_2CF_3$, $-CF_2CF_2CF_2CH_3$, $-CF_2CF_2CF(CF_3)_2$, $-CF_2CF_2CH(CF_3)_2$, $-CF_2CF_2CH(CF_3)CH_3$, $-CF_2CF_2CH(CH_3)_2$, $-CF_2C(CF_3)_3$, $-CF_2C(CH_3)_3$, $-CF_2C(CF_3)_2CH_3$, $-CF_2C(CH_3)_2CF_3$ and the like. Among them, from the viewpoint of enhancement of ferroelectric characteristics, F, H, $-CH_3$, $-CH_2CH_3$, $-CH_2CH_2CH_3$, $-CF_3$, $-CH_2CF_3$ and $-CF_2CH_3$ are preferred, and especially H, $-CH_3$, $-CH_2CH_3$, $-CF_3$ and $-CF_2CF_3$ are preferred.

Also the vinylidene fluoride homopolymer represented by:

$$Z^1\text{-}(R^{10})_{n1}\text{-}A^1\text{-}(R^{11})_{n2}\text{-}S\text{-}M^1 \qquad \text{(IA-2)}$$

wherein $A^1$ is a structural unit of vinylidene fluoride homopolymer having a number average degree of polymerization of from 3 to 100; $Z^1$ is a polyfluoroalkyl group or alkyl group; $R^{10}$ and $R^{11}$ are the same or different and each is a divalent organic group but does not contain a vinylidene fluoride homopolymer unit having I-form crystal structure alone or as main component; n1 and n2 are the same or different and each is 0 or 1; $M^1$ is hydrogen atom or alkali metal atom, and the vinylidene fluoride homopolymer represented by:

$$M^2\text{-}S\text{-}(R^{12})_{n3}\text{-}A^2\text{-}R^2\text{-}A^3\text{-}(R^{13})_{n4}\text{-}S\text{-}M^3 \qquad \text{(IB-3)}$$

wherein $A^2$ and $A^3$ are the same or different and each is a structural unit of vinylidene fluoride homopolymer, and the total number average degree of polymerization of $A^2$ and $A^3$ is from 3 to 100; $R^2$ is a divalent organic group but does not contain a vinylidene fluoride homopolymer unit; $R^{12}$ and $R^{13}$ are the same or different and each is a divalent organic group but does not contain a vinylidene fluoride homopolymer unit; n3 and n4 are the same or different and each is 0 or 1; $M^2$ and $M^3$ are the same or different and each is hydrogen atom or alkali metal atom,
are novel compounds which are not disclosed in any of bulletins and patent publications.

Those novel compounds can be prepared in the same manner as in the vinylidene fluoride homopolymer of the formula (IA) or (IB) except that the number average degree of polymerization of the vinylidene fluoride homopolymer unit ($A^1$ or (the sum of $A^2$ and $A^3$)) is from 3 to 100.

In those mercapto-modified vinylidene fluoride homopolymers, examples of alkali metal which can be used as $M^1$, $M^2$ or $M^3$ are, for instance, Li, Na, K and the like., and particularly Li and Na are preferred from the viewpoint of enhancement of ferroelectric characteristics.

Also $R^{10}$, $R^{11}$, $R^{12}$ and $R^{13}$ are the same as $R^1$ in the formula (1). $R^{10}$ and $R^{11}$ are the same or different, and also $R^{12}$ and $R^{13}$ are the same or different.

Examples of the vinylidene fluoride homopolymers represented by the formula (IA-2) are, for instance,

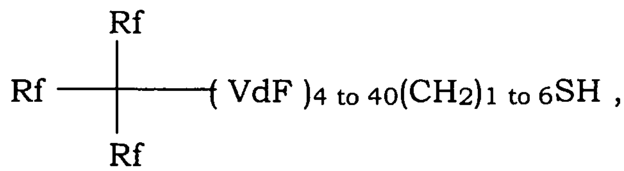

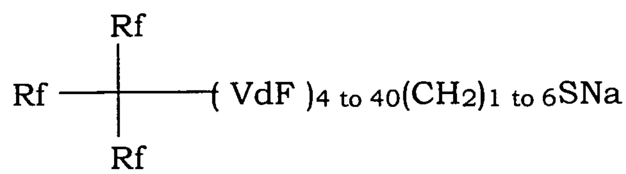

and the like, wherein Rf is a perfluoroalkyl group having 1 to 5 carbon atoms or a polyfluoroalkyl group having 1 to 5 carbon atoms; VdF is a vinylidene fluoride unit (hereinafter the same), and especially preferred are:

$(CF_3)_2CF\text{-}(VdF)_{4\ to\ 15}(CH_2)_{1\ to\ 2}SH$,
$CF_3CF_2CF_2\text{-}(VdF)_{4\ to\ 15}(CH_2)_{1\ to\ 2}SH$,
$(CF3)_3C\text{-}(VdF)_{4\ to\ 15}(CH_2)_{1\ to\ 2}SH$,
$CF_3\text{-}(VdF)_{4\ to\ 15}(CH_2)_{1\ to\ 2}SH$,
$CH_3CF_2\text{-}(VdF)_{4\ to\ 15}(CH_2)\ to\ _2SH$,
$(CF_3)_2CF\text{-}(VdF)_{4\ to\ 15}(CH_2)_{1\ to\ 2}SNa$,
$CF_3CF_2CF_2\text{-}(VdF)_{4\ to\ 15}(CH_2)\ to\ _2SNa$,
$(CF_3)_3C\text{-}(VdF)_{4\ to\ 15}(CH_2)\ to\ _2SNa$,
$CF_3\text{-}(VdF)_{4\ to\ 15}(CH_2)_{1\ to\ 2}SNa$, and
$CH_3CF_2\text{-}(VdF)_{4\ to\ 15}(CH_2)\ to\ _2SNa$.

Examples of the vinylidene fluoride homopolymers of the formula (IB-3) are, for instance, those in which $R^2$ is

$$-(CF_2)_{1\ to\ 8}-,$$

the total number of VdF units of $A^2$ and $A^3$ is from 4 to 40, $R^{12}$ and $R^{13}$ are

$$-(CH_2)_{1\ to\ 6}-$$

and $M^2$ and $M^3$ are H or Na, and particularly preferred are those in which $R^2$ is

$$-(CF_2)_{1\ to\ 4}-,$$

the total number of VdF units of $A^2$ and $A^3$ is from 4 to 15, $R^{12}$ and $R^{13}$ are

$$-\!\!\left(CH_2\right)_{1\ to\ 2}\!\!-$$

and $M^2$ and $M^3$ are H or Na.

The method of forming a thin film of the present invention is a method of forming a thin film on a substrate by applying, on a substrate, those vinylidene fluoride homopolymers which have the portion of the formula (1) in at least one end thereof and contain I-form crystal structure, preferably I-form crystal structure alone or as main component.

The reaction product (green powder product) of vinylidene fluoride homopolymer may be applied as it is directly to the substrate, or the vinylidene fluoride homopolymer which contains I-form crystal structure alone or as main component and is obtained by subjecting the green powder product of vinylidene fluoride homopolymer to any treatments may be applied to the substrate. In the case of the green powder product of vinylidene fluoride homopolymer containing I-form crystal structure alone or as main component, it is desirable that such treatments are carried out to such an extent not to impair the I-form crystal structure.

Examples of steps for such treatments are, for instance, a washing step which is carried out for removing low molecular weight impurities in the green powder product, a step for separating the vinylidene fluoride homopolymers having a specific molecular weight, steps for re-precipitation and re-crystallization, a heating step for drying, a vacuum treatment step, a heat-treatment step for crystal growth, a step for solvent treatment for increasing purity of I-form crystal structure and the like.

Among those steps, by separating the homopolymers having a specific molecular weight by the separation step, for example, a purity of I-form crystal is increased, thereby enabling ferroelectric characteristics to be imparted more effectively to the thin film of the present invention. The separation step can be preferably carried out, for example, by a re-precipitation method, distillation method, chromatography method, vapor deposition method or the like method.

According to the re-precipitation method, vinylidene fluoride homopolymers having the same molecular weight can be separated by allowing the green powder product of vinylidene fluoride homopolymer to be dissolved in as small an amount as possible of solvent (good solvent) and then pouring into a solvent (poor solvent), in which the green powder product of vinylidene fluoride homopolymer is low in solubility, for re-precipitation of the vinylidene fluoride homopolymer.

In this case, it is preferable that the green powder product of vinylidene fluoride homopolymer is dissolved in an amount of usually from 1 to 80 % by weight, preferably from 1 to 70 % by weight, more preferably from 1 to 50 % by weight to the good solvent. Also it is preferable that the amount of poor solvent is about 10 to about 20 times the amount of good solvent. A re-precipitation temperature is usually -30˚C to 150˚C, preferably 0˚C to 80˚C, more preferably 25˚C to 50˚C.

The above-mentioned good solvent and poor solvent may be optionally selected depending on solubility of vinylidene fluoride homopolymer to be re-precipitated. There can be used preferably, for example, ketone solvents such as acetone, methyl ethyl ketone, methyl isobutyl ketone, cyclohexanone and acetyl acetone; ester solvents such as ethyl acetate, cellosolve acetate, n-butyl acetate, isobutyl acetate, methyl cellosolve acetate, carbitol acetate and dibutyl phthalate; aldehyde solvents such as benzaldehyde; amine solvents such as dimethylamine, dibutylamine, dimethylaniline, methylamine and benzylamine; amide solvents such as N,N-dimethylformamide, N,N-dimethylacetamide and N-methyl-2-pyrrolidone; carboxylic acid anhydride solvents such as acetic anhydride; carboxylic acid solvents such as acetic acid; halogen solvents such as chloroform, dichloromethane, 1,2-dichloroethane, chlorobenzene, benzyl chloride and 1,1,2,2-tetrachloroethane; ether solvents such as tetrahydrofuran and dioxane; sulfone amide solvents such as dimethyl sulfoxide; aliphatic hydrocarbon solvents such as hexane, heptane, octane and petroleum ether; alcohol solvents such as methanol, ethanol and 1-propanol; aromatic hydrocarbon solvents such as benzene, toluene, xylene and styrene; and solvent mixtures of two or more thereof.

According to the distillation method, vinylidene fluoride homopolymers having the same molecular weight can be efficiently separated by distilling the green powder product of vinylidene fluoride homopolymer under a specific pressure (reduced pressure) and a specific temperature.

A distilling pressure is usually 0.1 Pa to 101 KPa, preferably 1 Pa to 50 KPa, more preferably 100 Pa to 1 KPa. A distilling temperature is usually 0˚C to 500˚C, preferably 0˚C to 250˚C, more preferably 25˚C to 200˚C.

According to the washing method, vinylidene fluoride homopolymers having the same molecular weight can be separated by subjecting the green powder product of vinylidene fluoride homopolymer to washing with a solvent.

The solvent used for the washing may be optionally selected from those being capable of dissolving the vinylidene fluoride homopolymer. Concretely the same solvents as exemplified in the re-precipitation method can be used.

A solvent temperature at washing is usually -30˚C to 150˚C, preferably 0˚C to 80˚C, more preferably 25˚C to 50˚C.

The number of washing cycles varies depending on kind of a solvent for the washing. In principle, the washing may be carried out optional times, usually not more than 100 times, preferably not more than 50 times, more preferably not more than 10 times.

According to the chromatography method, vinylidene fluoride homopolymers having the same molecular weight can be separated efficiently.

When the mobile phase is one dissolving vinylidene fluoride homopolymer, any of known methods may be employed. For example, liquid phase chromatography and gas chromatography are used preferably. A temperature in the chromatography method is usually -30˚C to 150˚C, preferably 0˚C to 100˚C, more preferably 25˚C to 80˚C.

According to the vapor deposition method, vinylidene fluoride homopolymers having the same molecular weight can be efficiently separated by vapor deposition of the green powder product of vinylidene fluoride homopolymer under a specific pressure (reduced pressure) and a specific temperature.

In the vapor deposition, the green powder product of vinylidene fluoride homopolymer is subjected to heating or cooling, and a vapor deposition temperature is usually -30˚C to 1,000˚C, preferably 0˚C to 800˚C, more preferably 0˚C to 500˚C. A vapor deposition pressure in a system is usually $1 \times 10^{-6}$ Pa to 100 KPa, preferably not more than 1 KPa, more preferably not more than 1 Pa.

It is preferable to employ the distillation method or chromatography method because vinylidene fluoride homopolymers having the same molecular weight can be separated easily efficiently.

As the molecular weight distribution is made narrower by such separation steps, for example, a purity of I-form crystal structure is increased and ferroelectric characteristics can be imparted more effectively to the thin film of the present invention. Therefore it is preferable to increase the purity of vinylidene fluoride homopolymers having the same molecular weight to not less than 70 % by weight, further not less than 80 % by weight, further preferably not less than 90 % by weight, particularly preferably not less than 95 % by weight.

Example of the step for treatment using a solvent is a step for dissolving a vinylidene fluoride polymer in a solvent which contains an organic solvent having a dipole moment of not less than 2.8 alone or partly and then evaporating the solvent. A purity of I-form crystal structure becomes higher by carrying out the treatment using a solvent which contains an organic solvent having a dipole moment of not less than 2.8 alone or partly.

For the dipole moment used in the present invention, one mainly referred to in Kagaku Binran, Kiso-hen, Rev. 3 (edit. of Chemical Society of Japan: Maruzen) and CRC Handbook of Chemistry and Physics (edit. of Lide, David R.: CRC Press) is used.

Examples of the organic solvent having a dipole moment of not less than 2.8 are, for instance, dimethylformamide (dipole moment = 3.82), acetonitrile (3.92), acetone (2.88) dimethylacetamide (3.81), dimethyl sulfoxide (3.96), hexamethyl phosphoramide (5.39), N-methyl-2-pyrrolidone (4.09), tetramethylurea (3.47) and solvent mixtures of two or more thereof. From the viewpoint of high productivity of I-form crystal structures, a dipole moment of the organic solvent is preferably not less than 3.0, more preferably not less than 3.5, especially not less than 3.7.

Also a solvent partly containing an organic solvent having a dipole moment of not less than 2.8 can be used effectively. In this solvent mixture, when the organic solvent having a dipole moment of not less than 2.8 is contained in an amount of not less than 5 % by mass, further not less than 10 % by mass, especially not less than 30 % by mass, there is exhibited an effect of making purity of I-form crystal structure as high as a purity in the case of sole use of organic solvent having a dipole moment of not less than 2.8.

Preferred examples of other organic solvent to be mixed are those having a boiling point lower than that of organic solvent having a dipole moment of not less than 2.8. For example, there are methyl ethyl ketone (MEK), tetrahydrofuran (THF), ethyl acetate, acetic acid, pyridine, cyclopentanone, cyclohexanone, butyl acetate, polyethylene glycol methyl ether acrylate (PEGMEA), methyl amyl ketone (MAK) and the like.

A dissolution temperature is usually -30˚C to 150˚C, preferably 0˚C to 80˚C, more preferably 25˚C to 50˚C. If the dissolution temperature is too high, there is a tendency that decomposition of vinylidene fluoride homopolymer and solvent occurs, and if the dissolution temperature is too low, there is a tendency that the solvent is solidified, a viscosity is increased and dissolution of the vinylidene fluoride homopolymer becomes difficult.

A concentration of the solution of vinylidene fluoride homopolymer may be optionally selected depending on kind of the organic solvent, dissolution temperature, etc. Even when the polymer is dissolved until it is saturated, the effect of the present invention is exhibited. A preferred concentration is not less than 0.1 % by mass, preferably not less than 0.5 % by mass, more preferably not less than 1 % by mass, and not more than 50 % by mass, preferably not more than 30 % by mass, more preferably not less than 20 % by mass.

The method of evaporation of the organic solvent is not limited particularly, and known methods can be utilized, for example, a method of allowing to stand in an open system under atmospheric pressure, a method of allowing to stand in a closed system under atmospheric pressure, a method of evaporation under reduced pressure at room temperature, a method of evaporation by heating under reduced pressure and the like. However when heating at high temperature, there is a tendency that the precipitated vinylidene fluoride homopolymer itself is melted. Therefore a temperature where the vinylidene fluoride homopolymer is not melted is preferred irrespective of an ambient pressure. The temperature is not less than 0˚C, preferably not less than 25˚C, more preferably not less than 30˚C, and not more than 150˚C, preferably not more than 100˚C, more preferably not less than 50˚C.

The ambient temperature is preferably a atmospheric pressure, especially preferably a reduced pressure. A

preferred ambient pressure is not less than 0.0013 Pa, further not less than 0.133 kPa, especially not less than 1.333 kPa, and not more than atmospheric pressure, further not more than 9.333 kPa, especially not more than 6.666 kPa.

It is desirable to carry out the evaporation taking time enough for sufficiently removing the solvent from the viewpoint of prevention of lowering of electrical properties, particularly ferroelectricity which is attributable to a remaining solvent.

Also in the case of using the vinylidene fluoride homopolymer containing I-form crystal structure alone or as main component as a starting green powder product, formation of the thin film may be carried out after conducting a step for blending a solvent and additives to form into a coating composition.

In the present invention, various methods of forming a thin film can be utilized preferably, for example, a method (coating solution method) of applying the vinylidene fluoride homopolymer in the form of a coating solution (coating composition) obtained by dissolving or dispersing the polymer in a liquid medium; a method (powder coating method) of applying the vinylidene fluoride homopolymer in the form of powder directly to a substrate; a method (vacuum vapor deposition method) of sublimating a vinylidene fluoride homopolymer powder in vacuo and/or with heating and applying by vapor deposition; and the like method.

Those methods are effective especially in the case of using the vinylidene fluoride homopolymer containing I-form crystal structure alone or as main component as a starting green powder product. The method of forming a thin film in the case of using a vinylidene fluoride homopolymer containing II-form crystal structure alone or as main component or a vinylidene fluoride homopolymer containing III-form crystal structure as a starting green powder product is explained infra.

In the method of applying the vinylidene fluoride homopolymer in the form of a coating solution (coating composition), there can be used a liquid medium which can dissolve or uniformly disperse the vinylidene fluoride homopolymer. In order to control a thickness of the thin film, particularly preferred are liquid media which can dissolve the vinylidene fluoride homopolymer.

Preferred examples of the liquid medium are, for instance, ketone solvents such as acetone, methyl ethyl ketone, methyl isobutyl ketone, cyclohexanone and acetyl acetone; ester solvents such as ethyl acetate, cellosolve acetate, n-butyl acetate, isobutyl acetate, methyl cellosolve acetate, carbitol acetate and dibutyl phthalate; aldehyde solvents such as benzaldehyde; amine solvents such as dimethylamine, dibutylamine, dimethylaniline, methylamine and benzylamine; amide solvents such as N,N-dimethylformamide, N,N-dimethylacetamide and N-methyl-2-pyrrolidone; carboxylic acid anhydride solvents such as acetic anhydride; carboxylic acid solvents such as acetic acid; halogen solvents such as chloroform, dichloromethane, 1,2-dichloroethane and 1,1,2,2-tetrachloroethane; ether solvents such as tetrahydrofuran and dioxane; sulfone amide solvents such as dimethyl sulfoxide; and the like.

Particularly preferred are ketone solvents and amide solvents because the vinylidene fluoride homopolymer is dissolved therein satisfactorily.

Also when the vinylidene fluoride homopolymer is uniformly dispersed stably in the form of fine particles in a medium, a thin film can be formed even in the case of the homopolymer being insoluble in a liquid solvent. For example, an aqueous dispersion of vinylidene fluoride homopolymer can be used.

A concentration of vinylidene fluoride homopolymer in the coating solution varies depending on an intended coating thickness, a viscosity of the coating solution, etc. The concentration is not less than 0.1% by weight, preferably not less than 0.5 % by weight, more preferably not less than 1 % by weight, and not more than 50 % by weight, preferably not more than 30 % by weight, more preferably not more than 20 % by weight.

For applying the coating solution on a substrate, there can be used known coating methods such as spin coating, dip coating, spray coating, roll coating and gravure coating. For efficiently forming a thin film, the spin coating method and gravure coating method are preferred, and particularly the spin coating method is preferred.

After the application by the above-mentioned method, a drying step may be carried out for removing the solvent. For the drying, for example, air drying at room temperature, drying by heating, vacuum drying and the like can be used. In the drying, attention should be paid not to dry at excessively high temperature since there is a case where the crystal structure of I-form is changed.

Accordingly, it is preferable to dry by heating at a temperature lower than a melting point of vinylidene fluoride homopolymer. The temperature for drying by heating varies depending on a boiling point of a solvent to be used, and is not less than 30˚C, preferably not less than 40˚C, more preferably not less than 50˚C and not more than 150˚C, preferably not more than 100˚C, more preferably not more than 80˚C.

The thus formed thin film of vinylidene fluoride homopolymer on a substrate by application in the form of a coating solution maintains I-form crystal structure and has an ability of exhibiting excellent ferroelectricity.

Also preferred is a method of forming a thin film on a substrate by the vacuum vapor deposition method by using a vacuum vapor deposition equipment.

A vacuum vapor deposition temperature and vacuum degree are optionally selected depending on a degree of polymerization and sublimation property of the vinylidene fluoride homopolymer. The deposition temperature is from room temperature to 200˚C, preferably not more than 100˚C. The substrate temperature is from 0˚C to 100˚C, preferably

not less than room temperature and not more than 50˚C. The vacuum degree is not more than $10^{-2}$ Pa, preferably not more than $10^{-4}$ Pa.

In this vacuum vapor deposition method, by use of the method of forming a thin film of the present invention, a thin film of vinylidene fluoride homopolymer having I-form crystal structure can be formed easily under normal conditions such as room temperature even without setting the substrate particularly at very low temperature.

With respect to the method of forming a thin film in the case of using a vinylidene fluoride homopolymer containing II-form crystal structure alone or as main component or a vinylidene fluoride homopolymer containing III-form crystal structure as a starting green powder product, there can be utilized known methods of forming a thin film of vinylidene fluoride homopolymer containing I-form crystal structure alone or as main component by using a vinylidene fluoride homopolymer containing iodine atom or bromine atom at its end.

For example, there are a method of forming a thin film on a specific substrate (KCl or KBr) by vacuum vapor deposition method (substrate temperature: KCL=50˚C, KBr=0˚C) and a method of forming a thin film by vacuum vapor deposition method on a metallic substrate (Pt or the like) cooled to low temperature (about -160˚C to -100˚C) with liquid nitrogen, by using a vinylidene fluoride homopolymer containing II-form crystal structure alone or as main component or a vinylidene fluoride homopolymer containing III-form crystal structure as a starting green powder product in both methods.

According to the method of forming the thin film of the present invention, kinds of applicable substrates can be increased remarkably, and a thin film of vinylidene fluoride homopolymer of I-form crystal structure can be formed on various substrates.

Kind of a substrate is optionally selected depending on an intended object and application of the laminated article and kind of vinylidene fluoride homopolymer used as a starting green powder product. The substrate is selected from silicon substrates, metallic substrates, ceramic substrates such as glass substrates and resin substrates.

When utilizing electrical properties of the thin film of vinylidene fluoride homopolymer of the present invention containing I-form crystal structure alone or as main component, preferred are, for example, electrically conductive substrates being capable of forming an electrode. Also insulating substrates such as silicon substrates, ceramic substrates (glass substrates and the like) and resin substrates on which a thin film of electrically conductive material is formed are preferred as the electrically conductive substrates.

As a metallic material for an electrically conductive substrate or an electrically conductive thin film, there can be used aluminum, copper, chromium, nickel, zinc, stainless steel, gold, silver, platinum, tantalum, titanium, niobium, molybdenum, indium tin oxide (ITO) and the like. Particularly preferred are silicon wafers on which a thin film of aluminum, gold, silver, platinum, tantalum, titanium or the like is formed. As the metallic substrate, aluminum, copper, gold, silver and platinum are also preferred.

Those electrically conductive thin films provided on a substrate surface may be previously subjected to patterning of intended circuit by a known method such as photolithography, mask deposition or the like, as case demands.

On those substrates are formed thin films of vinylidene fluoride homopolymer having I-form crystal structure by the mentioned method.

A thickness of the thin film of vinylidene fluoride homopolymer having I-form crystal structure is optionally selected depending on an intended object and application of the laminated article. The thickness is usually not less than 1 nm, preferably not less than 5 nm, particularly preferably not less than 10 nm, and not more than 10 $\mu$m, preferably not more than 1 $\mu$m, particularly preferably not more than 500 nm.

In the method of the present invention, as explained supra, by using the vinylidene fluoride homopolymer containing, at its end, the moiety having a functional group, adhesion of the thin film to a substrate is enhanced, self-organization of the thin film arises and polymers are bonded each other, thereby enhancing a strength and heat resistance of the thin film.

When the mentioned characteristics are obtained by reaction of the functional group after formation of the thin film, for example, the following method may be utilized.

In order to enhance adhesion, the formed thin film may be subjected to, for example, heat treatment, light irradiation treatment or known treatment for accelerating formation of chemical bond or interaction by chemical reaction. Enhancement of adhesion, strength and heat resistance of the thin film can be confirmed by known methods, for example, scratch test, pencil hardness test and cross-cut adhesion test.

In order to accelerate the self-organization, proper temperature and proper solution concentration are selected at forming a thin film, or the formed thin film is subjected to known treatment, for example, heat treatment, light irradiation and the like treatment.

Further in order to bond polymers, the formed thin film is subjected to known treatment, for example, heat treatment and light irradiation to form covalent bond by condensation reaction, polyaddition reaction, addition condensation reaction or ring-opening reaction of polymers or to form chemical bond by ionic bonding, coordination bonding or hydrogen bonding. In this case, an additive for accelerating the reaction may be added in a proper amount.

The present invention also relates to the laminated article comprising a substrate on which a self-organization

film is formed by using vinylidene fluoride homopolymer having a number average degree of polymerization of vinylidene fluoride homopolymer unit of 3 to 100 and containing I-form crystal structure alone or as main component.

The self-organization film is as explained supra, and it is preferable that the self-organization film is formed by using vinylidene fluoride homopolymers having a number average degree of polymerization of vinylidene fluoride homopolymer unit of 3 to 100 and containing, at one end or both ends thereof, the moiety represented by the formula (1-1):

$$-(R^1)_n-Y^1 \qquad (1\text{-}1)$$

wherein $R^1$ is a divalent organic group but does not contain a structural unit of the vinylidene fluoride homopolymer; n is 0 or 1; $Y^1$ is -SH and/or $-SiX_{3-n}R^6{}_n$ (n is 0 or an integer of 1 or 2; $R^6$ is $CH_3$ or $C_2H_5$; X is $-OR^7$, -COOH, $-COOR^7$, $-NH_{3-m}R^7{}_m$, -OCN or halogen atom ($R^7$ is $CH_3$, $C_2H_5$ or $C_3H_7$, m is 0 or an integer of 1 to 3).

Examples of the vinylidene fluoride homopolymer being capable of self-organization and the thin film are as explained supra.

Further the present invention relates to the laminated article comprising a substrate and a thin film formed on the substrate by bonding of vinylidene fluoride homopolymers having a number average degree of polymerization of vinylidene fluoride homopolymer unit of 3 to 100 and containing I-form crystal structure alone or as main component.

The vinylidene fluoride homopolymer having a functional group bonding the polymers is as explained supra, and it is preferable that the thin film is formed by bonding of vinylidene fluoride homopolymers having a number average degree of polymerization of vinylidene fluoride homopolymer unit of 3 to 100 and containing, at one end or both ends thereof, the moiety represented by the formula (1-2):

$$-(R^1)_n-Y^2 \qquad (1\text{-}2)$$

wherein $R^1$ is a divalent organic group but does not contain a structural unit of the vinylidene fluoride homopolymer; n is 0 or 1; $Y^2$ is $-CH=CH_2$, $-OCOCH=CH_2$, $-OCOCF=CH_2$, $-OCOC(CH_3)=CH_2$ or $-OCOCCl=CH_2$.

Examples of the vinylidene fluoride homopolymers being capable of bonding each other are as explained supra.

In those laminated articles, it is preferable that the vinylidene fluoride homopolymer containing I-form crystal structure alone or as main component in the thin film satisfies any of Equation 1 and Equation 2, further preferably Equation 3 and Equation 4 explained supra.

The present invention further relates to a ferroelectric device comprising the laminated article explained above.

In the case of obtaining a ferroelectric material or device, after forming, on a substrate, the thin film of vinylidene fluoride homopolymer containing I-form crystal structure alone or as main component, a step for heat treating (heat treating step) may be further carried out for the purpose of enhancing ferroelectric characteristics of the formed thin film of vinylidene fluoride homopolymer. The step for heat treating the thin film of vinylidene fluoride homopolymer is usually carried out for the purpose of growth of crystals in the thin film of vinylidene fluoride homopolymer to increase the crystal size, and as a result, ferroelectric characteristics can be enhanced.

A heat treating temperature in the heat treating step is optionally selected depending on a number average degree of polymerization and crystalline melting point of the vinylidene fluoride homopolymer and kind of a substrate, and is usually not less than 50°C, preferably not less than 60°C, more preferably not less than 70°C, particularly preferably not less than 80°C, and an upper limit thereof is usually a temperature lower than a crystalline melting point of the vinylidene fluoride homopolymer, preferably a temperature lower than the crystalline melting point by 5°C, more preferably a temperature lower than the crystalline melting point by 10°C.

A heat treating time is usually not less than about 10 minutes, preferably not less than 20 minutes, more preferably not less than 30 minutes, and not more than about 10 hours, preferably not more than 5 hours, more preferably not more than 3 hours, particularly preferably not more than about 2 hours. It is preferable that after the heating, the film is allowed to stand at room temperature for air cooling slowly.

It is preferable to use the preferred vinylidene fluoride homopolymer of the present invention comprising I-form crystal structure alone or as main component because enough ferroelectric characteristics can be exhibited even without carrying out the above-mentioned heat treating step.

In the method of forming a thin film of the present invention and the laminated articles, after forming the thin film, for the purpose of making the thin film of the present invention surely exhibit ferroelectricity, the polarization step may be further carried out after carrying out the above-mentioned heat-treating step or without carrying out the heat-treating step.

For the polarization, known methods can be used similarly. For example, there can be used a method of carrying out vapor deposition of an electrode on the film or contacting an electrode to the film and then applying electric field of direct or alternating current or direct or alternating voltage on the electrode, a method of corona discharging or the like method.

The applied electric field in the polarization step can be optionally selected depending on the thickness of the

thin film, a proportion of I-form crystal structure, etc., and is usually not less than 10 MV/m, preferably not less than 50 MV/m, more preferably not less than 80 MV/m, and not more than dielectric field strength, preferably not more than 250 MV/m, more preferably 200 MV/m. If the applied electric field is too low or the applying time is too short, enough polarization is not attained. Also a too high applied electric field or a too long applying time is not preferred because bonding of polymer molecules is cleaved even partially.

The applying time is usually not less than 20 nanoseconds, preferably not less than 1 second, more preferably not less than 1 minute, and up to about 48 hours, preferably six hours, more preferably two hours.

A thin film temperature in the polarization step is usually not less than 0˚C, preferably not less than 10˚C, more preferably not less than 25˚C, and not more than a crystalline melting point of the vinylidene fluoride homopolymer, preferably not more than 120˚C, more preferably not more than 85˚C.

Also the heat-treating step and the polarization step may be carried out at the same time, thereby enabling higher ferroelectric characteristics to be exhibited.

Further the thin film layer of vinylidene fluoride homopolymer in the thus obtained laminated article may be subjected to patterning of an intended circuit by a known method such as photolithography, mask deposition or the like, as case demands.

Also as case demands, a layer of other material may be provided on the thin film of vinylidene fluoride homopolymer in the thus obtained laminated article.

For example, it is possible to make multiple layers by providing the thin film of vinylidene fluoride homopolymer between the electrically conductive material layers being capable of becoming the same electrode as mentioned above or between the insulating layers of silicon, ceramic, resin or the like in the form of sandwich. The thus obtained laminated article has ferroelectricity.

In the present invention, ferroelectricity is a property that permanent dipoles inside a substance are oriented in the same direction by action of any force and the substance has polarization even when an electric field is not applied (polarization generated even without an electric field is called spontaneous polarization). Also ferroelectricity is a property that the spontaneous polarization can be inverted by an outside electric field. Whether or not a substance has ferroelectricity is known by the fact that when examining a relation between the electric field E and the electric displacement D, if the substance is a ferroelectric substance, a hysteresis curve like that of a ferromagnetic substance is shown when an alternating electric field having a large amplitude to a certain extent is applied thereto.

According to the method of the present invention, for example, with respect to a laminated article comprising a layer of vinylidene fluoride homopolymer and electrodes of A1 thin films provided on both sides thereof, when a triangular voltage having a frequency of 15 mHz and an amplitude of 120 V is applied between both electrodes, not only a rectangular hysteresis curve can be obtained but also a remanence calculated therefrom can be not less than 75 $mC/m^2$, preferably not less than 90 $mC/m^2$, more preferably not less than 110 $mC/m^2$, particularly preferably not less than 120 $mC/m^2$, especially not less than 135 $mC/m^2$.

A substance having ferroelectricity also has properties corresponding to electric or optical functions such as piezo electric property, pyroelectric property, electro-optical effect and non-linear optical effect.

Because of those properties, the thin film and laminated article obtained in the present invention possesses enhanced mechanical strength and high heat resistance and are applicable to high efficiency devices having environmental resistance and using piezo electric property, pyroelectric property, electro-optical effect and non-linear optical effect such as FE-RAM, infrared sensor, microphone, speaker, poster with voice, head phone, electronic musical instruments, artificial tactile organ, pulsimeter, hearing aid, hemadynamometer, phonocardiograph, ultrasonic diagnostic device, ultrasonic microscope, ultrasonic hyperthermia equipment, thermograph, micro-earthquake seismometer, landslide preperception meter, proximity warning (distance meter) intruder detector, keyboard switch, bimorph display for underwater communication, sonar, optical shutter, optical fiber voltmeter, hydrophone, ultrasonic optical modulation and polarization device, acoustic delay line, ultrasonic camera, POSFET, accelerometer, tool malfunction sensor, AE detector, sensor for robot, impact sensor, flow meter, vibration meter, ultrasonic flaw detector, ultrasonic thickness meter, fire alarm, intruder detection, piezo-electric vidicon, copying machine, touch panel, endothermic and exothermic reaction detector, optical intensity modulator, optical phase modulator and optical circuit switching element.

## EXAMPLE

The present invention is then explained by means of examples and preparation examples, but is not limited to such examples.

First, methods of measuring parameters used in the present invention are explained below.

[1] Method of measuring a number average degree of polymerization of vinylidene fluoride (VdF) polymer

(1) Number average degree of polymerization (n) of $CF_3(VdF)_nI$

Measured by $^{19}$F-NMR. Concretely calculated by the following equation using a peak area (derived from $CF_3$-) around -61 ppm and a peak area (derived from $-CF_2-CH_2-$) around -90 to -96 ppm.

$$(\text{Number average degree of polymerization}) = ((\text{Peak area around } -90 \text{ to } -96 \text{ ppm})/2)/((\text{Peak area around } -61 \text{ ppm})/3)$$

(2) Number average degree of polymerization (n) of $CF_3CF_2(VdF)_nI$

Measured by $^{19}$F-NMR. Concretely calculated by the following equation using a peak area (derived from $CF_3$-) around -86 ppm and a peak area (derived from $-CF_2-CH_2-$) around -90 to -96 ppm.

$$(\text{Number average degree of polymerization}) = ((\text{Peak area around } -90 \text{ to } -96 \text{ ppm})/2)/((\text{Peak area around } -86 \text{ ppm})/3)$$

(3) Number average degree of polymerization (n+m) of $I(VdF)_nCF_2CF_2CF_2CF_2(VdF)_mI$

Measured by $^{19}$F-NMR. Concretely calculated by the following equation using the sum of a peak area around -112 ppm and a peak area around -124 ppm (both derived from - $CF_2CF_2CF_2CF_2$-) and a peak area (derived from $-CF_2-CH_2-$) around -90 to -96 ppm.

$$(\text{Number average degree of polymerization}) = ((\text{Peak area around } -90 \text{ to } -96 \text{ ppm})/2)/((\text{Sum of peak area around } -112 \text{ ppm and peak area around } -124 \text{ ppm})/8)$$

[2] Measuring (analysis) methods and equipment

(1) IR analysis

(1-1) Measuring conditions

KBr method is employed. After 1 to 5 mg of vinylidene fluoride polymer powder is mixed to 100 to 500 mg of KBr powder and pressure is applied for pelletizing, the obtained pellets are fixed to a measuring equipment and measurement is carried out at 25°C.

(1-2) Measuring equipment

FT-IR spectrometer 1760X available from Perkin Elmer Co., Ltd.

(2) $^{1}$H-NMR and $^{19}$F-NMR analyses

(2-1) Measuring conditions

Measurement is carried out by dissolving 10 to 20 mg of vinylidene fluoride polymer powder in d6-acetone and setting the obtained sample on a probe.

(2-2) Measuring equipment

AC-300P available from Bruker

(3) Powder X-ray diffraction analysis

(3-1) Measuring conditions

Measurement is carried out by applying vinylidene fluoride polymer powder on a glass plate for use for this specific analysis and setting the glass plate on measuring equipment.

(3-2) Measuring equipment

Rotaflex available from Rigaku Co.

(4) Confirmation of ferroelectricity (D-E hysteresis curve)

When a material has ferroelectricity, a D-E hysteresis curve of the material shows a rectangular shape. In the present invention, electric current and voltage characteristics are examined under the following conditions and a D-E hysteresis curve is drawn to judge whether or not ferroelectricity is present.

(4-1) Measuring conditions

A triangular voltage having a frequency of 15 mHz and an amplitude of 120 V is applied on aluminum electrodes formed on both sides of the VdF thin film.

(4-2) Measuring equipment

Ferroelectric substance test system RT6000HVS available from Agilent Technologies

(5) Measurement of molecular weight and molecular weight distribution (5-1) Measuring conditions

Measurement is carried out at 35˚C by dissolving vinylidene fluoride polymer in THF in an amount of 0.1 to 0.2 % by weight and setting on measuring equipment.

(5-2) Measuring equipment

HLC-8020 (equipment) available from Toso Kabushiki Kaisha and Shodex GPC-KF-801, GPC-KF-802 and two GPC-KF-806MX2 (columns) available from Showa Denko Kabushiki Kaisha are used.

(6) Measurement of abnormal bonding ratio

$$\text{Abnormal bonding ratio (\%)} = (n2/(n + n1 + n2)) \times 100$$

The abnormal bonding ratio is obtained by $^{19}$F-NMR analysis, and is concretely calculated by the above equation from the sum (=n2) of a peak area around -112 ppm and a peak area around -124 ppm (both derived from abnormal bonding) and a peak area (=n + nl) (derived from $-CF_2-CH_2-$) around -90 to -96 ppm.

$$\text{(Number average degree of polymerization)} = \frac{\text{(Sum of peak area around } -112 \text{ ppm and peak area around } -124 \text{ ppm)}}{\text{((Sum of peak area around } -112 \text{ ppm and peak area around } -124 \text{ ppm)} + \text{(Peak area around } -90 \text{ to } -96 \text{ ppm))}}$$

(Peak area around -90 to -96 ppm) is n1, and (Sum of peak area around -112 ppm and peak area around -124 ppm) is n2.

PREPARATION EXAMPLE 1

(Synthesis of $CF_3(VdF)_nI$)

(1-1) Synthesis of $CF_3(VdF)_{8.1}I$ (n=8.1)

Into a 300 ml stainless steel autoclave equipped with a valve, pressure gauge and thermometer was poured 50 g of HCFC-225, and while cooling with a dry ice/methanol solution, 0.78 g of di-n-propylperoxy dicarbonate (50 % by weight methanol solution) was added and the inside of a system was sufficiently replaced with nitrogen gas. After the inside pressure of the system was reduced, 5.2 g of $CF_3I$ was introduced through the valve, and after heating of the system up to 45°C, VdF was introduced until the inside pressure of the system became 0.8 MPaG. While maintaining the inside pressure and temperature of the system at 0.8 MPaG and 45°C, respectively, VdF was continuously introduced and 9-hour reaction was carried out.

After completion of the reaction, the inside temperature of the system was decreased to 25°C and the unreacted substances (VdF and $CF_3I$) were released. Then the precipitated solid reaction product (hereinafter referred to as "VdF polymer") was taken out and subjected to vacuum drying in a desiccator until a constant weight was reached, and 13.2 g of VdF polymer was obtained.

With respect to this VdF polymer, a number average degree of polymerization (n) of VdF obtained by $^{19}F$-NMR analysis was 8.1. An abnormal bonding ratio was 4.0 %, and Mw/Mn was 1.06.

With respect to this VdF polymer, IR analysis and powder X-ray diffraction analysis were carried out. As a result, only a peak which was characteristic to I-form crystal structure was recognized and it was confirmed that the VdF polymer was one having all-I-form crystal structure (cf. Fig. 6).

(1-2) Synthesis of $CF_3(VdF)_{5.2}I$ (n=5.2)

Into a 300 ml stainless steel autoclave equipped with a valve, pressure gauge and thermometer was poured 50 g of HCFC-225, and while cooling with a dry ice/methanol solution, 0.53 g of di-n-propylperoxy dicarbonate (50 % by weight methanol solution) was added and the inside of a system was sufficiently replaced with nitrogen gas. After the inside pressure of the system was reduced, 5.4 g of $CF_3I$ was introduced through the valve, and after heating of the system up to 45°C, VdF was introduced until the inside pressure of the system became 0.8 MPaG. While maintaining the inside pressure and temperature of the system at 0.8 MPaG and 45°C, respectively, VdF was continuously introduced and 7.5-hour reaction was carried out.

After completion of the reaction, the inside temperature of the system was decreased to 25°C and the unreacted substances (VdF and $CF_3I$) were released. Then the precipitated solid reaction product (VdF polymer) was taken out and subjected to vacuum drying in a desiccator until a constant weight was reached, and 10.0 g of VdF polymer was obtained.

With respect to this VdF polymer, a number average degree of polymerization (n) of VdF obtained by $^{19}F$-NMR analysis was 5.2. An abnormal bonding ratio was 4.3 %, and Mw/Mn was 1.08.

With respect to this VdF polymer, IR analysis and powder X-ray diffraction analysis were carried out. As a result, only a peak which was characteristic to I-form crystal structure was recognized and it was confirmed that the VdF polymer was one having all-I-form crystal structure.

(1-3) Synthesis of $CF_3(VdF)_{10.1}I$ (n=10.1)

Into a 300 ml stainless steel autoclave equipped with a valve, pressure gauge and thermometer was poured 50 g of HCFC-225, and while cooling with a dry ice/methanol solution, 0.53 g of di-n-propylperoxy dicarbonate (50 % by weight methanol solution) was added and the inside of a system was sufficiently replaced with nitrogen gas. After the inside pressure of the system was reduced, 5.2 g of $CF_3I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 12-hour reaction was carried out.

After completion of the reaction, the inside temperature of the system was decreased to 25˚C and the unreacted substances (VdF and $CF_3I$) were released. Then the precipitated solid reaction product (VdF polymer) was taken out and subjected to vacuum drying in a desiccator until a constant weight was reached, and 13.4 g of VdF polymer was obtained.

With respect to this VdF polymer, a number average degree of polymerization (n) of VdF obtained by $^{19}F$-NMR analysis was 10.1. An abnormal bonding ratio was 3.9 %, and Mw/ Mn was 1.08.

With respect to this VdF polymer, IR analysis and powder X-ray diffraction analysis were carried out. As a result, only a peak which was characteristic to I-form crystal structure was recognized and it was confirmed that the VdF polymer was one having all-I-form crystal structure.

(1-4) Synthesis of $CF_3(VdF)_{11.0}I$ (n=11.0)

Into a 300 ml stainless steel autoclave equipped with a valve, pressure gauge and thermometer was poured 50 g of HCFC-225, and while cooling with a dry ice/methanol solution, 0.38 g of di-n-propylperoxy dicarbonate (50 % by weight methanol solution) was added and the inside of a system was sufficiently replaced with nitrogen gas. After the inside pressure of the system was reduced, 3.5 g of $CF_3I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 9-hour reaction was carried out.

After completion of the reaction, the inside temperature of the system was decreased to 25˚C and the unreacted substances (VdF and $CF_3I$) were released. Then the precipitated solid reaction product (VdF polymer) was taken out and subjected to vacuum drying in a desiccator until a constant weight was reached, and 11.2 g of VdF polymer was obtained.

With respect to this VdF polymer, a number average degree of polymerization (n) of VdF obtained by $^{19}F$-NMR analysis was 11.0. An abnormal bonding ratio was 4.4 %, and Mw/Mn was 1.13.

With respect to this VdF polymer, IR analysis was carried out. As a result, both of peaks which were characteristic to I-form and II-form crystal structures were recognized and it was confirmed that I-form crystal structures and II-form crystal structures were mixed. Further the calculated content (F(I)) of I-form crystal structures was 85 % by weight.

(1-5) Synthesis of $CF_3(VdF)_{18.4}I$ (n=18.4)

Into a 300 ml stainless steel autoclave equipped with a valve, pressure gauge and thermometer was poured 50 g of HCFC-225, and while cooling with a dry ice / methanol solution, 0.16 g of di-n-propylperoxy dicarbonate (50 % by weight methanol solution) was added and the inside of a system was sufficiently replaced with nitrogen gas. After the inside pressure of the system was reduced, 1.5 g of $CF_3I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 9-hour reaction was carried out.

After completion of the reaction, the inside temperature of the system was decreased to 25˚C and the unreacted substances (VdF and $CF_3I$) were released. Then the precipitated solid reaction product (VdF polymer) was taken out and subjected to vacuum drying in a desiccator until a constant weight was reached, and 7.9 g of VdF polymer was obtained.

With respect to this VdF polymer, a number average degree of polymerization (n) of VdF obtained by $^{19}F$-NMR analysis was 18.4. An abnormal bonding ratio was 3.8 %, and Mw/Mn was 1.17.

With respect to this VdF polymer, IR analysis was carried out. As a result, both of peaks which were characteristic to I-form and II-form crystal structures were recognized and it was confirmed that I-form crystal structures and II-form crystal structures were mixed. Further the calculated content (F(I)) of I-form crystal structures was 18 % by weight.

(1-6) Synthesis of $CF_3(VdF)_{14.6}I$ (n=14.6)

Into a 300 ml stainless steel autoclave equipped with a valve, pressure gauge and thermometer was poured 50 g of HCFC-225, and while cooling with a dry ice/methanol solution, 0.27 g of di-n-propylperoxy dicarbonate (50 % by weight methanol solution) was added and the inside of a system was sufficiently replaced with nitrogen gas. After the inside pressure of the system was reduced, 2.5 g of $CF_3I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 9-hour reaction was carried out.

After completion of the reaction, the inside temperature of the system was decreased to 25˚C and the unreacted substances (VdF and $CF_3I$) were released. Then the precipitated solid reaction product (VdF polymer) was taken out and subjected to vacuum drying in a desiccator until a constant weight was reached, and 12.2 g of VdF polymer was obtained.

With respect to this VdF polymer, a number average degree of polymerization (n) of VdF obtained by $^{19}F$-NMR analysis was 14.6. An abnormal bonding ratio was 4.1 %, and Mw/Mn was 1.14.

With respect to this VdF polymer, IR analysis was carried out. As a result, both of peaks which were characteristic to I-form and II-form crystal structures were recognized and it was confirmed that I-form crystal structures and II-form crystal structures were mixed. Further the calculated content (F(I)) of I-form crystal structures was 60 % by weight.

(1-7) Synthesis and separation of $CF_3(VdF)_3I$ (n=3)

Into a 300 ml stainless steel autoclave equipped with a valve, pressure gauge and thermometer was poured 500 g of HCFC-225, and while cooling with a dry ice/methanol solution, 21 g of di-n-propylperoxy dicarbonate (50 % by weight methanol solution) was added and the inside of a system was sufficiently replaced with nitrogen gas. After the inside pressure of the system was reduced, 200 g of $CF_3I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 3.5-hour reaction was carried out.

After completion of the reaction, the inside temperature of the system was decreased to 25˚C and the unreacted substances (VdF and $CF_3I$) were released. Then the precipitated solid reaction product was filtered off and a filtrate was subjected to fractional distillation under reduced pressure (5 mmHg). The distillate of 55˚C was analyzed by $^{19}F$-NMR analysis and the obtained number average degree of polymerization (n) of the distillate of 55˚C was 3. The polymer of n=3 was in the form of liquid at 25˚C.

(1-8) Synthesis of a mixture of I-form crystal structures of $CF_3(VdF)_{8.1}I$ (n=8.1) and III-form crystal structures

3 g of the VdF polymer powder having all-I-form crystal structure of $CF_3(VdF)_{8.1}I$ (n=8.1 ) synthesized in (1-1) above was put in a petri dish, and the dish was placed in a desiccator. The powder was heated at 200˚C for one hour and completely melted. Then the dish was taken out from the desiccator and allowed to stand at 25˚C for rapid cooling to 25˚C.

With respect to the obtained VdF polymer, IR analysis was carried out. As a result, both of peaks which were characteristic to I-form and III-form crystal structures were recognized and it was confirmed that I-form crystal structures and III-form crystal structures were mixed. Further the calculated content (F(I)) of I-form crystal structures was 67 % by weight (cf. Fig. 7).

PREPARATION EXAMPLE 2

(Synthesis of $CF_3CF_2(VdF)_nI$)

(2-1) Synthesis of $CF_3CF_2(VdF)_{10.9}I$ (n=10.9)

Into a 300 ml stainless steel autoclave equipped with a valve, pressure gauge and thermometer was poured 50 g of HCFC-225, and while cooling with a dry ice/methanol solution, 0.08 g of di-n-propylperoxy dicarbonate (50 % by weight methanol solution) was added and the inside of a system was sufficiently replaced with nitrogen gas. After the inside pressure of the system was reduced, 1.96 g of $CF_3CF_2I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 9-hour reaction was carried out.

After completion of the reaction, the inside temperature of the system was decreased to 25˚C and the unreacted substances (VdF and $CF_3CF_2I$) were released. Then the precipitated solid reaction product (VdF polymer) was taken out and subjected to vacuum drying in a desiccator until a constant weight was reached, and 7.3 g of VdF polymer was obtained.
With respect to this VdF polymer, a number average degree of polymerization (n) of VdF obtained by $^{19}F$-NMR analysis was 10.9. Also Mw/Mn was 1.10.
With respect to this VdF polymer, IR analysis was carried out. As a result, both of peaks which were characteristic to II-form and III-form crystal structures were recognized and it was confirmed that II-form crystal structures and III-form crystal structures were mixed. Further the calculated content (F(III)) of III-form crystal structures was 57 % by weight (cf. Fig. 8).

PREPARATION EXAMPLE 3

(Synthesis of $I(VdF)_nC_4F_8(VdF)_mI$)

(3-1) Synthesis of $I(VdF)_n(CF_2CF_2)_2(VdF)_mI$ (n+m=8.7)

Into a 300 ml stainless steel autoclave equipped with a valve, pressure gauge and thermometer was poured 50 g of HCFC-225, and while cooling with a dry ice/methanol solution, 0.27 g of di-n-propylperoxy dicarbonate (50 % by weight methanol solution) was added and the inside of a system was sufficiently replaced with nitrogen gas. After the inside pressure of the system was reduced, 1.96 g of $I(CF_2CF_2)_2I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 9-hour reaction was carried out.
After completion of the reaction, the inside temperature of the system was decreased to 25˚C and the unreacted substances (VdF and $I(CF_2CF_2)_2I$) were released. Then after the precipitated solid reaction product (VdF polymer) was taken out by filtration and washed with HCFC-225, the product was subjected to vacuum drying in a desiccator until a constant weight was reached, and 8.8 g of VdF polymer was obtained.
With respect to this VdF polymer, a number average degree of polymerization (n+m) of VdF obtained by $^{19}F$-NMR analysis was 8.7. Also Mw/ Mn was 1.03.
With respect to this VdF polymer, IR analysis was carried out. As a result, both of peaks which were characteristic to I-form and II-form crystal structures were recognized and it was confirmed that I-form crystal structures and II-form crystal structures were mixed. Further the calculated content (F(I)) of I-form crystal structures was 79 % by weight (cf. Fig. 9).

(3-2) Synthesis of $I(VdF)_n(CF_2CF_2)_2(VdF)_mI$ (n+m=10.4)

Into a 300 ml stainless steel autoclave equipped with a valve, pressure gauge and thermometer was poured 50 g of HCFC-225, and while cooling with a dry ice/methanol solution, 0.162 g of di-n-propylperoxy dicarbonate (50 % by weight methanol solution) was added and the inside of a system was sufficiently replaced with nitrogen gas. After the inside pressure of the system was reduced, 3.5 g of $I(CF_2CF_2)_2I$ was introduced through the valve, and after heating of the system up to 45˚C, VdF was introduced until the inside pressure of the system became 0.8 MPaG. While maintaining the inside pressure and temperature of the system at 0.8 MPaG and 45˚C, respectively, VdF was continuously introduced and 9-hour reaction was carried out.
After completion of the reaction, the inside temperature of the system was decreased to 25˚C and the unreacted substances (VdF and $I(CF_2CF_2)_2I$) were released. Then after the precipitated solid reaction product (VdF polymer) was taken out by filtration and washed with HCFC-225, the product was subjected to vacuum drying in a desiccator until a constant weight was reached, and 7.2 g of VdF polymer was obtained.
With respect to this VdF polymer, a number average degree of polymerization (n+m) of VdF obtained by $^{19}F$-NMR analysis was 10.4. Also Mw/ Mn was 1.04.
With respect to this VdF polymer, IR analysis was carried out. As a result, both of peaks which were characteristic to I-form and II-form crystal structures were recognized and it was confirmed that I-form crystal structures and II-form crystal structures were mixed. Further the calculated content (F(I)) of I-form crystal structures was 70 % by weight.

PREPARATION EXAMPLE 4

(Hydroxyl group end)

Into a 100 ml three-necked flask equipped with a reflux condenser and thermometer were poured 3.0 g of $CF_3(VdF)_{8.1}I$ (n=8.1) of all-I-form crystal structure obtained in Preparation Example (1-1), 30 ml of ethyl acetate, 0.12 g of AIBN, 15.4 ml of pure water and 2.20 g of allyl alcohol, and while cooling with a dry ice/methanol solution, the inside of a system was sufficiently replaced with nitrogen gas. While maintaining the inside of the system at 65˚C, 5-hour reaction was carried out.

After completion of the reaction, the inside temperature of the system was decreased to 25˚C, and after distilling off and filtering ethyl acetate under reduced pressure, a solid reaction product was obtained. The solid reaction product was subjected to vacuum drying in a desiccator until a constant weight was reached, and 2.2 g of product was obtained.

According to $^1$H-NMR and $^{19}$F-NMR analyses of this solid reaction product, it was recognized by $^{19}$F-NMR that the peak around -38 ppm derived from the end $-CF_2I$ had been disappeared significantly, and peaks derived from the added allyl alcohol were observed around 4.4 to 3.5 ppm and 4.0 to 3.7 ppm by $^1$H-NMR.

From this, it was confirmed that the solid reaction product was a VdF polymer/ally alcohol adduct. In this case, an end modification ratio obtained by $^1$H-NMR was 90 %.

According to IR analysis and powder X-ray diffraction analysis, only a peak which was characteristic to I-form crystal structure was recognized and it was confirmed that the adduct was one having all-I-form crystal structure.

Then into a 200 ml stainless steel autoclave equipped with a valve, pressure gauge and thermometer were poured 6 g of the obtained VdF polymer/ally alcohol adduct, 30 ml of ethyl acetate, 0.05 g of platinum oxide, 2.8 g of triethylamine and 7.0 g of acetic acid, and the inside of a system was sufficiently replaced with nitrogen gas. After the inside pressure of the system was reduced, hydrogen gas was introduced through the valve until the inside pressure of the system became 0.5 MPaG. While maintaining the inside pressure and temperature of the system at 0.5 MPaG and 25˚C, respectively, hydrogen gas was continuously introduced and 5-hour reaction was carried out.

After completion of the reaction, the unreacted hydrogen gas was released, the platinum oxide was removed by filtration under reduced pressure, and the ethyl acetate was distilled off under reduced pressure. The thus obtained acetic acid solution of the reaction product was poured into pure water, and the solid reaction product was obtained by re-precipitation. The solid reaction product was subjected to filtration and then vacuum drying in a desiccator until a constant weight was reached, and 3.5 g of product was obtained.

According to $^1$H-NMR analysis of this solid reaction product, it was recognized that the peaks of 4.4 to 3.5 ppm and 4.0 to 3.7 ppm derived from the added allyl alcohol had been disappeared, and peaks of 3.8 to 3.5 ppm and 1.9 to 1.6 ppm generated by reduction of iodine were observed. In this case, an end modification ratio obtained by $^1$H-NMR was 95 %.

From this, it was confirmed that the solid reaction product was a VdF polymer having hydroxyl group at its end.

According to IR analysis and powder X-ray diffraction analysis of this VdF polymer having hydroxyl group at its end, only a peak which was characteristic to I-form crystal structure was recognized and it was confirmed that the polymer was one containing all-I-form crystal structure and having hydroxyl group at its end (cf. Fig. 10).

PREPARATION EXAMPLE 5

(Mercapto group end)

Into a 300 ml stainless steel autoclave equipped with a valve, pressure gauge and thermometer were poured 3 g of $CF_3(VdF)_{8.1}I$ (n=8.1) of all-I-form crystal structure obtained in Preparation Example (1-1), 30 g of ethyl acetate and 0.034 g of AIBN, and the inside of a system was sufficiently replaced with nitrogen gas. The inside pressure of the system was decreased while maintaining the inside temperature of the system at 25˚C. Then after heating of the system up to 65˚C, ethylene gas was introduced until the inside pressure of the system became 0.7 MPaG. While maintaining the inside pressure and temperature of the system at 0.7 MPaG and 65˚C, respectively, ethylene gas was continuously introduced and 5-hour reaction was carried out.

After completion of the reaction, the inside temperature of the system was decreased to 25˚C and the unreacted ethylene gas was released. Then the ethyl acetate solution in the system was poured into hexane, and the precipitated solid reaction product was taken out by filtration. The solid reaction product was subjected to vacuum drying in a desiccator until a constant weight was reached, and 2.7 g of product was obtained.

According to $^1$H-NMR and $^{19}$F-NMR analyses of this solid reaction product, it was recognized by $^{19}$F-NMR that the peak around -38 ppm derived from the end $-CF_2I$ had been disappeared significantly, and peaks derived from the added ethylene were observed around 3.4 to 3.2 ppm and 2.8 to 2.6 ppm by $^1$H-NMR.

From this, it was confirmed that the solid reaction product was a VdF polymer/ethylene adduct. In this case,

an end modification ratio obtained by $^1$H-NMR was 97 %.

According to powder X-ray diffraction analysis of the obtained VdF polymer/ ethylene adduct, only a peak which was characteristic to I-form crystal structure was recognized and it was confirmed that the adduct was one having all-I-form crystal structure.

Then into a 50 ml three-necked flask equipped with a reflux condenser and thermometer were poured 3 g of the obtained VdF polymer/ethylene adduct, 4.8 g of dimethylformamide and 15 ml of DMF, and the inside of a system was sufficiently replaced with nitrogen gas. Then the inside of the system was heated up to 70˚C, and 3-hour reaction was carried out.

After completion of the reaction, the inside temperature of the system was decreased to 25˚C and 20 ml of 1M sodium bicarbonate solution was added, followed by stirring for 30 minutes. Then acetic acid was added inside the system to make it acid. After the solution of reaction product was poured into 100 ml of 1N hydrochloric acid and zinc powder was removed by filtration, the solution of reaction product was poured into pure water for re-precipitation and was taken out. The solid reaction product was subjected to filtration and then vacuum drying in a desiccator until a constant weight was reached, and 2.3 g of product was obtained.

According to $^1$H-NMR analysis of this solid reaction product, it was recognized that the peak of 3.4 to 3.2 ppm derived from $-CH_2CH_2I$ had been disappeared, and instead, peak of 1.6 to 1.5 ppm derived from -SH and peaks of 2.8 to 2.6 ppm and 2.5 to 2.3 ppm derived from $-CF_2CH_2CH_2-$ were observed.

From this, it was confirmed that the solid reaction product was a VdF polymer having mercapto group at its end. In this case, an end modification ratio obtained by $^1$H-NMR was 90 %.

According to powder X-ray diffraction analysis of this VdF polymer having mercapto group at its end, only a peak which was characteristic to I-form crystal structure was recognized and it was confirmed that the polymer was one containing all-I-form crystal structure and having mercapto group at its end (cf. Fig. 11).

PREPARATION EXAMPLE 6

(Vinyl end)

Into a 200 ml three-necked flask equipped with a reflux condenser and thermometer were poured 5 g of the VdF polymer/ allyl alcohol adduct of all-I-form crystal structure obtained in Preparation Example 4, 80 ml of acetic acid and 14.6 g of zinc powder, followed by heating and refluxing for four hours.

After completion of the reaction, the inside temperature of the system was decreased to 25˚C and zinc powder was removed by filtration, the acetic acid solution of reaction product was poured into pure water for re-precipitation and was taken out. The solid reaction product was subjected to vacuum drying in a desiccator until a constant weight was reached, and 2.8 g of product was obtained.

According to $^1$H-NMR analysis of this solid reaction product, it was recognized that the peaks of 4.4 to 3.5 ppm and 4.0 to 3.7 ppm derived from added allyl alcohol had been nearly disappeared, and peaks derived from double bond were observed at 5.8 to 5.6 ppm and 5.3 to 5.0 ppm.

From this, it was confirmed that the solid reaction product was a VdF polymer having vinyl group at its end. In this case, an end modification ratio obtained by $^1$H-NMR was 95 %.

According to powder X-ray diffraction analysis of this VdF polymer having vinyl group at its end, only a peak which was characteristic to I-form crystal structure was recognized and it was confirmed that the polymer was one containing all-I-form crystal structure.

PREPARATION EXAMPLE 7

(Organic silane end)

Into a 100 ml three-necked flask equipped with a reflux condenser and thermometer were poured 1 g of the VdF polymer having vinyl group at its end obtained in Preparation Example 6, 0.67 mg of 40 % by weight isopropanol solution of chloroplatinic acid, 2.6 g of triethoxysilane and 30 g of ethanol, followed by heating and refluxing for four hours.

After completion of the reaction, the inside temperature of the system was decreased to 25˚C, and the unreacted triethoxysilane and ethanol were distilled off by vacuum drying. The solid reaction product was subjected to vacuum drying in a desiccator until a constant weight was reached, and 0.8 g of product was obtained.

According to $^1$H-NMR analysis of this solid reaction product, it was recognized that the peaks of 5.8 to 5.6 ppm and 5.3 to 5.0 ppm derived from double bond had been nearly disappeared, and peaks derived from ethoxysilane were observed at 4.08 to 3.7 ppm and 1.3 to 1.1 ppm.

From this, it was confirmed that the solid reaction product was a VdF polymer having organic silane group at its end. In this case, an end modification ratio obtained by $^1$H-NMR was 92 %.

According to powder X-ray diffraction analysis of this VdF polymer having organic silane group at its end, only a peak which was characteristic to I-form crystal structure was recognized and it was confirmed that the polymer was one containing all-I-form crystal structure.

PREPARATION EXAMPLE 8

(Acryloyl group end)

Into a 50 ml three-necked flask equipped with a reflux condenser and thermometer were poured 1.0 g of the VdF polymer of all-I-form crystal structure having hydroxyl at its end and obtained in Preparation Example 4, 0.17 mg of pyridine and 20 ml of dehydrated THF, and while cooling with a dry ice/methanol solution, the inside of a system was sufficiently replaced with nitrogen gas. Then while maintaining the inside of the system at 30˚C, 1.31 g of acrylic acid chloride was added thereto dropwise, and 3-hour reaction was carried out.

After completion of the reaction, the content in the flask was poured into 1M sodium bicarbonate solution for re-precipitation, and a solid reaction product was obtained. The solid reaction product was subjected to vacuum drying in a desiccator until a constant weight was reached, and 0.7 g of product was obtained.

According to $^{1}$H-NMR analysis of this solid reaction product, a peak of 6.3 to 5.5 ppm derived from double bond of added acryl portion was observed.

From this, it was confirmed that the solid reaction product was a VdF polymer having acryloyl group ($-OCOCH=CH_2$) at its end. In this case, an end modification ratio obtained by $^{1}$H-NMR was 88 %.

Also according to IR analysis, only a peak which is characteristic to I-form crystal structure was observed and there was no change in the crystal structure before and after the reaction.

According to powder X-ray diffraction analysis of this VdF polymer having acryl group at its end, only a peak which was characteristic to I-form crystal structure was recognized and it was confirmed that the polymer was one containing all-I-form crystal structure and having acryloyl group ($-OCOCH=CH_2$) at its end (cf. Fig. 12).

PREPARATION EXAMPLE 9

(Hydroxyl groups at both ends)

3.0 g of $I(VdF)n(CF_2CF_2)_2(VdF)mI$ (n+m=8.7) of Preparation Example (3-1) containing 79 % by weight of I-form crystal structure, 30 ml of ethyl acetate, 0.33 g of AIBN, 15.4 ml of pure water and 6.10 g of allyl alcohol were poured, and while cooling with a dry ice/methanol solution, the inside of a system was sufficiently replaced with nitrogen gas. Then while maintaining the inside of the system at 65˚C, 3-hour reaction was carried out.

After completion of the reaction, the inside temperature of the system was decreased to 25˚C, and the ethyl acetate was distilled off under reduced pressure and filtrated under reduced pressure, and a solid reaction product was obtained. The solid reaction product was subjected to vacuum drying in a desiccator until a constant weight was reached, and 2.4 g of product was obtained.

According to $^{1}$H-NMR and $^{19}$F-NMR analyses of this solid reaction product, it was recognized by $^{19}$F-NMR that the peak around -38 ppm derived from the end $-CF_2I$ had been disappeared significantly, and peaks derived from the added allyl alcohol were observed around 4.4 to 3.5 ppm and 4.0 to 3.7 ppm by $^{1}$H-NMR.

From this, it was confirmed that the solid reaction product was a VdF polymer/allyl alcohol adduct. In this case, an end modification ratio obtained by $^{1}$H-NMR was 90 %.

Then into a 200 ml stainless steel autoclave equipped with a valve, pressure gauge and thermometer were poured 6 g of the obtained VdF polymer/ally alcohol adduct, 30 ml of ethyl acetate, 0.13 g of platinum oxide, 7.8 g of triethylamine and 19.4 g of acetic acid, and the inside of a system was sufficiently replaced with nitrogen gas. After the inside pressure of the system was reduced, hydrogen gas was introduced through the valve until the inside pressure of the system became 0.5 MPaG. While maintaining the inside pressure and temperature of the system at 0.5 MPaG and 25˚C, respectively, hydrogen gas was continuously introduced and 5-hour reaction was carried out.

After completion of the reaction, the unreacted hydrogen gas was released, the platinum oxide was removed by filtration under reduced pressure, and the ethyl acetate was distilled off under reduced pressure. The thus obtained acetic acid solution of the reaction product was poured into pure water, and the solid reaction product was obtained by re-precipitation. The solid reaction product was subjected to filtration and then vacuum drying in a desiccator until a constant weight was reached, and 4.5 g of product was obtained.

According to $^{1}$H-NMR analysis of this solid reaction product, it was recognized that the peaks of 4.4 to 3.5 ppm and 4.0 to 3.7 ppm derived from the added allyl alcohol had been nearly disappeared, and peaks of 3.8 to 3.5 ppm and 1.9 to 1.6 ppm generated by reduction of iodine were observed. In this case, an end modification ratio obtained by $^{1}$H-NMR was 92 %.

According to IR analysis and powder X-ray diffraction analysis of this VdF polymer having hydroxyl groups at ends thereof, it was observed that the polymer was a VdF polymer containing 79 % by weight of I-form crystal structures and having hydroxyl groups at both ends thereof.

PREPARATION EXAMPLE 10

(Mercapto groups at both ends)

Into a 300 ml stainless steel autoclave equipped with a valve, pressure gauge and thermometer were poured 3 g of $I(VdF)n(CF_2CF_2)_2(VdF)_mI$ (n+m=8.7) of Preparation Example (3-1) containing 79 % by weight of I-form crystal structure, 30 g of ethyl acetate and 0.094 g of AIBN, and the inside of a system was sufficiently replaced with nitrogen gas. Then while maintaining the inside of the system at 25˚C, the inside pressure was decreased and after heating of the system up to 65˚C, ethylene gas was introduced until the inside pressure of the system became 0.7 MPaG. While maintaining the inside pressure and temperature of the system at 0.7 MPaG and 65˚C, respectively, ethylene gas was continuously introduced and 5-hour reaction was carried out.

After completion of the reaction, the inside temperature of the system was decreased to 25˚C, and the unreacted ethylene gas was released. Then the ethyl acetate solution in the system was poured into hexane, and the precipitated solid reaction product was taken out by filtration. The solid reaction product was subjected to vacuum drying in a desiccator until a constant weight was reached, and 2.5 g of product was obtained.

According to $^1$H-NMR and $^{19}$F-NMR analyses of this solid reaction product, it was recognized by $^{19}$F-NMR that the peak around -38 ppm derived from the end $-CF_2I$ had been disappeared significantly, and peaks derived from the added ethylene were observed around 3.4 to 3.2 ppm and 2.8 to 2.6 ppm by $^1$H-NMR.

From this, it was confirmed that the solid reaction product was a VdF polymer/ethylene adduct. In this case, an end modification ratio obtained by $^1$H-NMR was 97 %.

Then into a 50 ml three-necked flask equipped with a reflux condenser and thermometer were poured 3 g of the obtained VdF polymer/ethylene adduct, 13.3 g of N,N-dimethylformamide and 15 ml of DMF, and the inside of a system was sufficiently replaced with nitrogen gas. Then the inside of the system was heated up to 70˚C, and 3-hour reaction was carried out.

After completion of the reaction, the inside temperature of the system was decreased to 25˚C and 20 ml of 1M sodium bicarbonate solution was added, followed by stirring for 30 minutes. Then acetic acid was added inside the system to make it acid After the solution of reaction product was poured into 100 ml of 1N hydrochloric acid and zinc powder was removed by filtration, the solution of reaction product was poured into pure water for re-precipitation and was taken out. The solid reaction product was subjected to filtration and then vacuum drying in a desiccator until a constant weight was reached, and 2.4 g of product was obtained.

According to $^1$H-NMR analysis of this solid reaction product, it was recognized that the peak of 3.4 to 3.2 ppm derived from $-CH_2CH_2I$ had been disappeared, and instead, peak of 1.6 to 1.5 ppm derived from -SH and peaks of 2.8 to 2.6 ppm and 2.5 to 2.3 ppm derived from $-CF_2CH_2CH_2-$ were observed.

From this, it was confirmed that the solid reaction product was a VdF polymer having mercapto groups at its ends. In this case, an end modification ratio obtained by $^1$H-NMR was 93 %.

According to IR analysis and powder X-ray diffraction analysis of this VdF polymer having mercapto groups at its ends, it was observed that the polymer was a VdF polymer containing 79 % by weight of I-form crystal structures and it was confirmed that the polymer was a VdF polymer having mercapto groups at both ends thereof.

PREPARATION EXAMPLE 11

(Acryloyl groups at both ends)

Into a 50 ml three-necked flask equipped with a reflux condenser and thermometer were poured 1.35 g of the VdF polymer of Preparation Example 9 containing 79 % by weight of I-form crystal structures and having hydroxyl groups at both ends thereof, 0.34 g of pyridine and 20 ml of dehydrated THF, and while cooling with a dry ice/methanol solution, the inside of a system was sufficiently replaced with nitrogen gas. Then while maintaining the inside of the system at 30˚C, 2.62 g of acrylic acid chloride was added thereto dropwise and 3-hour reaction was carried out.

After completion of the reaction, the contents in the system was poured into 1M sodium bicarbonate solution for re-precipitation and a solid reaction product was obtained. The solid reaction product was subjected to vacuum drying in a desiccator until a constant weight was reached, and 1.0 g of product was obtained.

According to $^1$H-NMR analysis of this solid reaction product, a peak of 6.3 to 5.5 ppm derived from the double bond of the added acryl moiety was observed.

From this, it was confirmed that the solid reaction product was a VdF polymer having acryloyl groups (-

$OCOCH=CH_2$) at both ends thereof. In this case, an end modification ratio obtained by $^1$H-NMR was 90 %.

According to IR analysis, it was observed that the polymer was a VdF polymer containing 79 % by weight of I-form crystal structures and there was no change in the crystal structure before and after the reaction.

PREPARATION EXAMPLE 12

(Oligomer adduct modified with acrylic end)

Into a 10 ml three-necked flask equipped with a reflux condenser, thermometer and stirrer were poured 400 mg of $CF_3(VdF)_3CH_2CH_2CH_2OCOCH=CH_2$, 5 ml of benzene and 24 mg of AIBN, and while cooling with a dry ice/methanol solution, the inside of a system was sufficiently replaced with nitrogen gas. Then while maintaining the inside of the system at 65˚C, 23-hour reaction was carried out.

After completion of the reaction, the inside temperature of the system was decreased to 25˚C, the benzene solution of the reaction product was subjected to vacuum drying until a constant weight was reached, and a solid reaction product was obtained.

According to $^1$H-NMR analysis of this solid reaction product, the peak of 6.3 to 5.5 ppm derived from the double bond of the end acryl moiety had been nearly disappeared. Also according to GPC measurement, it was confirmed that a polymer had been produced (Mn=8,000, Mw=8,300).

From this, it was confirmed that the acrylic end of vinylidene fluoride oligomers had been polymerized by addition reaction. In this case, an end modification ratio obtained by $^1$H-NMR was 84 %.

Out of this solid reaction product, only polymers were taken out by recycle GPC, and applied on a Si substrate by spin coating to form a thin film. According to powder X-ray diffraction analysis of the obtained thin film, a peak which was characteristic to I-form crystal structure was observed and it was confirmed that the polymer was one having all-I-form crystal structure (cf. Fig. 13).

EXAMPLE 1

(Formation of a thin film of VdF polymer of I-form crystal structure having functional group at its end by spin coating method)

The VdF polymers of I-form crystal structure having functional group at an end thereof which were prepared in Preparation Examples 5, 6, 7, 8, 10 and 11 were dissolved in MEK to make 10 % by weight MEK solutions and were applied to a silicon substrate at a rotational speed of 2,000 rpm by a spin coating method to form thin films. Then the solvent was distilled off in a desiccator to form a 2 to 3 μm thick thin film of VdF polymer of all-I-form crystal structure.

The spin coating was carried out under the following condition by using the following equipment.

Coating condition:

Number of revolutions: 2,000 rpm Equipment: MIKASA SPINCOATER 1H-D7 available from Mikasa Kabushiki Kaisha

With respect to the obtained laminated article having VdF polymer thin film, a proportion of the VdF homopolymers having I-form crystal structure in the thin film was measured by IR analysis, it could be confirmed that the homopolymers were of all-I-form crystal structure type like the coated VdF polymer of I-form crystal structure having functional group at its end.

A cross-cut test (JIS K5600) was carried out.

EXAMPLE 2

(Formation of thin film of VdF polymer of I-form crystal structure having functional group at its end by vacuum vapor deposition method)

A 200 μm thick thin film of VdF polymer of all-I-form crystal structure was formed on a silicon substrate by vacuum vapor deposition method by using powder of the VdF polymer of all-I-form crystal structure having functional group at its end which was prepared in Preparation Example 4.

The vacuum vapor deposition was carried out under the following condition by using the following equipment.

Vapor deposition condition:

Substrate temperature: 25˚C

Equipment:

Organic thin film forming equipment available from Jyonan Kogyo Kabushiki Kaisha

EXAMPLE 3

(Formation of self-organized thin film)

A 0.1 % by weight ethyl acetate solution of the VdF polymer having mercapto group at its end which was prepared in Preparation Example 5 was applied to a surface of a quartz oscillation panel of a film thickness evaluation system (TM-350/400) available from Maxtek, Inc. which was subjected to vacuum vapor deposition of gold thin film. The formation of thin film was observed while monitoring a frequency. As the thickness increased, the frequency was decreased, and the formation of self-organized film was confirmed.

EXAMPLE 4

(Formation of ferroelectric thin film of VdF polymer)

A thin film of VdF polymer of all-I-form crystal structure having functional group at its end which was prepared in Preparation Example 6 was formed on an aluminum electrode, and vacuum vapor deposition of aluminum was carried out by usual method on the thin film of VdF polymer as a second electrode.

The obtained laminated article was subjected to polarization under the following conditions.

Thin film temperature: 25˚C
Applied voltage: 200 MV/m
Treating time: 30 minutes

With respect to the thin film of VdF polymer of all-I-form crystal structure having functional group at its end which was subjected to polarization, electrical characteristics were evaluated, and as a result, the obtained D-E hysteresis curve showed a rectangular shape specific to ferroelectric materials.

INDUSTRIAL APPLICABILITY

According to the present invention, there can be provided a method of forming a thin film of vinylidene fluoride homopolymer of I-form crystal structure which has various functions and is applicable to various substrates. In this method, a thin film of vinylidene fluoride homopolymer of I-form crystal structure can be formed on various substrates not only by conventional methods but also in relatively easy way (coating conditions, application method, etc.).

## Claims

**1.** A method of forming a thin film of vinylidene fluoride homopolymer comprising I-form crystal structure alone or as main component, the method comprises applying, on a substrate, a vinylidene fluoride homopolymer which contains, at one end or both ends thereof, a moiety represented by the formula (1):

$$-(R^1)_n-Y \qquad (1)$$

wherein $R^1$ is a divalent organic group but does not contain a structural unit of the vinylidene fluoride homopolymer; n is 0 or 1; Y is a functional group, and has a number average degree of polymerization of vinylidene fluoride homopolymer unit of 3 to 100, to form a thin film of the vinylidene fluoride homopolymer comprising I-form crystal structure alone or as main component.

**2.** The method of forming a thin film of Claim 1, wherein in the vinylidene fluoride homopolymers comprising I-form crystal structure alone or as main component, when attention is given to proportions of the respective vinylidene fluoride homopolymers having I-, II- or III-form crystal structure in the thin film of vinylidene fluoride homopolymer which are calculated by IR analysis, the proportion of vinylidene fluoride homopolymers having I-form crystal structure satisfies both of (Equation 1):

$$100 \geq \text{I-form}/(\text{I-form} + \text{II-form}) > 50\ \%\ \text{by weight} \qquad \text{(Equation 1)}$$

and (Equation 2):

$$100 \geq \text{I-form}/(\text{I-form} + \text{III-form}) > 50\ \%\ \text{by weight} \qquad \text{(Equation 2).}$$

**3.** The method of forming a thin film of Claim 1 or 2, wherein Y in the formula (1) is a functional group which can impart, to the vinylidene fluoride homopolymer, adhesion to the substrate of organic material and/or inorganic material.

**4.** The method of forming a thin film of Claim 1 or 2, wherein Y in the formula (1) is a functional group which can make self-organization of vinylidene fluoride homopolymer possible on the surface of the substrate of organic material and/or inorganic material.

**5.** The method of forming a thin film of Claim 1 or 2, wherein Y in the formula (1) is a functional group which can bond vinylidene fluoride homopolymers each other.

**6.** The method of forming a thin film of Claim 4, wherein Y in the formula (1) is $-CH=CH_2$, -SH and/or $-SiX_{3-n}R^6_n$ (n is 0 or an integer of 1 or 2; $R^6$ is $CH_3$ or $C_2H_5$; X is $-OR^7$, -COOH, $-COOR^7$, $-NH_{3-m}R^7_m$, -OCN or halogen atom ($R^7$ is $CH_3$, $C_2H_5$ or $C_3H_7$, m is 0 or an integer of 1 to 3)).

**7.** The method of forming a thin film of Claim 5, wherein Y in the formula (1) is $-CH=CH_2$, $-OCOCH=CH_2$, $-OCOCF=CH_2$, $-OCOC(CH_3)=CH_2$ or $-OCOCCl=CH_2$.

**8.** A laminated article which has, on a substrate, a self-organized thin film formed by using vinylidene fluoride homopolymers comprising I-form crystal structure alone or as main component and having a number average degree of polymerization of vinylidene fluoride homopolymer unit of 3 to 100.

**9.** A laminated article which has, on a substrate, a thin film formed by bonding of vinylidene fluoride homopolymers comprising I-form crystal structure alone or as main component and having a number average degree of polymerization of vinylidene fluoride homopolymer unit of 3 to 100.

**10.** The laminated article of Claim 8 or 9, wherein in the vinylidene fluoride homopolymers comprising I-form crystal structure alone or as main component, when attention is given to proportions of the respective vinylidene fluoride homopolymers having I-, II- or III-form crystal structure in the thin film of vinylidene fluoride homopolymer which are calculated by IR analysis, the proportion of vinylidene fluoride homopolymers having I-form crystal structure satisfies both of (Equation 1):

$$100 \geq \text{I-form}/(\text{I-form} + \text{II-form}) > 50\ \%\ \text{by weight} \qquad \text{(Equation 1)}$$

and (Equation 2):

$$100 \geq \text{I-form}/(\text{I-form} + \text{III-form}) > 50\ \%\ \text{by weight} \qquad \text{(Equation 2).}$$

**11.** The laminated article of Claim 8, wherein the self-organized film formed by using the vinylidene fluoride homopolymers comprising I-form crystal structure alone or as main component is formed by using vinylidene fluoride homopolymers having a number average degree of polymerization of vinylidene fluoride homopolymer unit of 3 to 100 and containing, at one end or both ends thereof, a moiety represented by the formula (1-1):

$$-(R^1)_n-Y^1 \qquad (1\text{-}1)$$

wherein $R^1$ is a divalent organic group but does not contain a structural unit of the vinylidene fluoride homopolymer; n is 0 or 1; $Y^1$ is -SH and/or $-SiX_{3-n}R^6{}_n$ (n is 0 or an integer of 1 or 2; $R^6$ is $CH_3$ or $C_2H_5$; X is $-OR^7$, -COOH, $-COOR^7$, $-NH_{3-m}R^7{}_m$, -OCN or halogen atom ($R^7$ is $CH_3$, $C_2H_5$ or $C_3H_7$, m is 0 or an integer of 1 to 3)).

**12.** The laminated article of Claim 9, wherein the thin film formed by bonding of the vinylidene fluoride homopolymers comprising I-form crystal structure alone or as main component is formed by using vinylidene fluoride homopolymers having a number average degree of polymerization of vinylidene fluoride homopolymer unit of 3 to 100 and containing, at one end or both ends thereof, a moiety represented by the formula (1-2):

$$-(R^1)_n-Y^2 \qquad (1\text{-}2)$$

wherein $R^1$ is a divalent organic group but does not contain a structural unit of the vinylidene fluoride homopolymer; n is 0 or 1; $Y^2$ is $-CH{=}CH_2$, $-OCOCH{=}CH_2$, $-OCOCF{=}CH_2$, $-OCOC(CH_3){=}CH_2$ or $-OCOCCl{=}CH_2$.

**13.** A ferroelectric device comprising the laminated article of any of Claims 8 to 12.

**14.** A vinylidene fluoride homopolymer represented by the formula (IA-2):

$$Z^1-(R^{10})_{n1}-A^1-(R^{11})_{n2}-S-M^1 \qquad (IA\text{-}2)$$

wherein $A^1$ is a structural unit of vinylidene fluoride homopolymers having a number average degree of polymerization of 3 to 100; $Z^1$ is a polyfluoroalkyl group or an alkyl group; $R^{10}$ and $R^{11}$ are the same or different and each is a divalent organic group but does not contain a vinylidene fluoride homopolymer unit comprising I-form crystal structure alone or as main component; n1 and n2 are the same or different and each is 0 or 1; $M^1$ is hydrogen atom or alkali metal atom.

**15.** A vinylidene fluoride homopolymer represented by the formula (IB-3):

$$M^2-S-(R^{12})_{n3}-A^2-R^2-A^3-(R^{13})_{n4}-S-M^3 \qquad (IB\text{-}3)$$

wherein $A^2$ and $A^3$ are the same or different and each is a structural unit of vinylidene fluoride homopolymers and a total number average degree of polymerization of $A^2$ and $A^3$ is from 3 to 100; $R^2$ is a divalent organic group but does not contain a structural unit of the vinylidene fluoride homopolymer; $R^{12}$ and $R^{13}$ are the same or different and each is a divalent organic group but does not contain a structural unit of the vinylidene fluoride homopolymer; n3 and n4 are the same or different and each is 0 or 1; $M^2$ and $M^3$ are the same or different and each is hydrogen atom or alkali metal atom.

FIG. 1

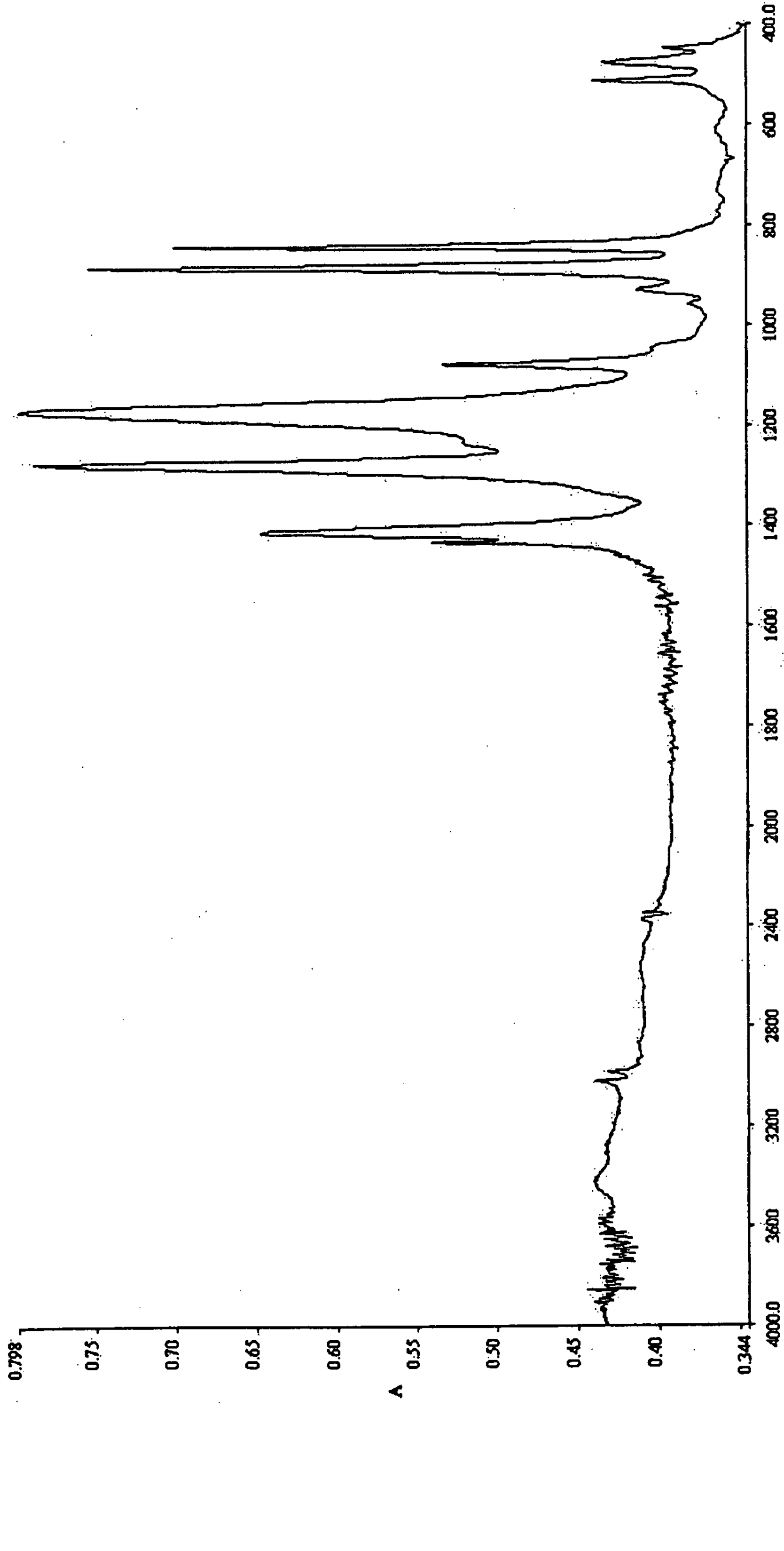
A
0.798
0.75
0.70
0.65
0.60
0.55
0.50
0.45
0.40
0.344
cm-1
4000.0
3600
3200
2800
2400
2000
1800
1600
1400
1200
1000
800
600
400.0

FIG. 2

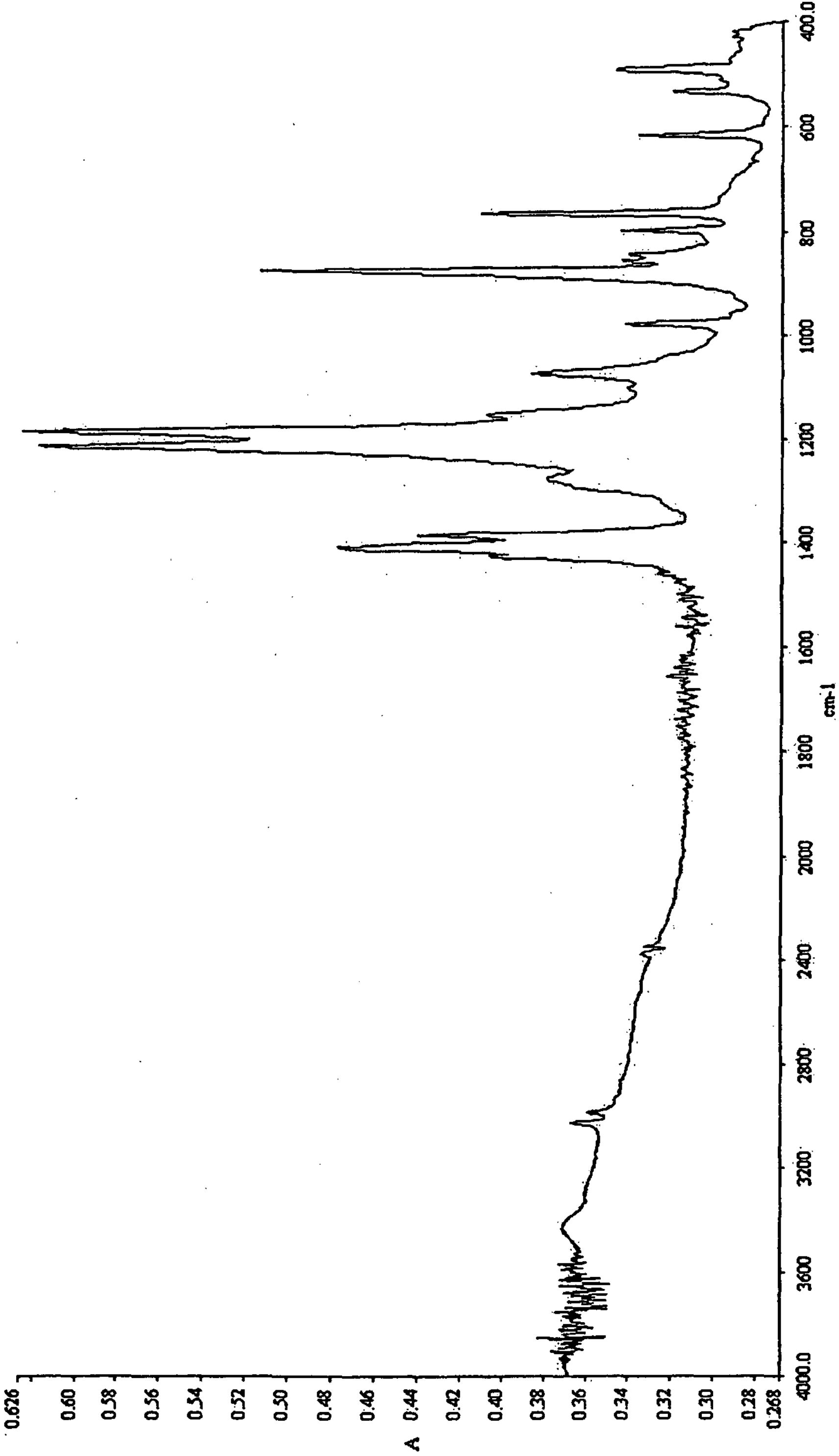
A
0.626
0.60
0.58
0.56
0.54
0.52
0.50
0.48
0.46
0.44
0.42
0.40
0.38
0.36
0.34
0.32
0.30
0.28
0.268
cm-1
4000.0
3600
3200
2800
2400
2000
1800
1600
1400
1200
1000
800
600
400.0

FIG. 3

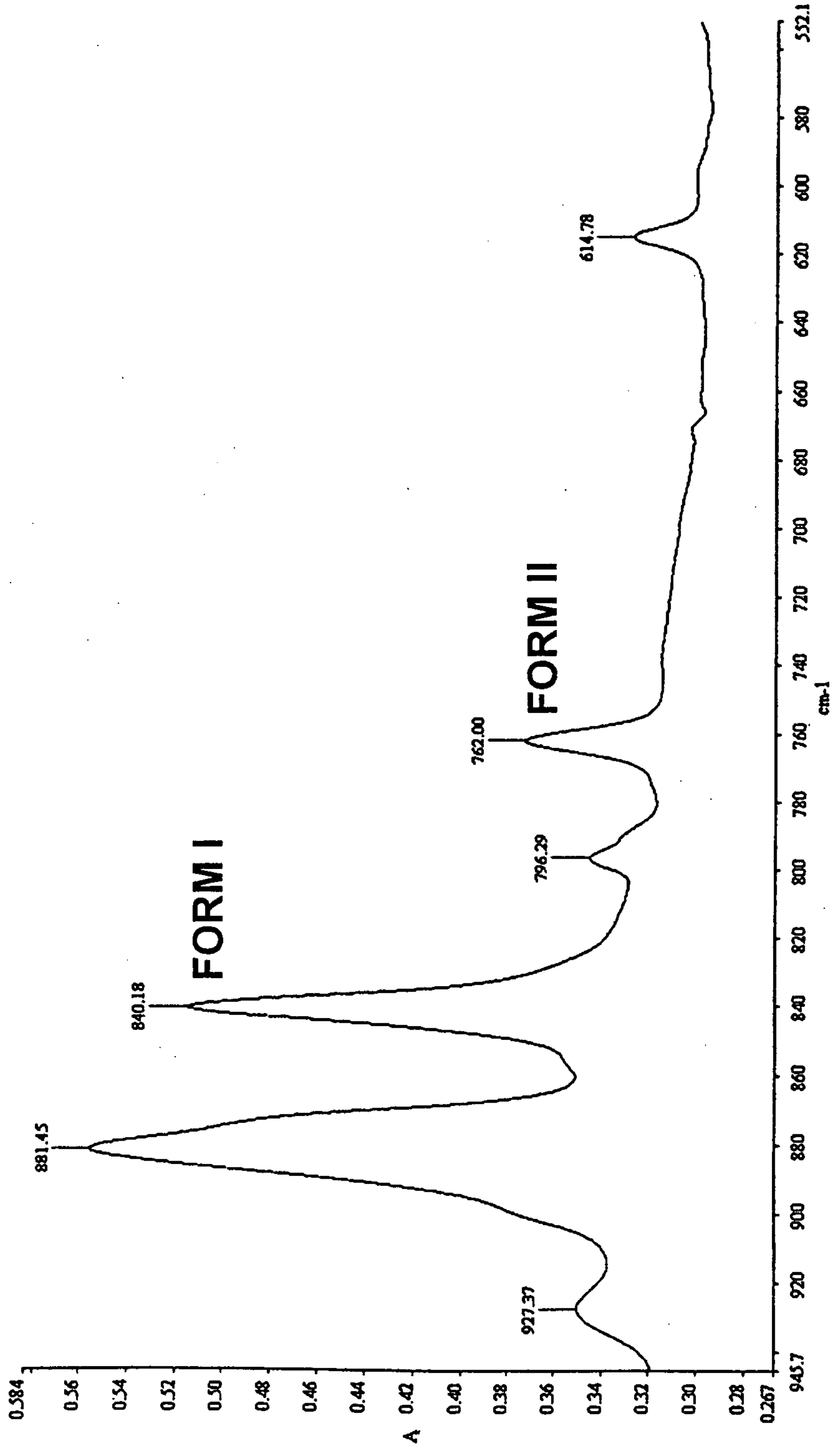

FORM I
FORM II
881.45
840.18
927.37
796.29
762.00
614.78
A
cm-1
945.7
920
900
880
860
840
820
800
780
760
740
720
700
680
660
640
620
600
580
552.1
0.584
0.56
0.54
0.52
0.50
0.48
0.46
0.44
0.42
0.40
0.38
0.36
0.34
0.32
0.30
0.28
0.267

FIG. 4

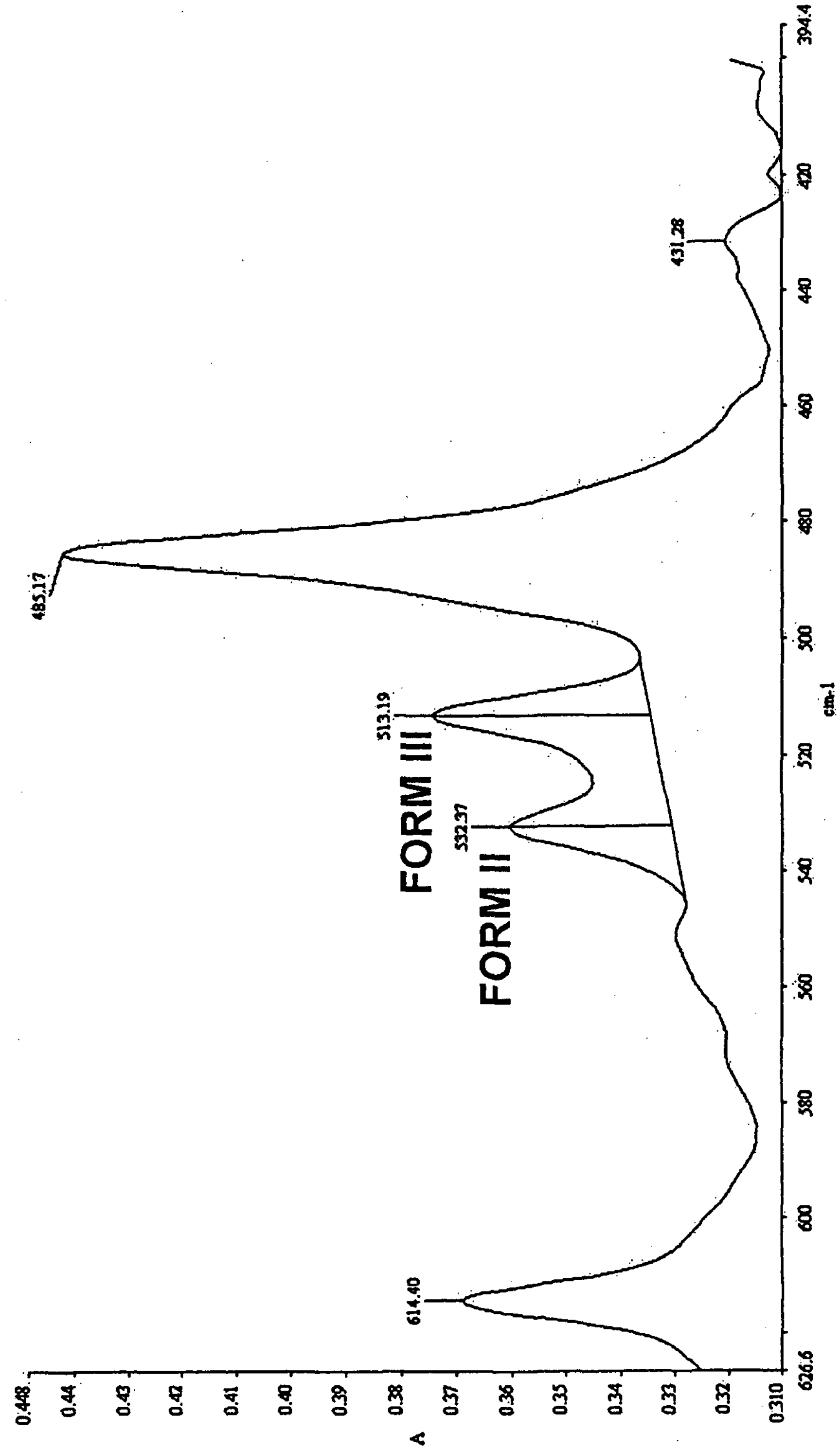

485.17
513.19
532.37
614.40
431.28
FORM III
FORM II
A
cm-1
0.448
0.44
0.43
0.42
0.41
0.40
0.39
0.38
0.37
0.36
0.35
0.34
0.33
0.32
0.310
626.6
600
580
560
540
520
500
480
460
440
420
394.4

FIG. 5

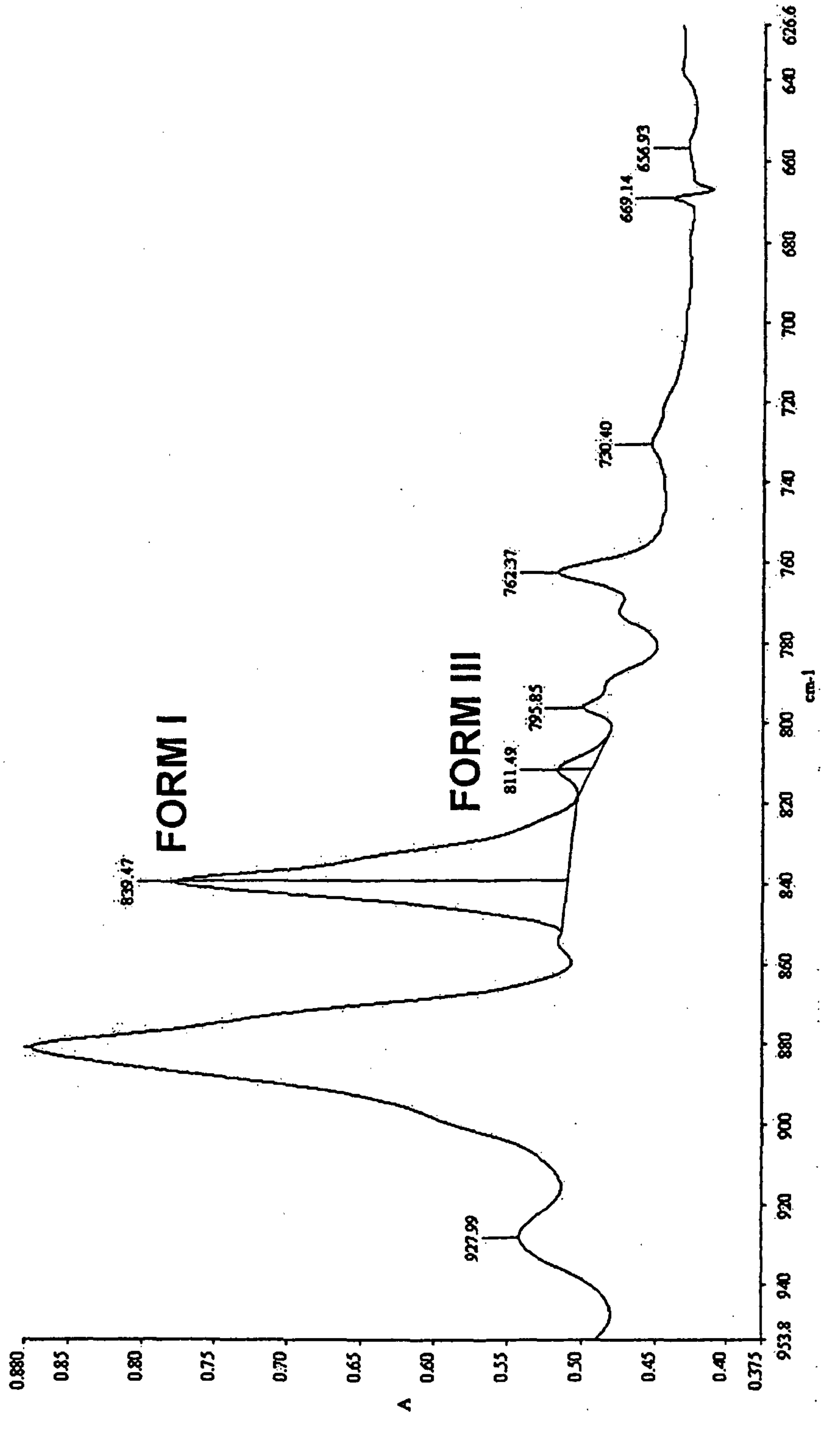
FORM I
FORM III
927.99
839.47
811.49
795.85
762.37
730.40
669.14
656.93
A
cm-1
0.880
0.85
0.80
0.75
0.70
0.65
0.60
0.55
0.50
0.45
0.40
0.375
953.8
940
920
900
880
860
840
820
800
780
760
740
720
700
680
660
640
626.6

FIG. 6

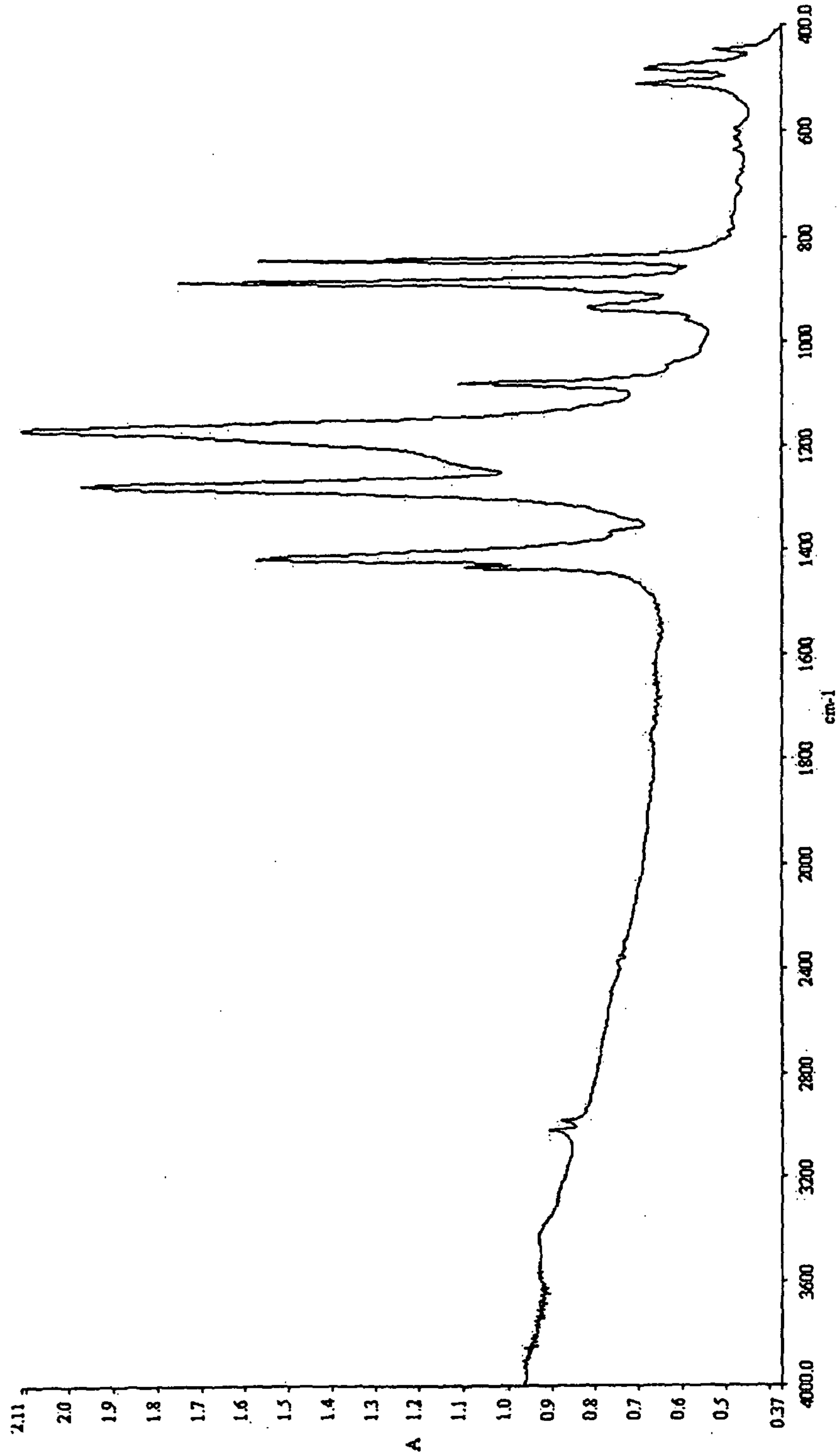
A
2.11
2.0
1.9
1.8
1.7
1.6
1.5
1.4
1.3
1.2
1.1
1.0
0.9
0.8
0.7
0.6
0.5
0.37
4000.0
3600
3200
2800
2400
2000
1800
1600
1400
1200
1000
800
600
400.0
cm-1

FIG. 7

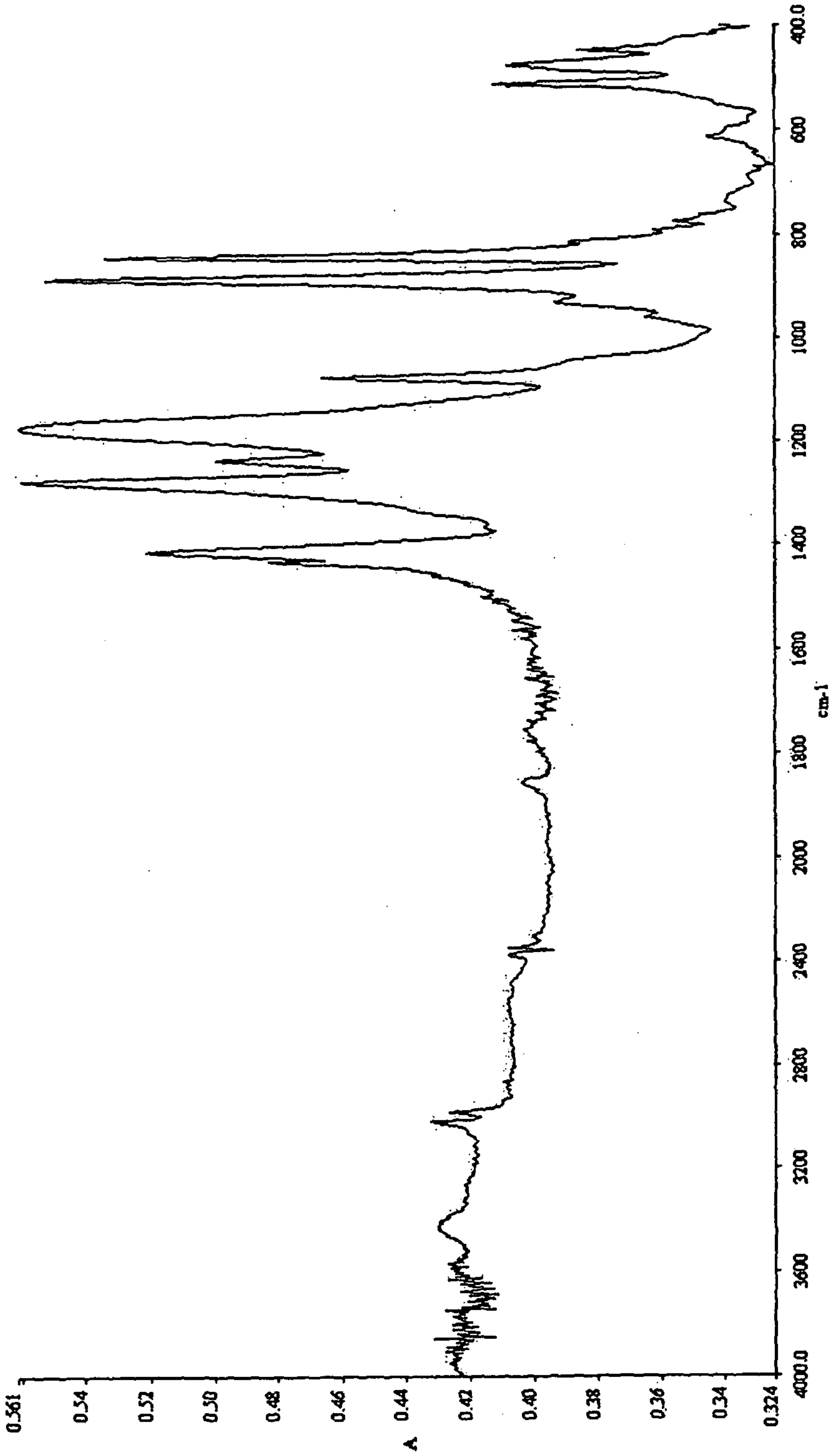
A
0.561
0.54
0.52
0.50
0.48
0.46
0.44
0.42
0.40
0.38
0.36
0.34
0.324
4000.0
3600
3200
2800
2400
2000
1800
1600
1400
1200
1000
800
600
400.0
cm-1

FIG. 8

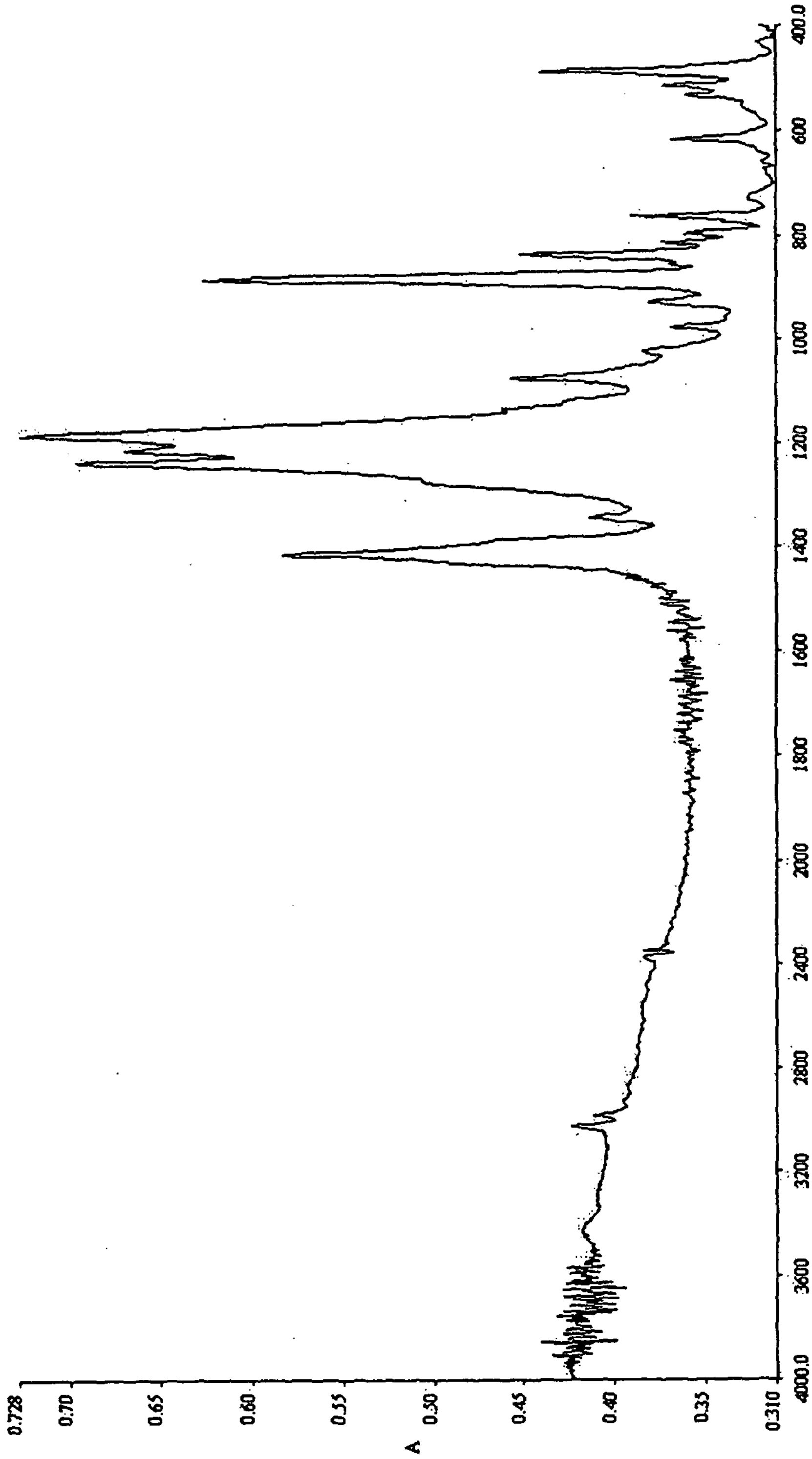
0.728
0.70
0.65
0.60
0.55
0.50
0.45
0.40
0.35
0.310
A
4000.0
3600
3200
2800
2400
2000
1800
1600
1400
1200
1000
800
600
400.0
cm-1

FIG. 9

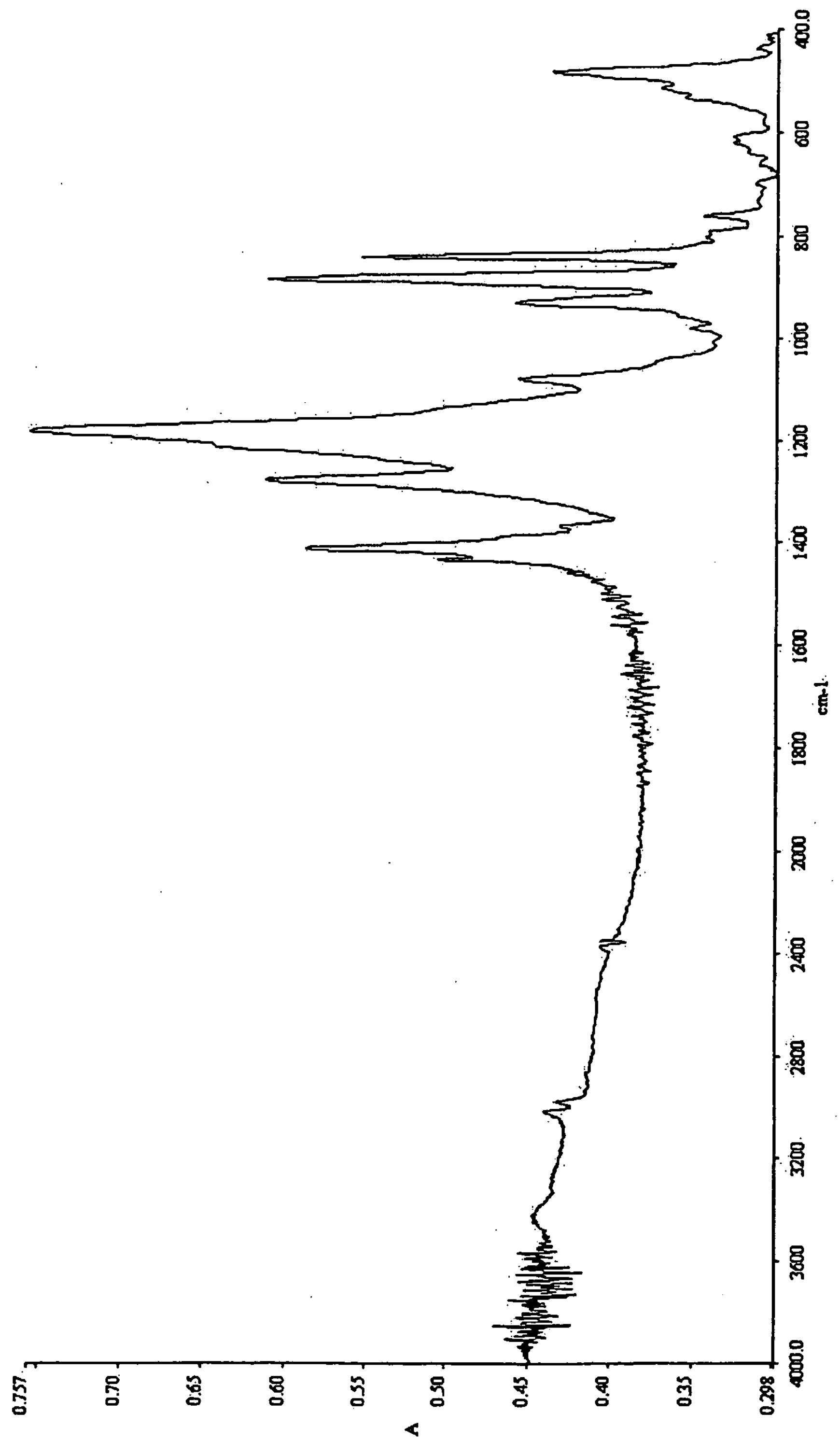
0.757
0.70
0.65
0.60
0.55
0.50
0.45
0.40
0.35
0.298
A
4000.0
3600
3200
2800
2400
2000
1800
1600
1400
1200
1000
800
600
400.0
cm-1

FIG. 10

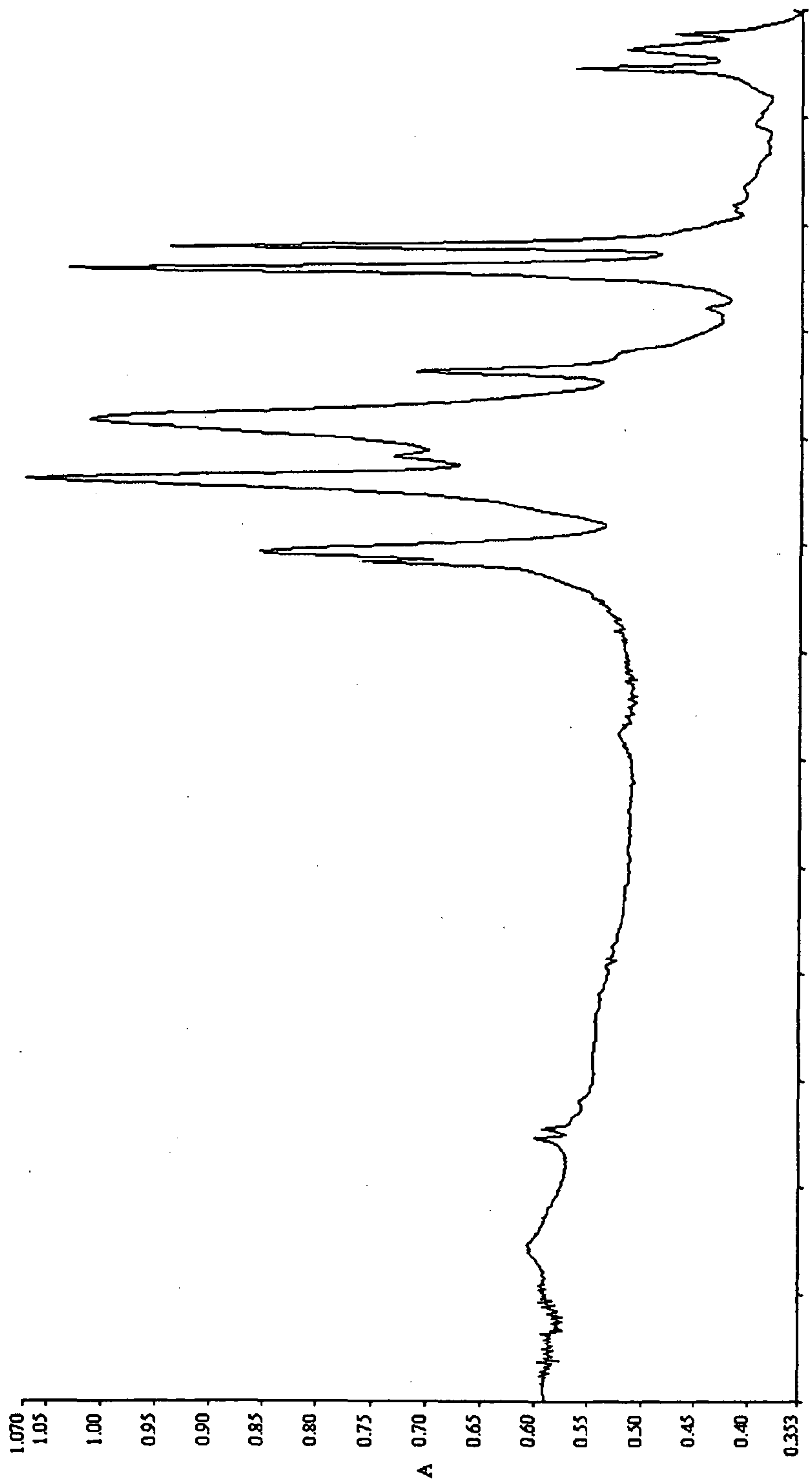
A
1.070
1.05
1.00
0.95
0.90
0.85
0.80
0.75
0.70
0.65
0.60
0.55
0.50
0.45
0.40
0.353

FIG. 11

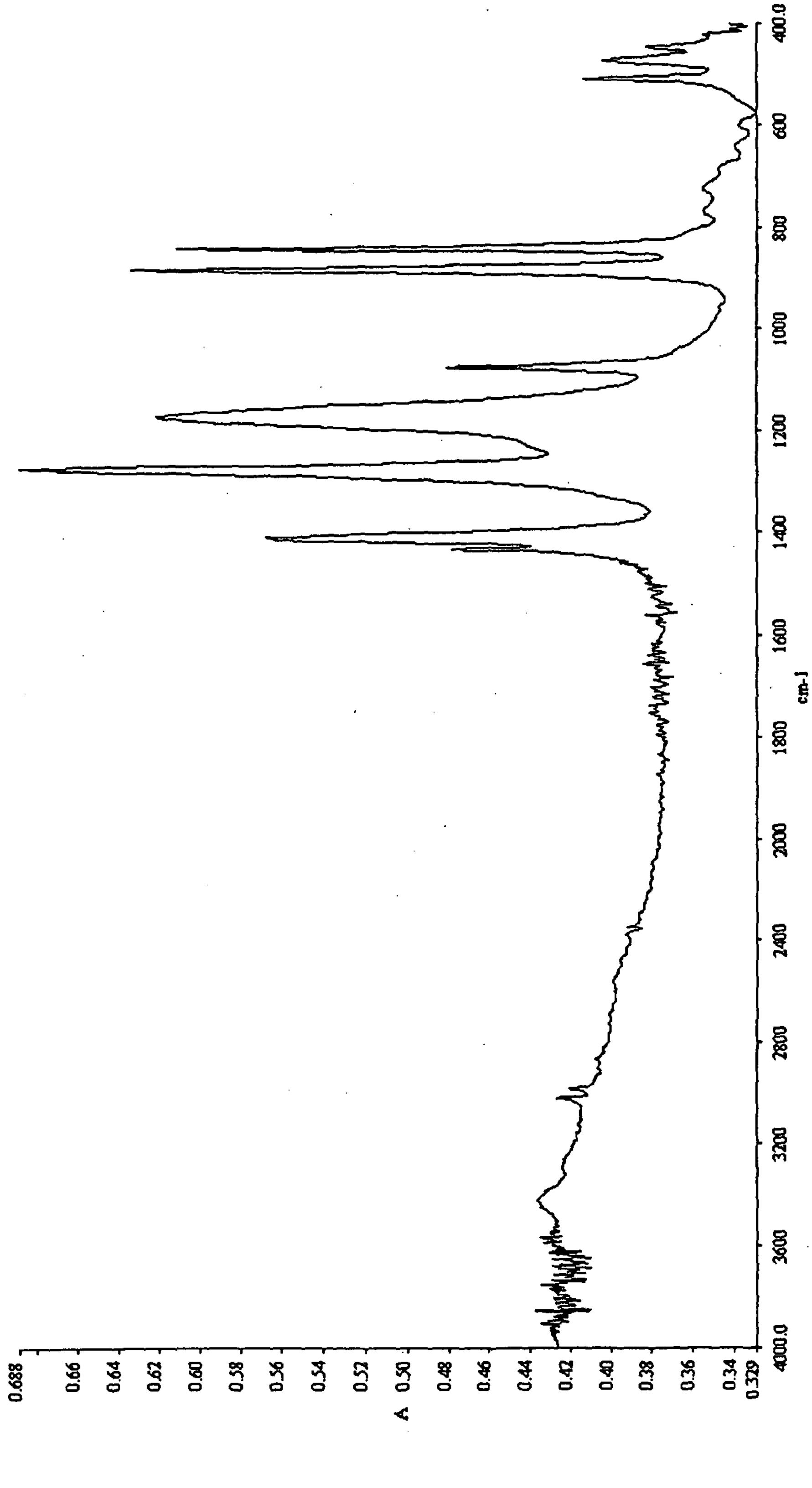

FIG. 12

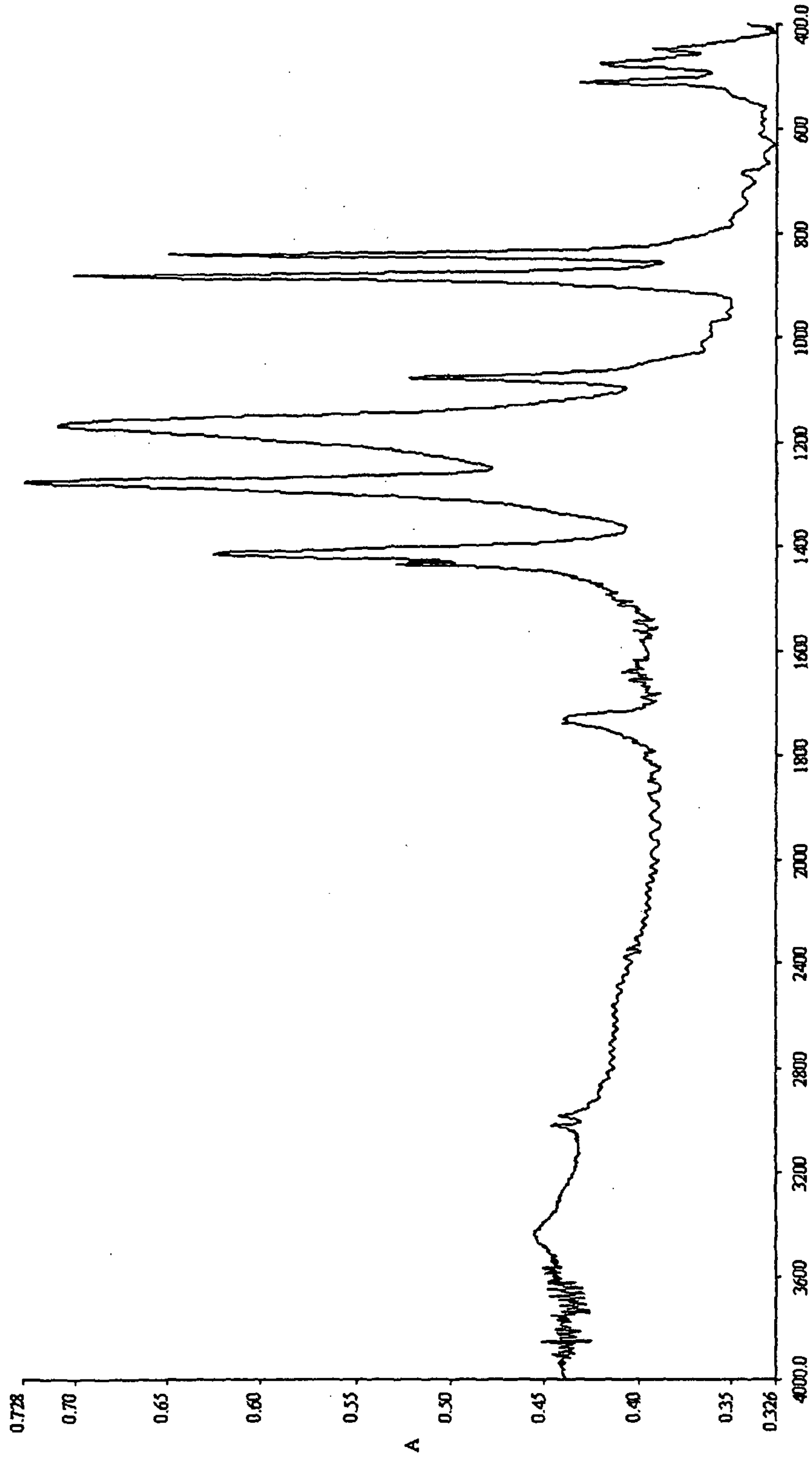
0.728
0.70
0.65
0.60
0.55
0.50
0.45
0.40
0.35
0.326
A
4000.0
3600
3200
2800
2400
2000
1800
1600
1400
1200
1000
800
600
400.0
cm-1

FIG. 13

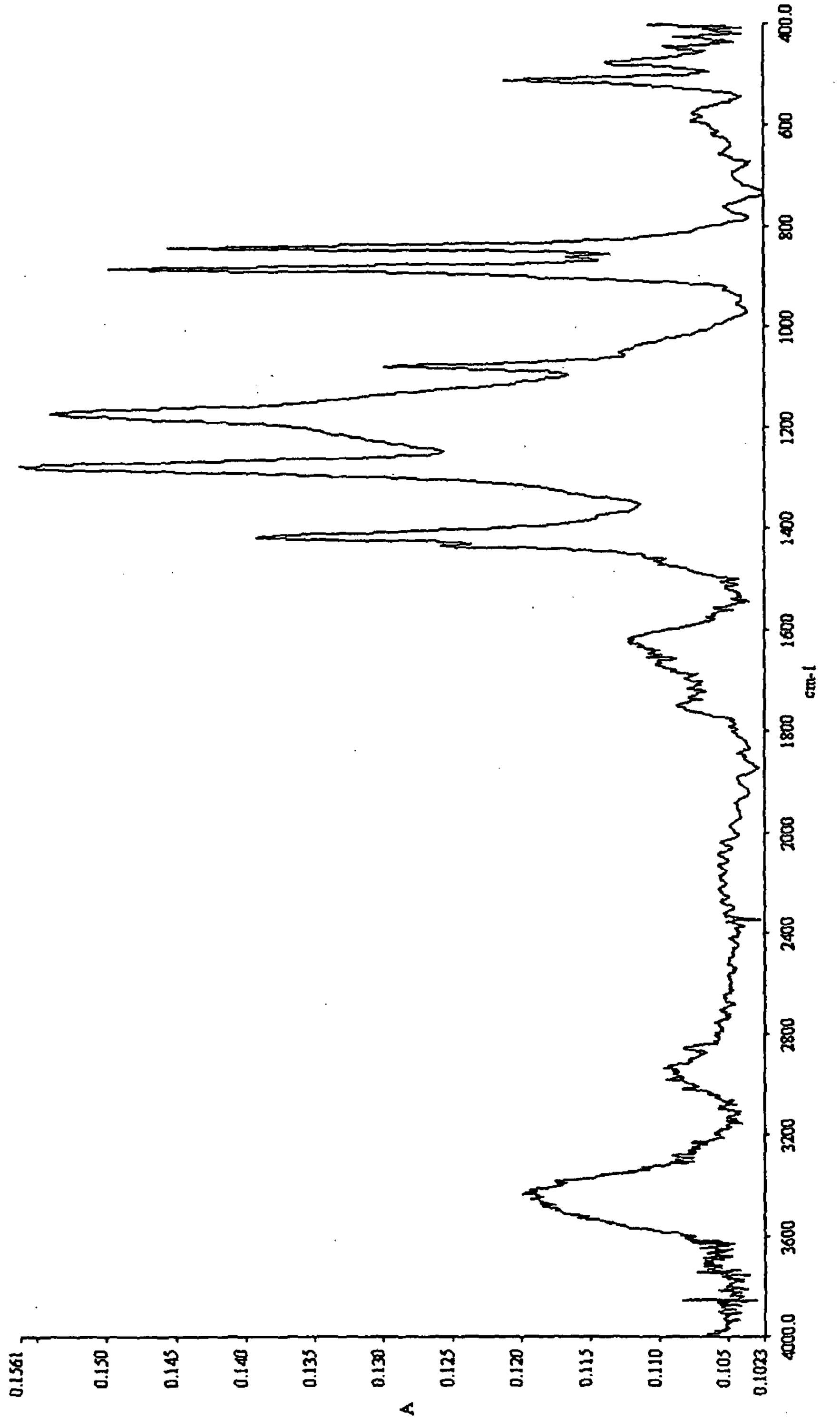

A
0.1561
0.150
0.145
0.140
0.135
0.130
0.125
0.120
0.115
0.110
0.105
0.1023
4000.0
3600
3200
2800
2400
2000
1800
1600
1400
1200
1000
800
600
400.0
cm-1

**INTERNATIONAL SEARCH REPORT**

International application No.
PCT/JP2005/004102

A. CLASSIFICATION OF SUBJECT MATTER
Int.Cl[7] B05D7/24, B32B27/30, C08F8/00, 14/22

According to International Patent Classification (IPC) or to both national classification and IPC

B. FIELDS SEARCHED

Minimum documentation searched (classification system followed by classification symbols)
Int.Cl[7] B05D7/24, B32B27/30, C08F8/00, 14/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
WPIL

C. DOCUMENTS CONSIDERED TO BE RELEVANT

| Category* | Citation of document, with indication, where appropriate, of the relevant passages | Relevant to claim No. |
|---|---|---|
| X<br>A | JP 2004-76108 A (Kansai TLO Kabushiki Kaisha),<br>11 March, 2004 (11.03.04),<br>Claims; Par. Nos. [0007], [0015]<br>(Family: none) | 1-4,8-10,13<br>5-7,11,12,<br>14,15 |
| A | JP 7-216635 A (Kureha Chemical Industry Co., Ltd.),<br>15 August, 1995 (15.08.95),<br>Full text<br>& US 5658663 A1 | 1-15 |
| A | JP 11-86844 A (Toray Industries, Inc.),<br>30 March, 1999 (30.03.99),<br>Par. No. [0056]<br>(Family: none) | 1-15 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 May, 2005 (18.05.05) | 07 June, 2005 (07.06.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

INTERNATIONAL SEARCH REPORT

International application No.
PCT/JP2005/004102

C (Continuation). DOCUMENTS CONSIDERED TO BE RELEVANT

| Category* | Citation of document, with indication, where appropriate, of the relevant passages | Relevant to claim No. |
|---|---|---|
| A | JP 11-323052 A (Kureha Chemical Industry Co., Ltd.), 26 November, 1999 (26.11.99), Par. No. [0037] (Family: none) | 1-15 |
| A | JP 11-333924 A (Nippon Mitsubishi Oil Corp.), 07 December, 1999 (07.12.99), Par. Nos. [0002], [0036], [0045] (Family: none) | 1-15 |
| A | JP 2000-70844 A (Nisshin Steel Co., Ltd.), 07 March, 2000 (07.03.00), Par. Nos. [0005], [0007] (Family: none) | 1-15 |
| A | JP 2000-54000 A (Daikin Industries, Ltd.), 22 February, 2000 (22.02.00), Par. Nos. [0019], [0020], [0025], [0026] & EP 1123981 A1 & WO 00/9762 A1 | 14,15 |
| A | JP 3-124439 A (Asahi Glass Co., Ltd.), 28 May, 1991 (28.05.91), Page 2, lower left column, lines 3 to 4; page 2, lower right column, line 19 (Family: none) | 14,15 |

Form PCT/ISA/210 (continuation of second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *M & BE,* 2000, vol. 11 (2), 145
- *Polymer Journal,* 1998, vol. 30 (8), 659-663
- *POLYMER,* 1997, vol. 38 (7), 1677-1683
- *Macromol. Chem. Phys.,* 1998, vol. 199, 1271-1289
- **BACHMANN et al.** *Journal of Applied Physics,* 1979, vol. 50 (10
- **S. OSAKI et al.** Journal of Polymer Science: Polymer Physics. 1975, vol. 13, 1071-1083
- **MATSUSHIGE et al.** *Jpn. J. Appl. Phys.,* 2000, vol. 39, 6358
- Kagaku Binran, Kiso-hen, Rev. Maruzen, vol. 3
- CRC Handbook of Chemistry and Physics. CRC Press